# EUROPÄISCHE PATENTSCHRIFT

(11) **EP 4 031 435 B1**
(45) Veröffentlichungstag und Bekanntmachung des Hinweises auf die Patenterteilung: **02.10.2024**
(21) Anmeldenummer: 20757858.4
(22) Anmeldetag: 12.08.2020
(51) Int. Cl.: B62B 3/02, B62B 5/06

(54) **TRANSPORTWAGEN UND VERFAHREN ZUM TRANSFORMIEREN EINES TRANSPORTWAGENS**
TRANSPORT TROLLEY AND METHOD FOR TRANSFORMING A TRANSPORT TROLLEY
CHARIOT DE TRANSPORT ET PROCÉDÉ DE TRANSFORMATION D'UN CHARIOT DE TRANSPORT

(30) Priorität: 18.09.2019 DE 102019125165
(43) Veröffentlichungstag der Anmeldung: 27.07.2022
(73) Patentinhaber: Modus One GmbH, 71732 Tamm (DE)
(72) Erfinder: RAUSCHENBERGER, Joerg, 71679 Asperg (DE)
(74) Vertreter: Witte, Weller & Partner Patentanwälte mbB
(86) Internationale Anmeldenummer: PCT/EP2020/072684
(87) Internationale Veröffentlichungsnummer: WO 2021/052685

(56) Entgegenhaltungen:
- EP-A1- 2 230 149
- EP-B1- 2 230 149
- DE-A1- 102016 217 867
- JP-A- 2007 030 856
- US-A1- 2010 253 025
- US-A1- 2015 137 487
- US-B1- 10 005 481
- US-B1- 6 733 026

## Beschreibung

Die vorliegende Erfindung betrifft Transportwagen mit einer Basisbaugruppe, mit zwei an der Basisbaugruppe angeordneten, gegenüberliegenden Seitenbaugruppen, mit je mindestens einem an jeweils einer der Seitenbaugruppen angeordneten Rad und mit mindestens einer zwischen den Seitenbaugruppen angeordneten Aufnahme für jeweils eine Transportbox. Des Weiteren betrifft die vorliegende Erfindung ein Verfahren zum Überführen eines derartigen Transportwagens zwischen einem Packmodus und einem ersten Betriebsmodus. Des Weiteren betrifft die vorliegende Erfindung ein Verfahren eines derartigen Transportwagens zwischen einem ersten Betriebsmodus und einem zweiten Betriebsmodus.

Derartige Transportwagen sind aus dem Stand der Technik bereits bekannt.

Beispielsweise zeigt die Druckschrift DE 197 07 744 C1 einen zusammenlegbarer Transportwagen mit einem im wesentlichen kubischen Behälter, dessen einander gegenüberliegende erste und einander gegenüberliegende zweite Seitenwände sich im aufgeklappten Zustand zwischen dem Boden und einem Griffelemente aufweisenden und den Behälter nach oben abschließenden Rahmen erstrecken, wobei die ersten Seitenwände am Rahmen lagern und mit dem Boden gelenkig verbunden sind und die zweiten Seitenwände am Boden abstützbar sind und jeweils wenigstens ein Rad aufnehmen, das zwischen einer über die Wandfläche hinausragenden Fahrposition und einer innerhalb der Wandfläche liegenden Ruheposition bewegbar ist, wobei die jeweils am Rahmen und am Boden gelagerten ersten Seitenwände derart faltbar ausgebildet sind, dass der Rahmen und der Boden bei horizontal eingeschwenkten zweiten Seitenwänden im wesentlichen aufeinanderlegbar sind, und wobei am Rahmen eine Stange zum Handhaben angeordnet ist, die zwischen einer über den Behälter hinausragenden Handhabenposition und einer sich an den Behälter anschmiegenden oder innerhalb des Behälters liegenden Ablageposition bewegbar ist.

Des Weiteren zeigt die Druckschrift WO 2018/127409 A1 einen Handwagen, insbesondere zum Transport von Gütern, mit ersten Vertikalstreben an einem ersten Wagenende und zweiten Vertikalstreben an einem zweiten Wagenende, wobei die ersten Vertikalstreben durch Diagonalstreben mit den zweiten Vertikalstreben verbunden sind, wobei obere Enden der Diagonalstreben drehbar mit den Vertikalstreben verbunden sind, und wobei untere Enden der Diagonalstreben drehbar und vertikal verschiebbar mit den Vertikalstreben verbunden sind, wobei auch an der oberen Hälfte der ersten Vertikalstreben mindestens ein Behälter befestigt ist, und wobei mindestens ein weiterer Behälter entlang der zweiten Vertikalstreben über eine Führung vertikal verschiebbar und verbunden ist, über Drehgelenke mit denjenigen Diagonalstreben verbunden sind, deren untere Enden mit den zweiten Vertikalstreben verbunden sind.

Die Druckschrift EP 2 230 149 A1 betrifft einen Wagen mit einer platten-/querträgerförmigen Stützbasis zum Tragen einer Last. Eine Verbindungsstruktur umfasst zwei hintere Pfosten mit oberen und unteren Enden, die drehbar auf den hinteren Achsen in einer Höhe in Bezug auf einen hinteren Teil der Füße und einen hinteren Teil der Basis montiert sind. Zwei vordere Pfosten haben obere und untere Enden, die drehbar auf vorderen Achsen auf einer anderen Ebene in Bezug auf die hinteren Teile der Füße und der Basis montiert sind. Die hinteren Achsen jedes hinteren Pfostens bilden mit den vorderen Achsen jedes vorderen Pfostens eine Spitze eines Vierecks mit variabler Geometrie. Die letztgenannte Ebene ist gegenüber der erstgenannten Ebene nach vorne verschoben.

Die Druckschrift JP 2007 030856 A betrifft einen zusammenklappbaren Einkaufswagen, der durch Dehnen einer dehnbaren/zusammenziehbaren Strebe in den nutzbaren Zustand des Einkaufswagens versetzt und durch Zusammenklappen kompakt gemacht wird.

Die Druckschrift US 2010/253025 A1 betrifft eine Sackkarre mit einer vorderen Ladefläche, einer hinteren Ladefläche und einem Paar unterer Radbaugruppen und einem Paar oberer Radbaugruppen. Die Lastplattformen und die Radbaugruppen lassen sich zusammenklappen und in den Rahmen des Handwagens einschieben, so dass sich eine Lagerposition ergibt, in der die Dicke in etwa mit den Seitenschienen des Handwagens übereinstimmt. Das Anheben und Absenken der vorderen Ladefläche bewirkt, dass sich die unteren Radbaugruppen aus der Betriebsposition in die Lagerposition hin und her bewegen. Ebenso bewirkt das Anheben und Absenken der hinteren Ladefläche, dass sich die oberen Radbaugruppen aus der Betriebsposition in die Lagerposition vor- und zurückbewegen.

Die Druckschrift US 10005481 B1 betrifft eine Vorrichtung, die sich auf Geräte bezieht, die zum Transport von Ausrüstungen, Werkzeugen, Waren und anderen Gegenständen von einem Ort zum anderen verwendet werden können. Die Vorrichtung kann Geräte wie Test- oder Analysegeräte transportieren. Die Vorrichtung verfügt über eine Tasche und ein Fach zur sicheren Aufbewahrung eines Laptops während des Transports. An der Tasche ist eine klappbare erste Ablage für Notizen oder eine Arbeitsfläche befestigt. Es gibt eine klappbare zweite Ablage mit ausziehbaren Halterungen zur Befestigung der Ausrüstung. Das Gerät hat Räder, die leicht über unebene Oberflächen rollen. Es gibt einklappbare Beine, die dazu dienen, das Gerät auf unebenen Flächen stabil zu halten. Ein klappbarer Sockel dient zum Transport von Geräten, Kisten und anderen großen, sperrigen oder schweren Gegenständen. Das Gerät ist in vertikaler Richtung verstellbar, so dass der Benutzer die Ablageflächen auf eine für ihn angenehme Höhe einstellen kann.

Die Druckschrift DE 10 2016 217867 A1 betrifft eine Transportvorrichtung für und Verfahren zum Transport von Gepäck, für Gepäck, wobei die Transportvorrichtung ein Grundgestell und eine Gepäckaufnahmeeinrichtung umfasst, wobei die Gepäckaufnahmeeinrichtung mindestens eine Lager-Baugruppe, eine Aufnahme-Baugruppe, eine Standbein-Baugruppe und mindestens eine Verbindungseinrichtung umfasst, wobei die Aufnahme-Baugruppe zumindest drehbar an der mindestens einen Lager-Baugruppe gelagert ist, wobei die Standbein-Baugruppe zumindest drehbar an der mindestens einen Lager-Baugruppe gelagert ist, wobei die Aufnahme-Baugruppe und die Standbein-Baugruppe über die mindestens eine Verbindungseinrichtung mechanisch verbunden sind, wobei die Aufnahme-Baugruppe und die Standbein-Baugruppe zwischen einer Transportstellung und einer Tischstellung verschwenkbar sind.

Die Druckschrift US 6733026 B1 betrifft einen faltbaren Wagen, der einen vorderen Abschnitt, einen Hauptabschnitt und einen hinteren Abschnitt sowie vordere und hintere Endschienen und linke und rechte Seitenschienen aufweist. Die vorderen und hinteren Abschnitte der linken und rechten Seitenschienen lassen sich in eine koplanare Position mit dem Hauptabschnitt der jeweiligen Seitenschiene klappen, während die vorderen und hinteren Endschienen in eine Position koplanar mit dem vorderen Abschnitt bzw. dem hinteren Abschnitt herunterklappen. Der vordere und der hintere Abschnitt können dann in eine Position über dem Hauptabschnitt gedreht werden. An der Unterseite des vorderen und hinteren Abschnitts ist jeweils eine Doppelradbaugruppe angebracht, wobei jede Doppelradbaugruppe ein Paar Räder aufweist, die in eine Position parallel zu ihrem jeweiligen vorderen oder hinteren Abschnitt geklappt werden können. Die vordere Doppelradbaugruppe ist mit einem Drehzapfen am vorderen Teil des Faltwagens befestigt, während die hintere Doppelradbaugruppe direkt am hinteren Teil befestigt ist. Schließlich ist ein klappbarer Griff vorgesehen, der an der vorderen Doppelradbaugruppe befestigt ist. Der Griff erstreckt sich im eingeklappten Zustand vom Mittelpunkt der vorderen Doppelradbaugruppe über die eingeklappten Räder bis zum hinteren Teil des zusammengeklappten Wagens und wird am hinteren Teil des zusammengeklappten Wagens verriegelt.

Die Druckschrift US 2015/137487 A1 betrifft einen faltbaren Wagen mit einem Rahmenmechanismus, einem hinteren Stützmechanismus mit Rädern und zwei voneinander beabstandeten Griffeinheiten. Der Rahmenmechanismus kann sich in einem zusammengeklappten Zustand oder in einem ausgeklappten Zustand befinden. Der hintere Stützmechanismus mit Rädern ist schwenkbar an einer Rückseite eines Hauptrahmenkörpers des Rahmenmechanismus angebracht und zwischen einer Stützposition und einer vollständig zusammengeklappten Position in Bezug auf den Hauptrahmenkörper beweglich. Die Griffeinheiten sind drehbar mit dem Hauptrahmenkörper verbunden, um den Rahmenmechanismus in den zusammengeklappten Zustand oder den ausgeklappten Zustand zu bringen.

Gegenüber dem bekannten Stand der Technik ist es eine Aufgabe der vorliegenden Erfindung, einen Transportwagen vorzusehen, der einfacher zu handhaben ist. Insbesondere ist es eine Aufgabe der vorliegenden Erfindung, einen Transportwagen vorzusehen, der zwischen verschiedenen Betriebsmodi möglichst einfach transformierbar ist.

Gemäß einem ersten Aspekt nach Anspruch 1 der Erfindung wird ein Transportwagen mit einer Basisbaugruppe, mit zwei an der Basisbaugruppe angeordneten, einander gegenüberliegenden Seitenbaugruppen, mit je mindestens einem an jeweils einer der Seitenbaugruppen angeordneten Rad und mit einer zwischen den Seitenbaugruppen angeordneten ersten Aufnahme für eine Transportbox vorgeschlagen. Der Transportwagen weist eine Aktuierungsvorrichtung auf, die dazu ausgebildet ist, den Transportwagen zwischen einem ersten Betriebsmodus und einem zweiten Betriebsmodus zu überführen, wobei die Aktuierungsvorrichtung ein Aktuierungselement aufweist, wobei die Aktuierungsvorrichtung dazu ausgebildet ist, bei einer ersten Aktuierung, bei der das Aktuierungselement in einer ersten Bewegungsrichtung bewegt wird, den Transportwagen von dem ersten Betriebsmodus in den zweiten Betriebsmodus zu überführen und bei einer zweiten Aktuierung, bei der das Aktuierungselement ebenfalls in der ersten Bewegungsrichtung bewegt wird, den Transportwagen von dem zweiten Betriebsmodus in den ersten Betriebsmodus zu überführen.

Gemäß einem weiteren Aspekt nach Anspruch 14 der Erfindung wird ein Verfahren zum Überführen eines Transportwagens zwischen einem ersten Betriebsmodus und einem zweiten Betriebsmodus, wobei der Transportwagen eine Basisbaugruppe, zwei an der Basisbaugruppe angeordnete, einander gegenüberliegende Seitenbaugruppen, je mindestens ein an jeweils einer der Seitenbaugruppen angeordnetes Rad und eine zwischen den Seitenbaugruppen angeordnete erste Aufnahme für eine Transportbox aufweist, wobei das Verfahren die folgenden Schritte aufweist:
- Überführen des Transportwagens von dem ersten Betriebsmodus in den zweiten Betriebsmodus mittels einer Aktuierungsvorrichtung des Transportwagens; und
- Überführen des Transportwagens von dem zweiten Betriebsmodus in den ersten Betriebsmodus mittels der Aktuierungsvorrichtung,
wobei die Aktuierungsvorrichtung ein Aktuierungselement aufweist, wobei die Aktuierungsvorrichtung bei einer ersten Aktuierung, bei der das Aktuierungselement in einer ersten Bewegungsrichtung bewegt wird, den Transportwagen von dem ersten Betriebsmodus in den zweiten Betriebsmodus überführt, und wobei die Aktuierungsvorrichtung bei einer zweiten Aktuierung, bei der das Aktuierungselement ebenfalls in der ersten Bewegungsrichtung bewegt wird, den Transportwagen von dem zweiten Betriebsmodus in den erste Betriebsmodus überführt.

Der erfindungsgemäße Transportwagen eignet sich aufgrund seiner verschiedenen Betriebsmodi zum Transportieren von Gütern, Waren, Gegenständen, Transportboxen oder Kisten. Beispielsweise eignet sich der Transportwagen besonders als Einkaufswagen und als Transportwagen in Lagern oder als Stützwagen.

In dem Packmodus ist der Transportwagen kompakt, insbesondere platzsparend, zusammengeklappt und beansprucht deswegen wenig Platz. Der Packmodus eignet sich daher besonders zum Transport bzw. zur Aufbewahrung des Transportwagens, beispielsweise im Kofferraum eines Autos. Insbesondere sind in dem Packmodus die beiden Seitenbaugruppen zugeklappt. In anderen Worten sind die beiden Seitenbaugruppen, die auf einander gegenüberliegenden Seiten der Basisbaugruppe angeordnete sind, in den Packmodus zueinander geklappt, so dass die Seitenbaugruppen fluchtend miteinander angeordnet sind und an der Basisbaugruppe anliegen. Dabei erstrecken sich die Seitenbaugruppen entlang der Basisbaugruppe aufeinander zu. Des Weiteren ist vorzugsweise jedes Rad in die entsprechende Seitenbaugruppe eingeklappt. Jede Seitenbaugruppe kann dazu eine entsprechende Öffnung aufweisen, durch die das entsprechende Rad eingeklappt bzw. ausgeklappt werden kann. In der eingeklappten Stellung ist jedes Rad vorzugsweise vollständig in der entsprechenden Seitenbaugruppe angeordnet. In der ausgeklappten Stellung ist jedes Rad vorzugsweise vollständig oder zumindest teilweise aus der entsprechenden Seitenbaugruppe ausgeklappt.

In dem ersten und in dem zweiten Betriebsmodus sind die Seitenbaugruppen insbesondere aufgeklappt. In anderen Worten sind die beiden Seitenbaugruppen in dem ersten und in dem zweiten Betriebsmodus parallel zueinander angeordnet. Dabei erstecken sich die Seitenbaugruppen, vorzugsweise senkrecht zu der Basisbaugruppe, weg von der Basisbaugruppe. Des Weiteren ist vorzugsweise jedes Rad aus der entsprechenden Seitenbaugruppe ausgeklappt, sodass der Transportwagen über die Räder auf dem Boden gezogen oder geschoben werden kann. Die Räder sind somit in dem ersten und dem zweiten Betriebsmodus auf dem Boden anordenbar bzw. zu dem Boden hin orientiert. Die Räder sind somit in dem ersten und zweiten Betriebsmodus auf einer Unterseite des Transportwagens angeordnet. Die der Unterseite gegenüberliegende Seite des Transportwagens wird somit als Oberseite des Transportwagens bezeichnet. Die Begriffe "hoch" und "tief" bzw. "oben" und "unten" bzw. "oberhalb" und "unterhalb" bzw. "vertikal" und "horizontal" sind daher in Relation zu den Rädern bzw. zu der Seite des Transportwagens, auf der die Rädern im ersten und zweiten Betriebsmodus angeordnet sind, zu verstehen.

In dem ersten Betriebsmodus, der auch als Betriebsmodus oder Nachziehmodus bezeichnet werden kann, kann der Transportwagen einfach gezogen werden. Der erste Betriebsmodus eignet sich somit besonders zum Ziehen des Transportwagens. Insbesondere ist in dem ersten Betriebsmodus die erste Aufnahme für die Transportbox in einer Transportposition angeordnet. Die Transportposition kann auch als tiefe Position bezeichnet werden, in der die erste Aufnahme nahe an den ausgeklappten Rädern angeordnet ist. Eine in der Aufnahme angeordnete Transportbox ist somit tief angeordnet, so dass das Gesamtgewicht der Transportbox und deren Inhalt näher an einer Drehachse der Räder angeordnet sind. Dadurch lässt sich die Transportbox leichter transportieren. Die erste Aufnahme kann auch als untere Aufnahme bezeichnet werden. Der Transportwagen kann auch eine zweite Aufnahme für eine weitere Transportbox aufweisen, die zwischen den Seitenbaugruppen angeordnet ist. Im ersten Betriebsmodus ist die zweite Aufnahme über der ersten Aufnahme angeordnet. Die zweite Aufnahme kann auch als obere Aufnahme bezeichnet werden.

In dem zweiten Betriebsmodus, der auch als weiterer Betriebsmodus oder Schiebemodus bezeichnet werden kann, kann der Transportwagen einfach geschoben bzw. beladen werden. Der zweite Betriebsmodus eignet sich somit besonders zum Schieben bzw. Beladen des Transportwagens. Insbesondere ist in dem zweiten Betriebsmodus die erste Aufnahme für die Transportbox in einer Ladeposition angeordnet. Die Ladeposition kann auch als hohe Position bezeichnet werden, in der die erste Aufnahme weiter entfernt von den Rädern angeordnet ist als in der tiefen Position. Eine in der ersten Aufnahme angeordnete Transportbox ist somit ebenfalls höher angeordnet. Die erste Aufnahme kann auf derselben Höhe wie die zweite Aufnahme angeordnet sein. Die Ladeposition eignet sich somit besonders zum Beladen der Transportbox, da ein Benutzer sich weniger oder gar nicht bücken muss, um die Transportbox zu beladen. Die gilt entsprechend auch für eine weitere Transportbox, die auf der zweiten Aufnahme angeordnet sein kann.

Zum Überführen des Transportwagens aus dem Packmodus in den ersten Betriebsmodus werden die beiden Seitenbaugruppe aufgeklappt. In anderen Worten werden die Seitenbaugruppen aus einer zugeklappten Stellung in eine aufgeklappte Stellung überführt. Da die Bewegung der Seitenbaugruppe zwischen der zugeklappten und der aufgeklappten Stellung mit der Bewegung der Räder zwischen der eingeklappten und der ausgeklappten Stellung gekoppelt ist, werden die Räder beim Aufklappen der Seitenbaugruppe automatisch mit ausgeklappten. In anderen Worten werden die Räder ebenfalls aus der eingeklappten Stellung in die ausgeklappte Stellung überführt.

Entsprechend werden zum Überführen des Transportwagens aus dem ersten Betriebsmodus in den Packmodus die Seitenbaugruppen zugeklappt. In anderen Worten werden die Seitenbaugruppen aus einer aufgeklappten Stellung in eine zugeklappte Stellung überführt. Dabei werden die Räder automatisch mit eingeklappt. In anderen Worten werden die Räder dabei aus der ausgeklappten Stellung in die eingeklappte Stellung überführt.

Zum Überführen des Transportwagens zwischen dem ersten Betriebsmodus und dem zweiten Betriebsmodus kann die Aktuierungsvorrichtung mechanische, hydraulische, pneumatische oder elektrische Mittel aufweise, mittels denen der Transportwagen zwischen den verschiedenen Betriebsmodi überführt werden kann. Beispielsweise kann die Aktuierungsvorrichtung ein Aktuierungselement aufweisen, dass zum Aktuieren der Überführung aus dem ersten Betriebsmodus in den zweiten Betriebsmodus bzw. aus dem zweiten Betriebsmodus in den ersten Betriebsmodus bewegt wird. Auf diese Weise kann der Transportwagen einfach zwischen dem ersten und zweiten Betriebsmodus transformiert werden.

Die Aspekte nach Ansprüchen 1 und 14 der vorliegenden Erfindung stellen jeweils einen Transportwagen bereit, der leicht zu handhaben ist. Insbesondere wird auf einfache Art und Weise ermöglicht, dass der Transportwagen zwischen verschiedenen Betriebsmodi transformierbar ist, beispielsweise zwischen dem Packmodus und dem ersten Betriebsmodus sowie zwischen dem ersten Betriebsmodus und dem zweiten Betriebsmodus.

Des Weiteren kann der Transportwagen auch als Kinderwagen oder Rollator ausgebildet sein. Insbesondere können die erste und/oder die zweite Aufnahme auch zur Aufnahme einer Babyschale, insbesondere eines MaxiCosi, oder eines Kindersitzes ausgebildet sein. Insbesondere können die Transportboxen auch als Babyschale oder Kindersitz ausgebildet sein.

Des Weiteren kann der Transportwagen auch als Fahrradanhänger verwendet werden. Dazu kann der Transportwagen beispielsweise eine Kupplung aufweisen. Die Kupplung ist vorzugsweise auf einer den Seitenbaugruppen abgewandten Seite der Basisbaugruppe oder am Griff angeordnet.

Des Weiteren kann der Transportwagen auch als Rucksack verwendet werden. Dazu kann der Transportwagen beispielsweise zwei Gurte aufweisen. Die Gurte sind vorzugsweise auf einer den Seitenbaugruppen abgewandten Seite der Basisbaugruppe angeordnet.

Zum Überführen des Transportwagens aus dem ersten Betriebsmodus in den zweiten Betriebsmodus wird das Aktuierungselement in der ersten Bewegungsrichtung bewegt. Das Aktuierungselement ist vorzugsweise mechanisch, beispielsweise als ein drehbarer Kopplungskörper, als ein Hebel, als eine Drehscheibe, oder ähnliches, ausgebildet. Alternativ kann auch eine elektrische, hydraulische oder pneumatische Antriebseinrichtung als Aktuierungselement vorgesehen sein. Zum Überführen des Transportwagens aus dem zweiten Betriebsmodus in den ersten Betriebsmodus wird das Aktuierungselement ebenfalls in der ersten Bewegungsrichtung bewegt. Das Aktuierungselement kann beispielsweise eine Pumpbewegung, insbesondere eine alternierende Bewegung in der ersten Bewegungsrichtung und entgegen der ersten Bewegungsrichtung, ausführen, wobei nur die Bewegung in der ersten Bewegungsrichtung zum Überführen des Transportwagens beiträgt. Dies ist besonders vorteilhaft bei einer manuellen Aktuierung. Im Falle einer Aktuierung mittels einer Antriebseinrichtung, muss die Antriebseinrichtung lediglich dazu geeignet sein, eine Bewegung in einer Bewegungsrichtung, insbesondere der ersten Bewegungsrichtung auszuführen, was die Anforderungen an eine Antriebseinrichtung erheblich vereinfacht.

Die eingangs gestellte Aufgabe wird somit vollumfänglich gelöst.

In einer weiteren bevorzugten Ausführungsform der Erfindung ist die erste Aufnahme in dem ersten Betriebsmodus in einer Transportposition und in dem zweiten Betriebsmodus in einer Ladeposition angeordnet ist, wobei die Aktuierungsvorrichtung dazu ausgebildet ist, die erste Aufnahme zwischen der Transportposition und der Ladeposition zu bewegen.

Wie zuvor beschrieben, eignet sich die Transportposition besonders zum Transportieren mindestens einer Transportbox sowie zum Ziehen des Transportwagens, wohingegen sich die Ladeposition besonders zum Beladen mindestens einer Transportbox sowie zum Schieben des Transportwagens eignet.

In einer weiteren bevorzugten Ausführungsform der Erfindung weist die erste Aufnahme ein Aufnahmeelement, insbesondere eine Stellfläche für die Transportbox, auf, wobei das Aufnahmeelement über zwei Arme mit der Basisbaugruppe gekoppelt ist, wobei die Arme an der Basisbaugruppe um eine erste Schwenkachse schwenkbar gelagert sind, so dass die erste Aufnahme zwischen der Transportposition und der Ladeposition schwenkbar ist.

Vorzugsweise ist jeder Arm dabei um die erste Schwenkachse schwenkbar. Dabei ist die Lagerung der ersten Schwenkachse an einem ersten Ende des jeweiligen Arms angeordnet. Insbesondere ist eine Drehbewegung jedes ersten Arms um die erste Schwenkachse mit der Aktuierungsvorrichtung gekoppelt. In anderen Worten ist die Aktuierungsvorrichtung dazu ausgebildet, bei der ersten Aktuierung sowie bei der der zweiten Aktuierung jeden ersten Arm um die erste Schwenkachse zu schwenken, um die erste Aufnahme zwischen der Transportposition und der Ladeposition zu überführen. Dadurch kann der Transportwagen auf einfache Art und Weise zwischen dem ersten Betriebsmodus, der besonders zum Ziehen des Transportwagens bzw. zum Transportieren einer Transportbox geeignet ist, und dem zweiten Betriebsmodus, der besonders zum Schieben des Transportwagens bzw. zum Beladen einer Transportbox geeignet ist, überführt werden.

in einer weiteren bevorzugten Ausführungsform der Erfindung ist das Aufnahmeelement an den Armen um eine zweite Schwenkachse schwenkbar gelagert, wobei eine Schwenkbewegung des Aufnahmeelements um die zweite Schwenkachse mit der Schwenkbewegung der Arme um die erste Schwenkachse gekoppelt ist, so dass das Aufnahmeelement in der Ladeposition und der Transportposition horizontal ausgerichtet ist.

Mittels der gekoppelten Drehbewegungen um die erste und zweite Schwenkachse wird gewährleistet, dass das Aufnahmeelement in allen Betriebsmodi horizontal ausgerichtet ist, um eine sichere Stellfläche für Transportboxen oder Kisten bereitzustellen.

In einer weiteren bevorzugten Ausführungsform der Erfindung weist an jeder Seitenbaugruppe das mindestens eine Rad ein Vorderrad und ein Hinterrad auf, wobei jedes Vorderrad relativ zu dem entsprechenden Hinterrad zwischen einer eingefahrenen Stellung und einer ausgefahrenen Stellung verlagerbar ist, wobei ein Abstand zwischen dem Vorderrad und dem Hinterrad in der ausgefahrenen Stellung größer ist als in der eingefahrenen Stellung, wobei eine Schwenkbewegung der ersten Aufnahme zwischen der Transportposition und der Ladeposition mit einer Verlagerung jedes Vorderrads zwischen der eingefahrenen Stellung und der ausgefahrenen Stellung gekoppelt ist, so dass das Vorderrad in dem ersten Betriebsmodus in der eingefahrenen Stellung und in dem zweiten Betriebsmodus in der ausgefahrenen Stellung angeordnet ist.

Beim Bewegen der Aufnahme von der Transportposition in die Ladeposition wird jedes Vorderrad von der eingefahrenen Stellung in die ausgefahrene Stellung bewegt. Entsprechend wird beim Bewegen der Aufnahme von der Ladeposition in die Transportposition wird jedes Vorderrad von der ausgefahrenen Stellung in die eingefahrene Stellung bewegt. Verglichen mit der Transportposition ist die Aufnahme in der Ladeposition höher und horizontal weiter von der Basisbaugruppe beabstandet. Dadurch verschiebt sich auch der Schwerpunkt des Transportwagens in Richtung der Lage der Aufnahme in der Ladeposition. Die Vorderräder werden gleichzeitig ebenfalls in dieselbe Richtung verschoben, wodurch sich ein Abstand zwischen Vorderrad und Hinterrad vergrößert. Auf diese Weise stützen die Vorderräder den Transportwagen in der Ladeposition trotz verändertem Schwerpunkt ausreichend ab. Vorzugsweise sind das Vorderrad und das Hinterrad mittels eines Verbindungselements miteinander verbunden, wobei eine Länge des Verbindungselements verstellbar ist. Insbesondere kann das Verbindungselement teleskopartig ausgebildet sein. Beispielsweise kann das Verbindungselement zwei Teilstücken aufweisen, die relativ zueinander bewegbar sind. Durch ein Verstellen der Länge des Verbindungselements kann das Vorderrad zwischen der eingefahrenen Stellung und der ausgefahrenen Stellung verlagert werden. Das Verbindungselement weist dabei in der eingefahrenen Stellung eine Länge auf die kleiner ist als eine Länge des Verbindungselements in der ausgefahrenen Stellung.

In einer weiteren bevorzugten Ausführungsform der Erfindung weist der Transportwagen des Weiteren einen an der Basisbaugruppe angeordneten Griff auf, wobei der Griff an der Basisbaugruppe um eine Schwenkachse schwenkbar gelagert ist.

Auf diese Weise kann beispielsweise die Ausrichtung des Griffs in dem ersten und zweiten Betriebsmodus eingestellt werden.

In einer weiteren bevorzugten Ausführungsform der Erfindung ist der Griff mit dem Aktuierungselement koppelbar, so dass eine Schwenkbewegung des Griffs auf eine Bewegung des Aktuierungselements parallel zu der ersten Bewegungsrichtung, insbesondere in der ersten Bewegungsrichtung, übertragen wird, insbesondere wobei das Aktuierungselement derart mit der ersten Aufnahme gekoppelt ist, dass nur eine Bewegung des Aktuierungselements in der ersten Bewegungsrichtung auf eine Bewegung der ersten Aufnahme zwischen der Transportposition und der Ladeposition übertragen wird.

Auf diese Weise wird eine Schwenkbewegung des Griffs um die Schwenkachse auf eine Bewegung des Aktuierungselements sowohl in als auch entgegen der ersten Bewegungsrichtung übertragen, wobei nur eine Bewegung des Aktuierungselement in der ersten Bewegungsrichtung dazu verwendet wird, um die erste Aufnahme zwischen der Transportposition und der Ladeposition zu bewegen. Die Schwenkrichtung der Schwenkbewegung des Griffs, die das Aktuierungselement in der ersten Bewegungsrichtung bewegt ist vorzugsweise aus einer Ausgangsstellung des Griffs abwärts bzw. nach unten gerichtet. Auf diese Weise kann der Griff somit in dieser Schwenkrichtung geschwenkt werden, um eine Aktuierungsbewegung zu erzeugen, und kann danach in seine Ausgangsstellung zurückgeführt werden, ohne dass eine Bewegungsübertragung stattfindet. In anderen Worten kann dadurch auf einfache Art und Weise der Benutzer die erste bzw. zweite Aktuierung durch eine Schwenkbewegung, insbesondere eine Pump- bzw. Wippbewegung, des Griffs ausführen.

In einer weiteren bevorzugten Ausführungsform der Erfindung ist der Griff mit dem Aktuierungselement derart koppelbar, dass eine Schwenkbewegung des Griffs nur auf eine Bewegung des Aktuierungselements in der ersten Bewegungsrichtung übertragen wird.

Auf diese Weise wird eine Schwenkbewegung des Griffs in einer Schwenkrichtung auf eine Bewegung des Aktuierungselements in der ersten Bewegungsrichtung übertragen, wohingegen eine Schwenkbewegung des Griffs entgegen der Schwenkrichtung nicht auf das Aktuierungselement übertragen wird. Die Schwenkrichtung ist vorzugsweise aus einer Ausgangsstellung des Griffs abwärts bzw. nach unten gerichtet. Auf diese Weise kann der Griff somit in der Schwenkrichtung geschwenkt werden, um eine Aktuierungsbewegung zu erzeugen, und kann danach in seine Ausgangsstellung zurückgeführt werden, ohne dass eine Bewegungsübertragung stattfindet. In anderen Worten kann dadurch auf einfache Art und Weise der Benutzer die erste bzw. zweite Aktuierung durch eine Schwenkbewegung, insbesondere eine Pump- bzw. Wippbewegung, des Griffs ausführen.

In einer weiteren bevorzugten Ausführungsform der Erfindung ist der Griff an der Basisbaugruppe über einen Kopplungsmechanismus schwenkbar gelagert, wobei der Kopplungsmechanismus in einen Arretierzustand bringbar ist, in dem der Griff nicht gegenüber der Basisbaugruppe schwenkbar ist, wobei der Kopplungsmechanismus in zumindest einen Kopplungszustand bringbar ist, in dem der Griff gegenüber der Basisbaugruppe schwenkbar ist und der Griff mit dem Aktuierungselement gekoppelt ist.

In dem zumindest einen Kopplungszustand kann der Griff, wie zuvor beschrieben, dazu verwendet werden, die erste bzw. die zweite Aktuierung auszuführen. In dem Arretierzustand ist der Griff nicht schwenkbar, insbesondere starr, mit der Basisbaugruppe verbunden. In dem Arretierzustand kann der Griff dazu verwendet werden, den Transportwagen entweder zu schieben oder zu ziehen. In anderen Worten ist der Griff in dem Kopplungszustand dazu vorgesehen, die erste bzw. zweite Aktuierung auszuführen, und in dem Arretierzustand dazu vorgesehen, ein Schieben bzw. Ziehen des Transportwagens über den Griff zu ermöglichen.

In einer weiteren bevorzugten Ausführungsform der Erfindung weist der zumindest eine Kopplungszustand einen ersten Kopplungszustand und einen zweiten Kopplungszustand auf, wobei in dem ersten Kopplungszustand durch das Aktuierungselement die erste Aktuierung erfolgen kann, und in dem zweiten Kopplungszustand durch das Aktuierungselement die zweite Aktuierung erfolgen kann.

Dadurch erfolgt die erste Aktuierung durch eine Schwenkbewegung des Griffs in dem ersten Kopplungszustand um die Schwenkachse und die zweite Aktuierung durch eine Schwenkbewegung des Griffs in dem zweiten Kopplungszustand um die Schwenkachse.

In einer weiteren bevorzugten Ausführungsform der Erfindung ist der Kopplungsmechanismus in den Arretierzustand vorgespannt.

Auf diese Weise ist der Arretierzustand der Grundzustand des Kopplungsmechanismus. Auf diese Weise wird erreicht, dass im Normalbetrieb des Transportwagens, sprich im Fall, dass mit dem Transportwagen Transportboxen oder Kisten transportiert werden, der Griff fest arretiert an der Basisbaugruppe ist. Wenn eine Transformation des Transportwagens oder eine Einstellung des Griffs erforderlich ist, kann der Kopplungsmechanismus aus dem Arretierzustand in eine der anderen Zustände überführt werden, um entweder in einem der Kopplungszustände die erste oder zweite Aktuierung durchzuführen oder in dem Freidrehzustand den Griff einzustellen.

In einer weiteren bevorzugten Ausführungsform der Erfindung weist der Transportwagen an dem Griff ein erstes Betätigungselement, mittels dem der Kopplungsmechanismus in den ersten Kopplungszustand überführbar ist, und ein zweites Betätigungselement, mittels dem der Kopplungsmechanismus in den zweiten Kopplungszustand überführbar ist, auf.

Auf diese Weise kann ein Benutzer den Kopplungsmechanismus auf einfache Art und Weise zwischen den einzelnen Zuständen überführen.

In einer weiteren bevorzugten Ausführungsform der Erfindung ist der Kopplungsmechanismus in einem Freidrehzustand bringbar, in dem der Griff gegenüber der Basisbaugruppe schwenkbar ist und der Griff mit dem Aktuierungselement entkoppelt ist, so dass die Schwenkbewegung des Griffs nicht auf das Aktuierungselement übertragbar ist.

In dem Freidrehzustand kann die Ausrichtung des Griffs gegenüber der Basisbaugruppe verändert werden. Insbesondere kann in dem Freidrehzustand eine gewünschte Ausrichtung des Griffs gegenüber der Basisbaugruppe eingestellt werden. Durch ein Überführen des Zustands des Kopplungsmechanismus von dem Freidrehzustand in den Arretierzustand kann die gewünschte Ausrichtung des Griffs arretiert werden. Auf diese Weise kann ein Benutzer die gewünschte Ausrichtung des Griffs bezüglich der Basisbaugruppe einstellen, die zum Schieben bzw. Ziehen des Transportwagens in dem Arretierzustand besonders geeignet ist.

In einer weiteren bevorzugten Ausführungsform der Erfindung weist die Aktuierungsvorrichtung eine Bewegungsübertragungseinrichtung auf, mittels der eine Bewegung des Aktuierungselements in der ersten Bewegungsrichtung mit einer Bewegung der ersten Aufnahme gekoppelt ist, um bei einer Bewegung des Aktuierungselements in der ersten Bewegungsrichtung die erste Aufnahme zwischen der Transportposition und der Ladeposition zu bewegen oder zu verlagern.

Auf diese Weise wird bei der ersten Aktuierung eine Bewegung des Aktuierungselements in der ersten Bewegungsrichtung auf die Schwenkbewegung des Aufnahmeelements um die erste Schwenkachse übertragen, um die Aufnahme von der Transportposition in die Ladeposition zu verlagern. Entsprechend wird bei der zweiten Aktuierung eine Bewegung des Aktuierungselements in der ersten Bewegungsrichtung auf die Schwenkbewegung des Aufnahmeelements um die erste Schwenkachse übertragen, um die Aufnahme von der Ladeposition in die Transportposition zu verlagern.

In einer weiteren bevorzugten Ausführungsform der Erfindung weist die Bewegungsübertragungseinrichtung ein erstes Bewegungsübertragungselement und ein zweites Bewegungsübertragungselement auf, wobei das erste und das zweite Bewegungsübertragungselement dazu eingerichtet sind, eine Bewegung des Aktuierungselements in der ersten Bewegungsrichtung auf eine Bewegung der Aufnahme zwischen der Transportposition und der Ladeposition, insbesondere auf eine Schwenkbewegung der Aufnahme um die Schwenkachse, zu übertragen, wobei bei der ersten Aktuierung eine Bewegung des ersten Bewegungsübertragungselements mit einer Bewegung des Aktuierungselements gekoppelt ist und bei der zweiten Aktuierung eine Bewegung des zweiten Bewegungsübertragungselements mit einer Bewegung des Aktuierungselements gekoppelt ist.

Dadurch ist eine Bewegung des ersten Bewegungsübertragungselements in einer ersten Koppelstellung mit einer Bewegung des Aktuierungselements gekoppelt und eine Bewegung des zweiten Bewegungsübertragungselements in einer zweiten Koppelstellung mit einer Bewegung des Aktuierungselements gekoppelt. Das erste und das zweite Bewegungsübertragungselement können in der jeweiligen Koppelstellung derart mit dem Aktuierungselement gekoppelt sein, dass nur eine Bewegung des Aktuierungselements in der ersten Bewegungsrichtung auf das jeweilige Bewegungsübertragungselement übertragen wird. Das erste Bewegungsübertragungselement ist dazu eingerichtet, das Aufnahmeelement derart um die erste Schwenkachse zu drehen, dass die Aufnahme von der Transportposition in die Ladeposition verlagert wird. Entsprechend ist das zweite Bewegungsübertragungselement dazu eingerichtet, das Aufnahmeelement derart um die erste Schwenkachse zu drehen, dass die Aufnahme von der Ladeposition in die Transportposition verlagert wird. Das erste und zweite Bewegungsübertragungselement können derart mit den Armen gekoppelt sein, dass die Drehrichtung um die erste Schwenkachse bei einer Aktuierung mittels des ersten Bewegungsübertragungselement entgegengesetzt zu einer Drehrichtung um die erste Schwenkachse bei einer Aktuierung mittels des zweiten Bewegungsübertragungselement ist. Das erste und das zweite Bewegungsübertragungselement können beispielsweise als Seilzug und/oder als Schubstange ausgebildet sein. Alternativ können das erste und das zweite Bewegungsübertragungselement beispielsweise auch als hydraulisches Bewegungsübertragungselement oder pneumatisches Bewegungsübertragungselement ausgebildet sein.

In einer weiteren bevorzugten Ausführungsform der Erfindung ist der Transportwagen des Weiteren zwischen einem Packmodus und dem ersten Betriebsmodus überführbar bzw. transformierbar.

Wie bereits zuvor beschrieben, eignet sich der Packmodus besonders zum Transport bzw. zur Aufbewahrung des Transportwagens. Dazu ist der Transportwagen vorzugsweise kompakt zusammengeklappt und beansprucht deswegen wenig Platz. Der erste Betriebsmodus eignet sich besonders zum Betrieb, insbesondere zum Ziehen, des Transportwagens. Dazu sind vorzugsweise die Seitenbaugruppen aufgeklappt und die Räder aus den Seitenbaugruppen ausgeklappt, sodass der Transportwagen beispielsweise über die Räder bewegt werden kann.

In einer weiteren bevorzugten Ausführungsform der Erfindung sind die Seitenbaugruppen an der Basisbaugruppe jeweils zwischen einer zugeklappten Stellung und einer aufgeklappten Stellung schwenkbar gelagert, insbesondere wobei der Transportwagen in dem Packmodus angeordnet ist, wenn beide Seitenbaugruppen in der zugeklappten Stellung angeordnet sind, und in dem ersten Betriebsmodus angeordnet ist, wenn beide Seitenbaugruppen in der aufgeklappten Stellung angeordnet sind.

Wie zuvor beschrieben ist der Transportwagen in dem Packmodus platzsparend zusammengeklappt und in dem ersten Betriebsmodus für den Betrieb, beispielsweise den Transport einer Transportbox, aufgeklappt.

In einer weiteren bevorzugten Ausführungsform der Erfindung sind die Seitenbaugruppen in der zugeklappten Stellung zugeklappt, insbesondere miteinander fluchtend, angeordnet und in der aufgeklappten Stellung aufgeklappt, insbesondere parallel zueinander, angeordnet.

In anderen Worten liegen die Seitenbaugruppen in dem Packmodus an der Basisbaugruppe an und erstrecken sich entlang der Basisbaugruppe aufeinander zu. In dem ersten Betriebsmodus erstrecken sich die Seitenbaugruppen, vorzugsweise senkrecht zu der Basisbaugruppe, weg von der Basisbaugruppe.

In einer weiteren bevorzugten Ausführungsform der Erfindung ist jedes Rad in dem Packmodus in einer eingeklappten Stellung und in dem ersten Betriebsmodus in einer ausgeklappten Stellung angeordnet.

Auf diese Weise ist jedes Rad in dem Packmodus platzsparend angeordnet und in dem ersten Betriebsmodus derart angeordnet, dass der Transportwagen über die Räder bewegt, insbesondere geschoben oder gezogen, werden kann.

In einer weiteren bevorzugten Ausführungsform der Erfindung ist eine Bewegung, insbesondere Schwenkbewegung, jeder Seitenbaugruppe zwischen der zugeklappten und der aufgeklappten Stellung mit einer Bewegung, insbesondere Schwenkbewegung, des entsprechenden Rads zwischen der eingeklappten und ausgeklappten Stellung gekoppelt ist, so dass beim Bewegen jeder Seitenbaugruppe zwischen der zugeklappten Stellung und der aufgeklappten Stellung das entsprechende Rad zwischen der eingeklappten Stellung und ausgeklappten Stellung bewegt wird.

Auf diese Weise sind die Räder und die Seitenbaugruppen gemeinsam zwischen dem Packmodus und dem ersten Betriebsmodus überführbar.

In einer weiteren bevorzugten Ausführungsform der Erfindung wird jedes Rad beim Schwenken der entsprechenden Seitenbaugruppe von der zugeklappten Stellung in die aufgeklappte Stellung ausklappt und entsprechend beim Schwenken der entsprechenden Seitenbaugruppe von der aufgeklappten Stellung in die zugeklappte Stellung eingeklappt.

Auf diese Weise kann ein Benutzer zum Überführen des Transportwagens zwischen dem Packmodus und dem ersten Betriebsmodus die Seitenbaugruppen auf- bzw. zuklappen, wobei die Räder entsprechend aus- bzw. eingeklappten werden.

In einer weiteren bevorzugten Ausführungsform der Erfindung ist die Bewegung jedes Rads über einen Kniehebel mit der Bewegung der entsprechenden Seitenbaugruppe gekoppelt, wobei jeder Kniehebel in der ausgeklappten Stellung des entsprechenden Rads derart angeordnet ist, insbesondere gestreckt angeordnet ist, dass das jeweilige Rad in der ausgeklappten Stellung gehalten wird.

Auf diese Weise verbleibt der Kniehebel in dem gestreckten Zustand, wenn eine Schubkraft in Richtung der Erstreckungsrichtung des Kniehebels wirkt. Dementsprechend hält jeder Kniehebel das jeweilige Rad in der ausgeklappten Stellung, wenn der Kniehebel gestreckt ist. Die Kniehebel stellen somit sicher, dass das entsprechende Rad nicht durch ein beaufschlagtes Drehmoment um seine Lagerungsachse an der entsprechenden Seitenbaugruppe einklappbar ist. Das Rad ist somit nur durch eine Klapp- bzw. Schwenkbewegung der entsprechenden Seitenbaugruppe einklappbar.

In einer weiteren bevorzugten Ausführungsform der Erfindung ist jeder Kniehebel derart angeordnet, dass er beim Überführen jedes an der entsprechenden Seitenbaugruppe angeordneten Rads von der eingeklappten in die ausgeklappte Stellung gestreckt wird und entsprechend beim Überführen jedes Rads von der ausgeklappten in die eingeklappte Stellung geknickt wird.

Wie zuvor bereits beschrieben, wird dadurch auf einfache Art und Weise erreicht, dass jedes Rad nur durch eine Klapp- bzw. Schwenkbewegung der entsprechenden Seitenbaugruppe klappbar, insbesondere ein- bzw. ausklappbar, ist.

In einer weiteren bevorzugten Ausführungsform der Erfindung weist an jeder Seitenbaugruppe das mindestens eine Rad ein Vorderrad und ein Hinterrad auf, die gemeinsam zwischen der eingeklappten Stellung und der ausgeklappten Stellung verlagerbar sind.

Auf diese Weise können das Vorder- und Hinterrad gleichzeitig aus- und eingeklappt werden.

In einer weiteren bevorzugten Ausführungsform der Erfindung weist der Transportwagen in jeder Seitenbaugruppe ein Verbindungselement auf, mittels dem das Vorderrad und das Hinterrad miteinander verbunden sind, wobei das Verbindungselement derart in der Seitenbaugruppe gelagert ist, dass das Vorderrad und das Hinterrad gemeinsam ausgeklappt und eingeklappte werden können. Vorzugsweise ist die Bewegung des Vorderrads und des Hinterrads mit der entsprechenden Seitenbaugruppe über den Kniehebel gekoppelt. Dazu kann der Kniehebel mit dem Verbindungselement gekoppelt sein. Das Verbindungselement kann auch als Radträger oder Fahrwerksträger bezeichnet werden.

Das Verbindungselement kann beispielsweise mittels eines Hebels in der Seitenbaugruppe gelagert sein. Mittels des Verbindungselements können das Vorderrad und das Hinterrad auf einfache Weise ausgeklappt und eingeklappte werden.

In einer weiteren bevorzugten Ausführungsform der Erfindung weist der Transportwagen des Weiteren eine Arretiereinrichtung auf, die dazu ausgebildet ist, jede Seitenbaugruppe in der zugeklappten Stellung und in der aufgeklappten Stellung zu arretieren.

Auf diese Weise können die Seitenbaugruppen im Packmodus in der zugeklappten Stellung und in dem ersten bzw. zweiten Betriebsmodus in der aufgeklappten Stellung arretiert bzw. gehalten werden. Die Arretiereinrichtung sichert somit die Seitenbaugruppen gegenüber einem ungewollten Verschwenken ab.

In einer weiteren bevorzugten Ausführungsform der Erfindung weist der Transportwagen des Weiteren mindestens ein viertes Betätigungselement auf, mittels dem die durch die Arretiereinrichtung bewirkte Arretierung der Seitenbaugruppen lösbar ist.

Wird das vierte Betätigungselement betätigt, löst sich die Arretierung der Seitenbaugruppen, so dass die Seitenbaugruppen zwischen der zugeklappten und der aufgeklappten Stellung überführbar sind.

In einer weiteren bevorzugten Ausführungsform der Erfindung weist der Transportwagen jeweils ein viertes Betätigungselement für jede Seitenbaugruppe auf, mittels dem die durch die Arretiereinrichtung bewirkte Arretierung der jeweiligen Seitenbaugruppe lösbar ist.

Auf diese Weise kann die Arretierung der Seitenbaugruppen unabhängig voneinander gelöst werden.

In einer weiteren bevorzugten Ausführungsform der Erfindung ist jedes vierte Betätigungselement an der entsprechenden Seitenbaugruppe angeordnet.

Auf diese Weise kann ein Benutzer ein Betätigungselement betätigen und dabei die entsprechende Seitenbaugruppe verschwenken. Insbesondere kann ein Benutzer beide Betätigungselement gleichzeitig betätigen und dabei die Seitenbaugruppen verschwenken, um den Transportwagen zwischen dem Packmodus und dem ersten Betriebsmodus zu überführen. Auf diese Weise kann der Transportwagen besonders einfach zwischen dem Packmodus und dem ersten Betriebsmodus überführt werden.

In einer weiteren bevorzugten Ausführungsform der Erfindung weist der Transportwagen für jedes Vorderrad einen Ausrichtmechanismus auf, mittels dem das Vorderrad beim Zuklappen der entsprechenden Seitenbaugruppe in eine vorbestimmte Ausrichtung ausgerichtet, insbesondere gedreht, wird.

Das Vorderrad kann über eine Lenkachse an dem Verbindungselement gelagert sein. Wenn der Transportwagen im ersten Betriebsmodus betrieben wird, kann das Vorderrad um die Lenkachse beliebig geschwenkt werden. Wenn der Transportwagen von dem ersten Betriebsmodus in den Packmodus verlagert werden soll, kann das Vorderrad somit beliebig ausgerichtet sein. In der vorbestimmten Ausrichtung ist das Vorderrad von der Lenkachse in Richtung des Hinterrads geschwenkt. Das Vorderrad ist insbesondere parallel zu dem Verbindungselement ausgerichtet. Durch das automatische Ausrichten des Vorderrads in die vorbestimmte Ausrichtung kann das Vorderrad kompakt und einfach in der Seitenbaugruppe verstaut werden.

In einer weiteren bevorzugten Ausführungsform der Erfindung weist der Transportwagen für jedes Hinterrad eine erste Federeinrichtung auf, mittels der das Hinterrad in einer ersten Richtung gefedert ist.

Die erste Richtung kann senkrecht zu einer Laufachse des Hinterrads angeordnet sein. Auf diese Weise werden Stöße, die im Betrieb, insbesondere beim Schieben und/oder Ziehen, auf das Hinterrad des Transportwagens einwirken, in der ersten Richtung gedämpft. Dadurch werden die Haltbarkeit des Hinterrads und der Fahrkomfort verbessert.

In einer weiteren bevorzugten Ausführungsform der Erfindung weist der Transportwagen für jedes Hinterrad eine zweite Federeinrichtung auf, mittels der das Hinterrad in einer zweiten Richtung gefedert ist, die senkrecht zu der ersten Richtung verläuft.

Die zweite Richtung kann ebenfalls senkrecht zu der Laufachse des Hinterrads angeordnet sein. Auf diese Weise werden Stöße, die im Betrieb, insbesondere beim Schieben und/oder Ziehen, auf das Hinterrad des Transportwagens einwirken, in der ersten und zweiten Richtung, insbesondere komplett, gedämpft. Dadurch werden die Haltbarkeit des Hinterrads und der Fahrkomfort weiter verbessert.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: eine isometrische Ansicht einer Vorderseite einer Ausführungsform eines Transportwagens in einem Packmodus;
- Fig. 2: eine isometrische Ansicht einer Rückseite des Transportwagens aus Fig. 1;
- Fig. 3: eine Draufsicht auf die Vorderseite des Transportwagens aus Fig. 1;
- Fig. 4: eine Draufsicht auf die Oberseite des Transportwagens aus Fig. 1;
- Fig. 5: eine Seitenansicht des Transportwagens aus Fig. 1;
- Fig. 6: eine isometrische Ansicht der Rückseite des Transportwagens aus Fig. 1 mit zusammengeklappter Transportbox in einer Aussparung;
- Fig. 7: eine Draufsicht auf die Rückseite des Transportwagens aus Fig. 1 mit Transportbox in der Aussparung;
- Fig. 8: eine isometrische Ansicht der Vorderseite des Transportwagens aus Fig. 1 in einem ersten Betriebsmodus;
- Fig. 9: eine Draufsicht auf die Vorderseite des Transportwagens aus Fig. 8;
- Fig. 10: eine Draufsicht auf die Oberseite des Transportwagens aus Fig. 8;
- Fig. 11: eine isometrische Ansicht der Vorderseite des Transportwagens aus Fig. 1 in einem ersten Betriebsmodus;
- Fig. 12: eine Seitenansicht des Transportwagens aus Fig. 8;
- Fig. 13: eine isometrische Ansicht der Vorderseite des Transportwagens aus Fig. 11 mit Kasten auf einer Auflage;
- Fig. 14: eine isometrische Ansicht der Vorderseite des Transportwagens aus Fig. 11 mit Kasten auf der Auflage und Transportbox in einer zweiten Aufnahme;
- Fig. 15: eine isometrische Ansicht der Vorderseite des Transportwagens aus Fig. 14 beim Ziehen;
- Fig. 16: eine Seitenansicht des Transportwagens aus Fig. 15;
- Fig. 17: eine isometrische Ansicht der Vorderseite des Transportwagens aus Fig. 9 mit in der vertikalen Stellung angeordneter Auflage;
- Fig. 18: eine isometrische Ansicht der Vorderseite des Transportwagens aus Fig. 11 mit zwei Transportboxen in der ersten und zweiten Aufnahme;

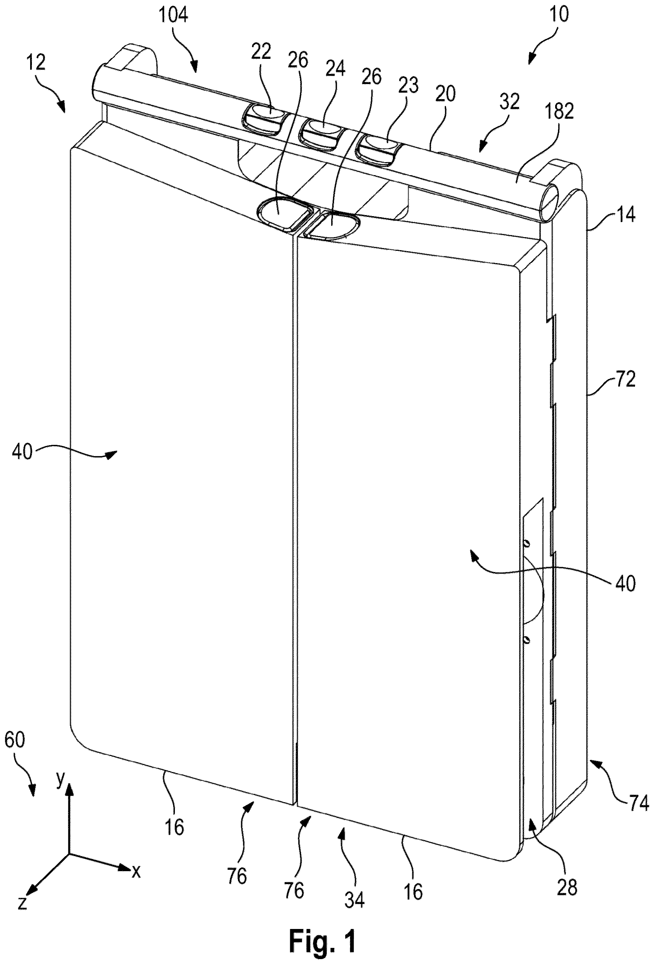

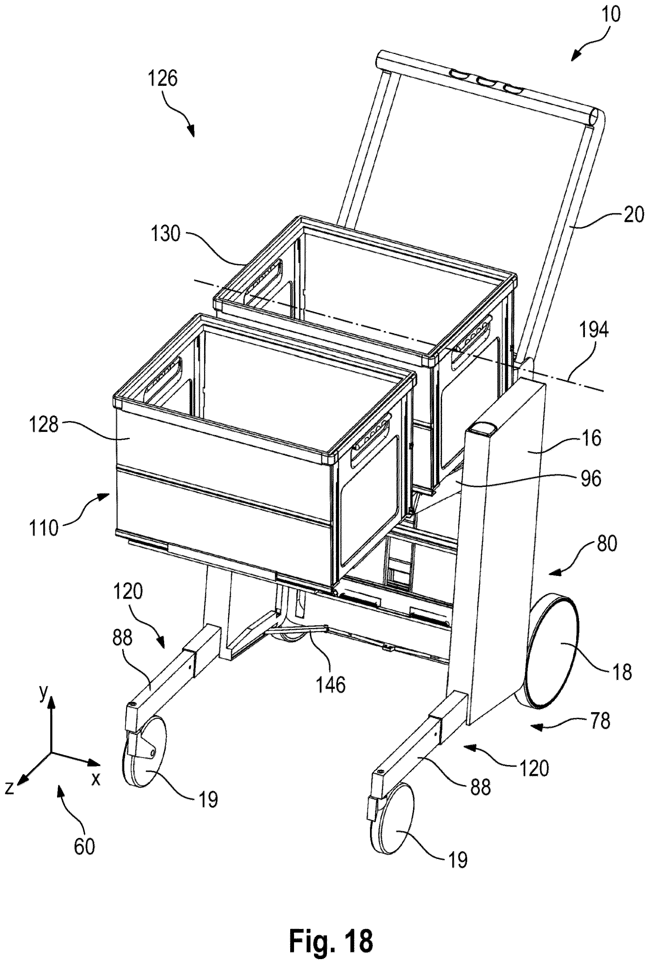

- Fig. 18: eine isometrische Ansicht einer Vorderseite des Transportwagens aus Fig. 1 in einem zweiten Betriebsmodus mit zwei Transportboxen in der ersten und zweiten Aufnahme;

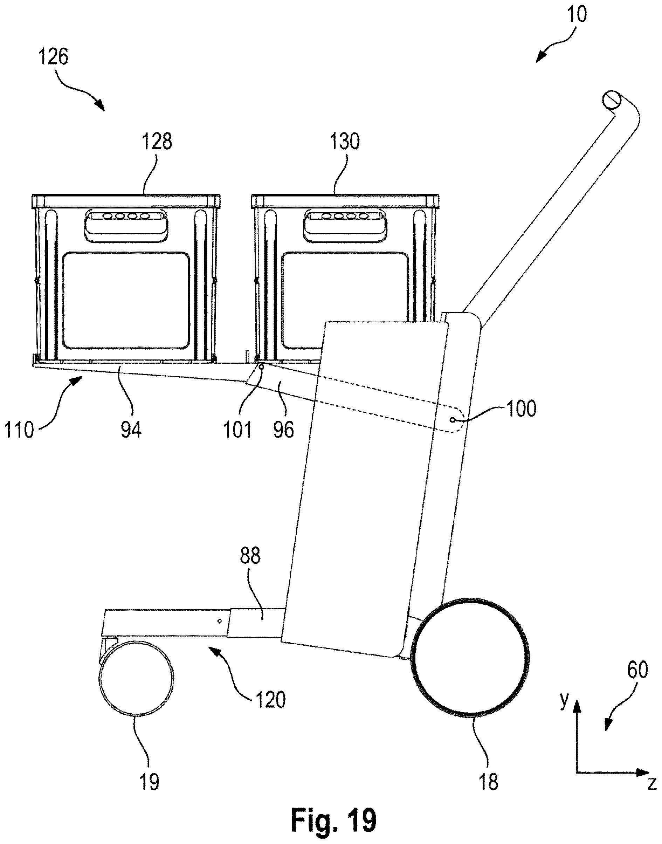

- Fig. 19: eine Seitenansicht des Transportwagens aus Fig. 18;

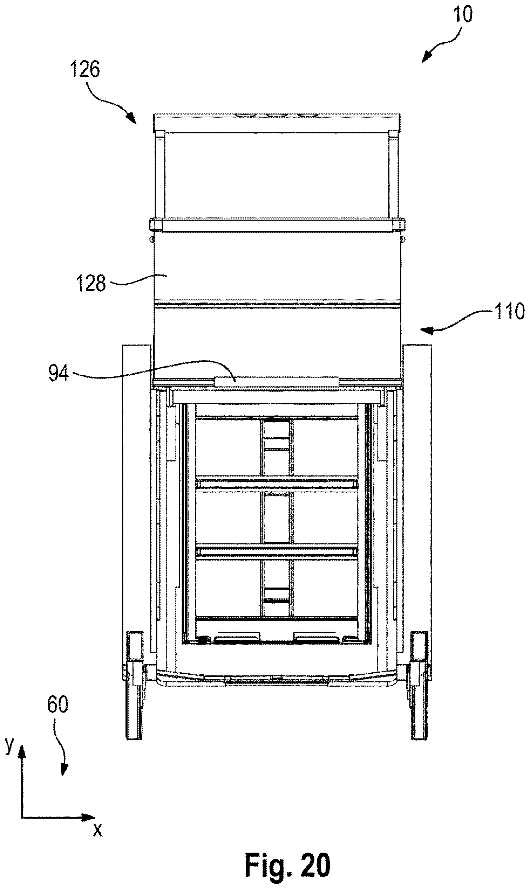

- Fig. 20: eine Draufsicht auf die Vorderseite des Transportwagens aus Fig. 18;

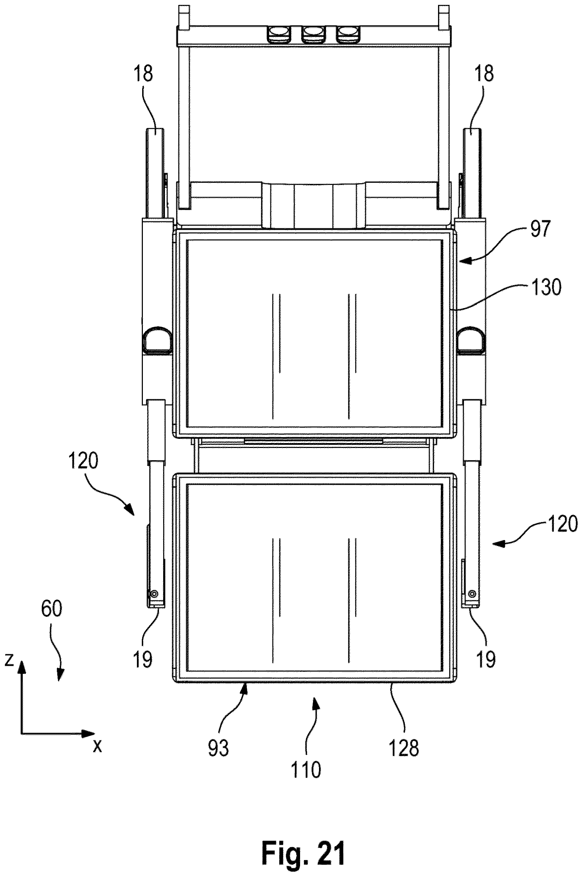

- Fig. 21: eine Draufsicht auf die Oberseite des Transportwagens aus Fig. 18;

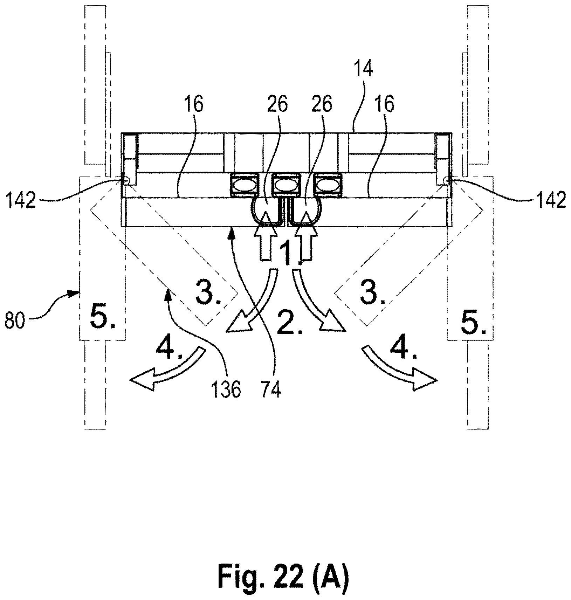

- Fig. 22(A): eine Draufsicht auf eine Vorderseite des Transportwagens aus Fig. 1 beim Lösen der Arretierung in dem Packmodus;

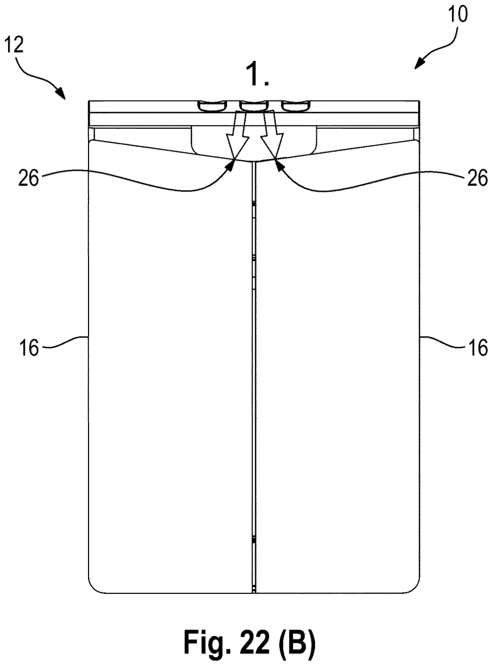

- Fig. 22(B): eine Draufsicht auf eine Oberseite des Transportwagens aus Fig. 1 beim Aufklappen der Seitenbaugruppen;

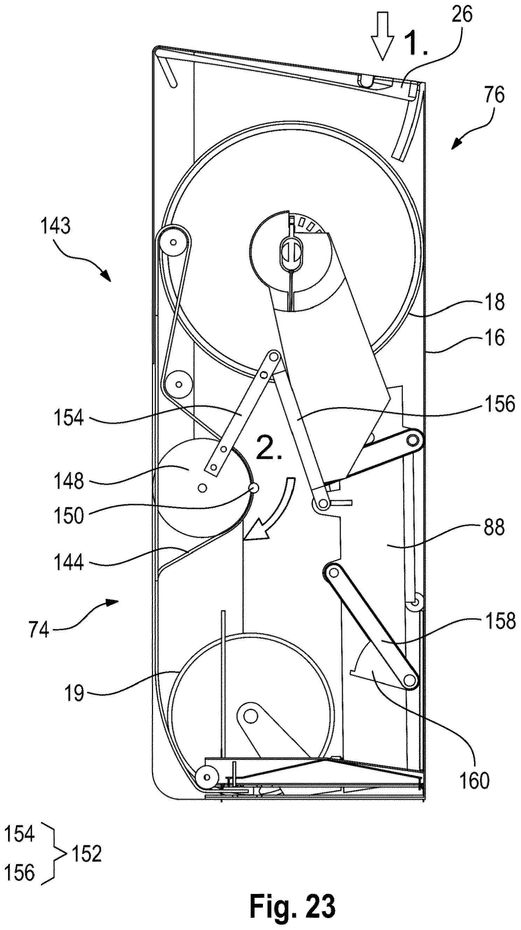

- Fig. 23: eine Schnittansicht einer Ausführungsform einer Seitenbaugruppe in dem Packmodus beim Aufklappen;

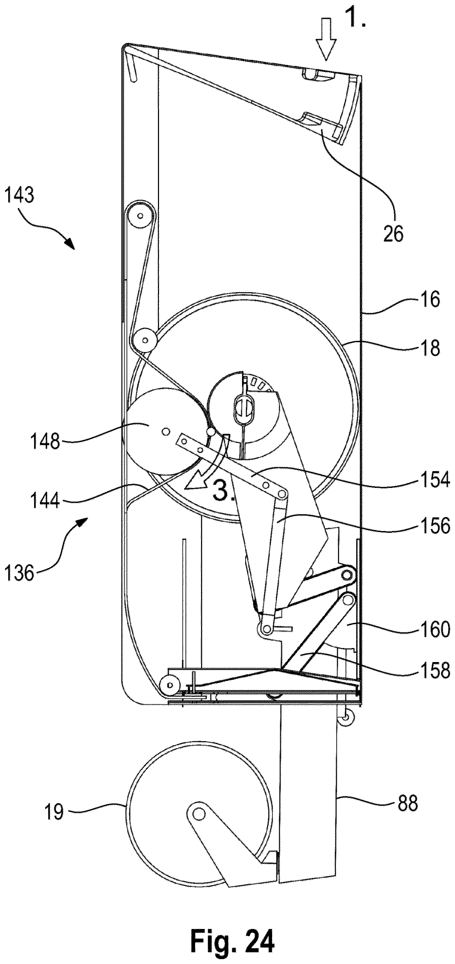

- Fig. 24: eine Schnittansicht der Seitenbaugruppe aus Fig. 23 in einer Anordnung zwischen dem Packmodus und dem ersten Betriebsmodus beim Aufklappen;

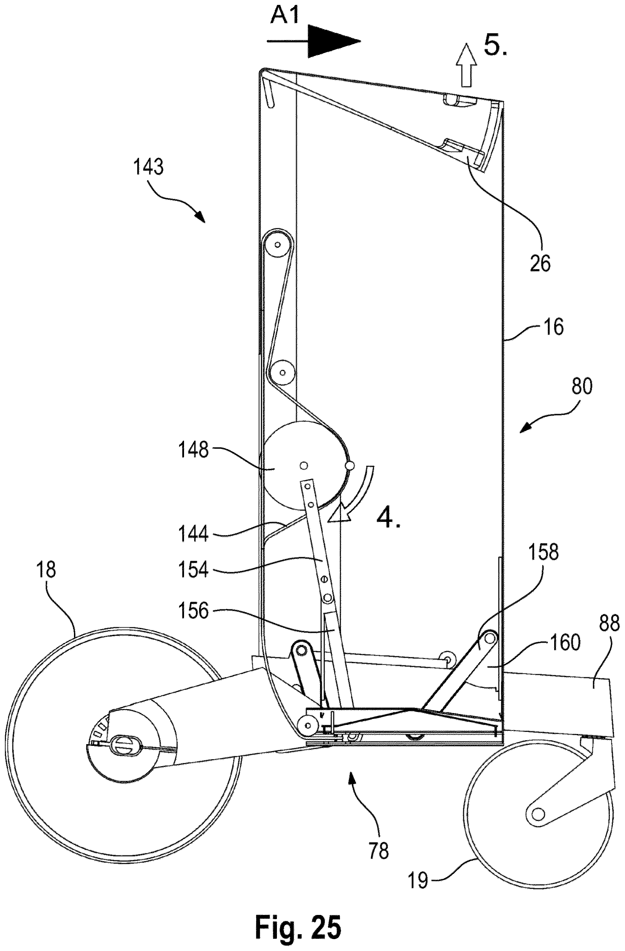

- Fig. 25: eine Schnittansicht der Seitenbaugruppe aus Fig. 23 in dem ersten Betriebsmodus beim Aufklappen;

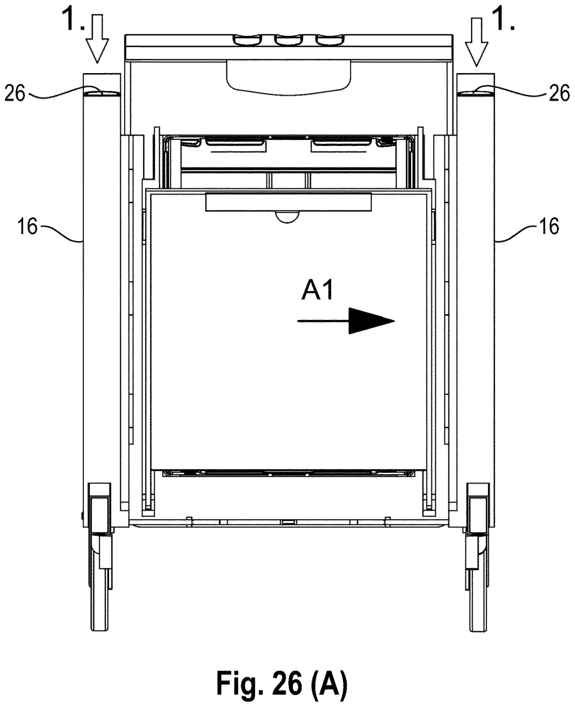

- Fig. 26(A): eine Draufsicht auf eine Vorderseite des Transportwagens aus Fig. 1 beim Lösen der Arretierung in dem ersten Betriebsmodus;

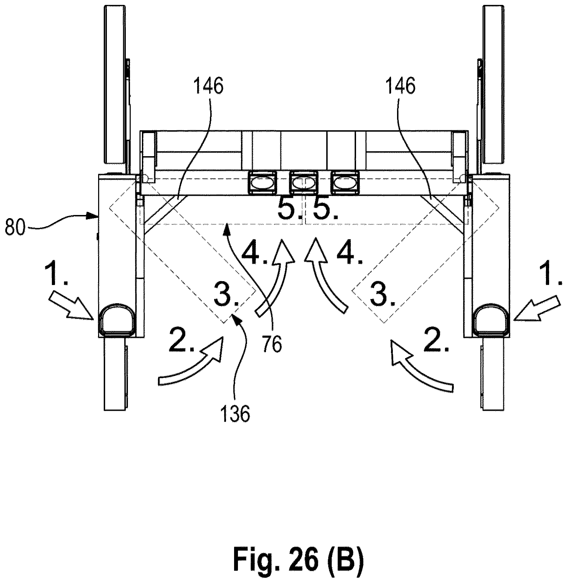

- Fig. 26(B): eine Draufsicht auf eine Oberseite des Transportwagens aus Fig. 1 beim Zuklappen der Seitenbaugruppen;

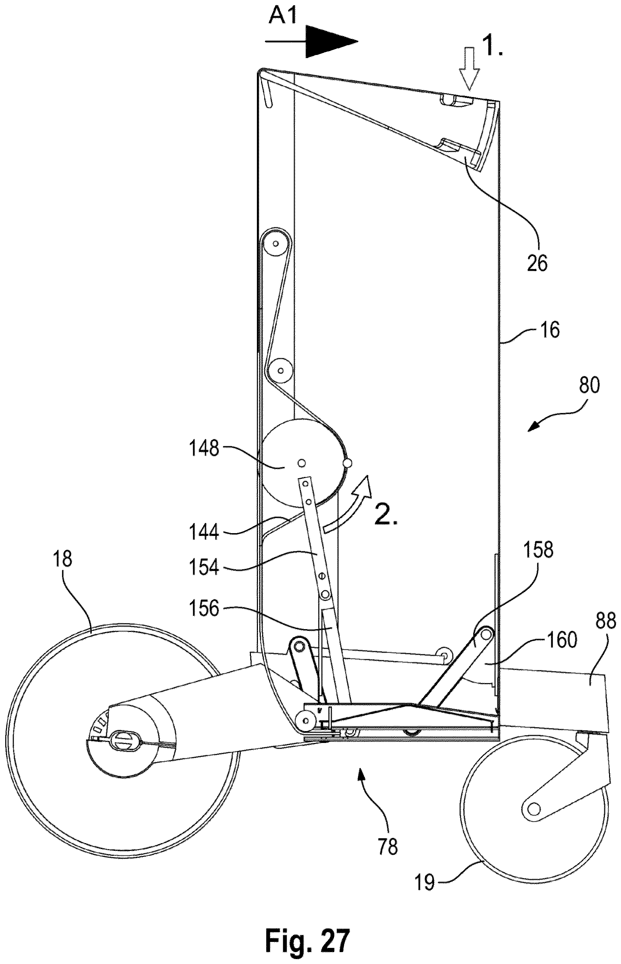

- Fig. 27: eine Schnittansicht der Seitenbaugruppe aus Fig. 23 in dem ersten Betriebsmodus beim Zuklappen;

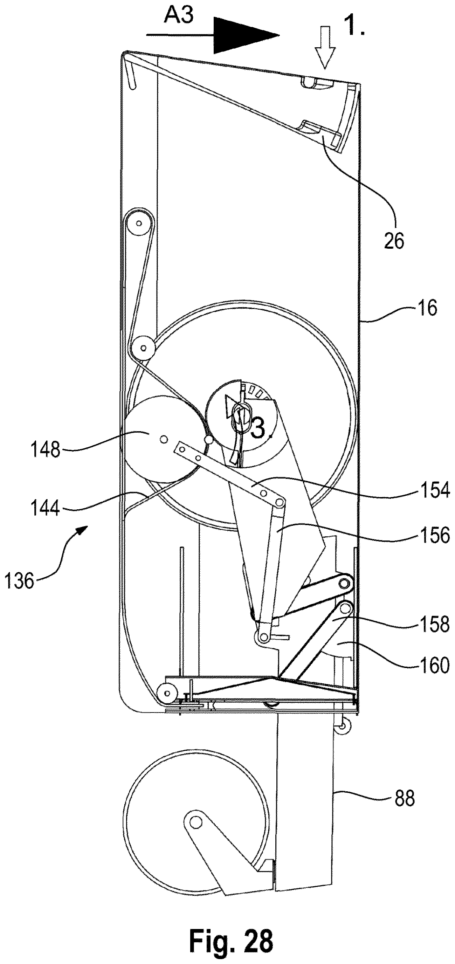

- Fig. 28: eine Schnittansicht der Seitenbaugruppe aus Fig. 23 in einer Anordnung zwischen dem Packmodus und dem ersten Betriebsmodus beim Zuklappen;

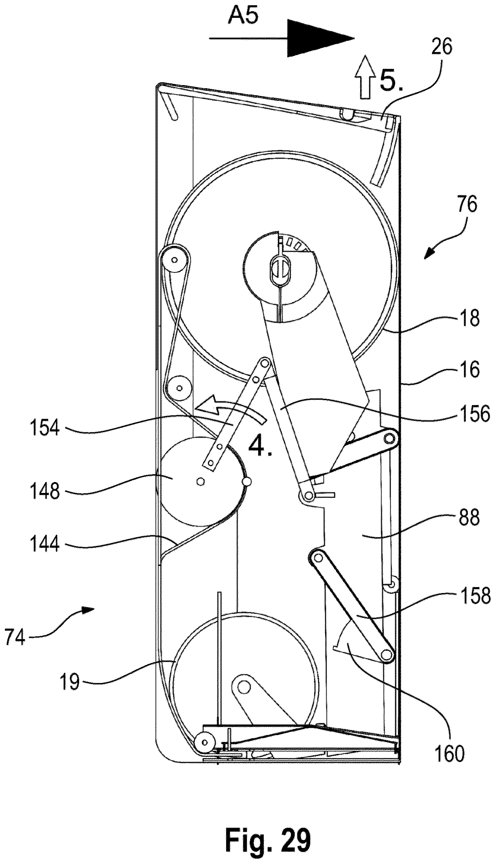

- Fig. 29: eine Schnittansicht der Seitenbaugruppe aus Fig. 23 in dem Packmodus beim Zuklappen;

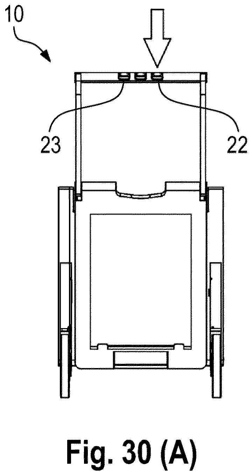

- Fig. 30(A): eine Draufsicht auf die Vorderseite des Transportwagens aus Fig. 1 in dem ersten Betriebsmodus;

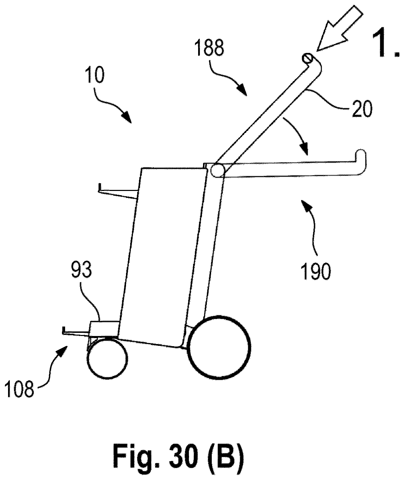

- Fig. 30(B): eine Seitenansicht des Transportwagens aus Fig. 1 in dem ersten Betriebsmodus mit verschwenktem Griff;

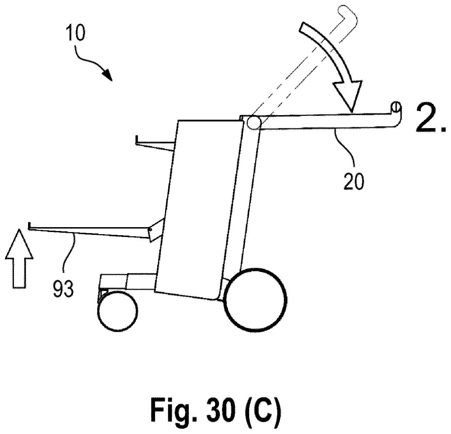

- Fig. 30(C): eine Seitenansicht des Transportwagens aus Fig. 1 in einem Zustand zwischen dem ersten und zweiten Betriebsmodus;

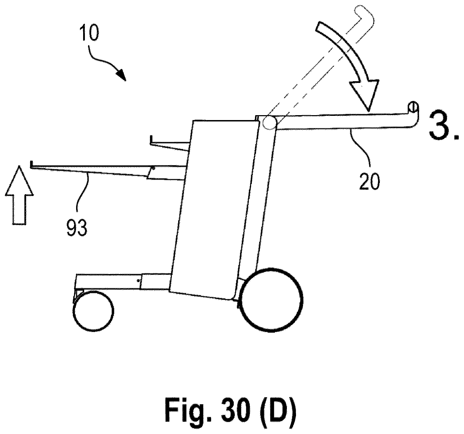

- Fig. 30(D): eine Seitenansicht des Transportwagens aus Fig. 1 in einem Zustand zwischen dem ersten und zweiten Betriebsmodus;

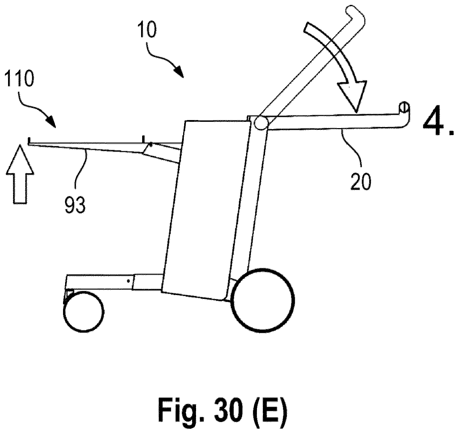

- Fig. 30(E): eine Seitenansicht des Transportwagens aus Fig. 1 in dem zweiten Betriebsmodus mit verschwenktem Griff;

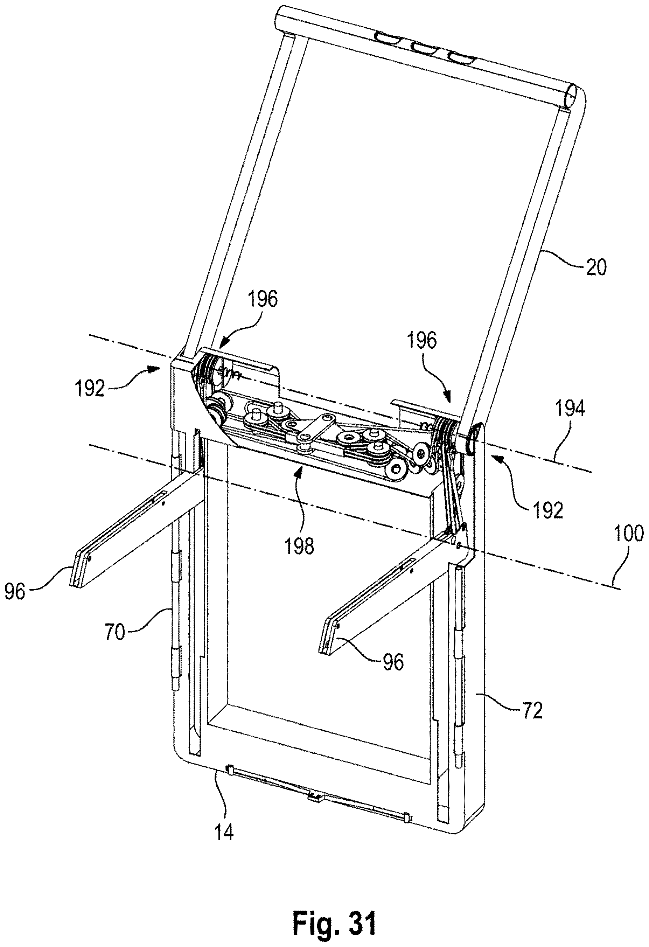

- Fig. 31: eine isometrische Ansicht der Basisbaugruppe des Transportwagens aus Fig. 1;

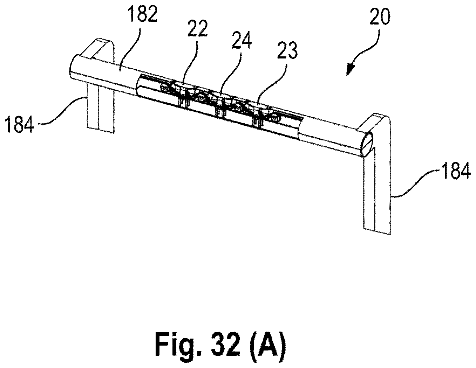

- Fig. 32(A): isometrische Ansicht einer Ausführungsform eines Griffes der Transportwagens aus Fig. 1;

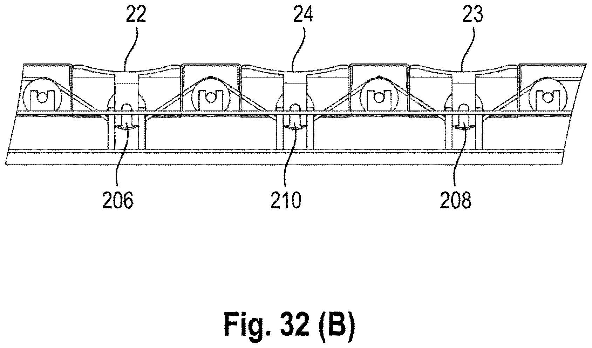

- Fig. 32(B): eine Längsschnittansicht des Griffs aus Fig. 32 (A);

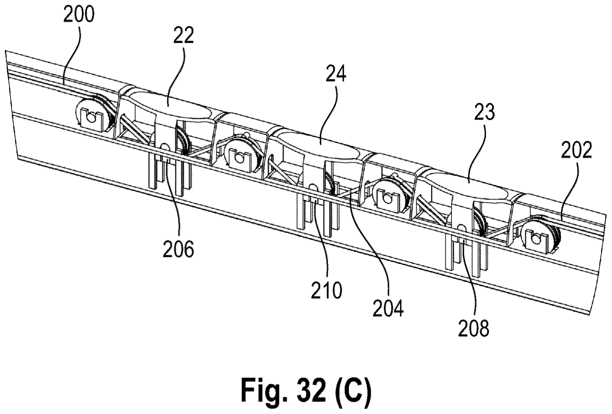

- Fig. 32(C): eine isometrische Detailansicht des Griffs aus Fig. 32 (A);

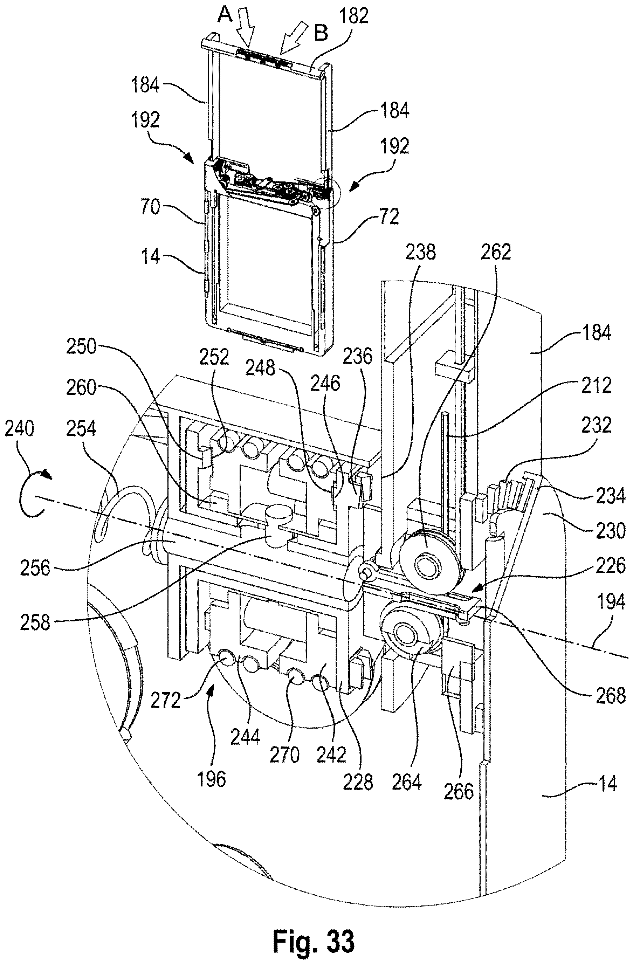

- Fig. 33: eine Detailansicht eines Kopplungsmechanismus der Basisbaugruppe aus Fig. 31;

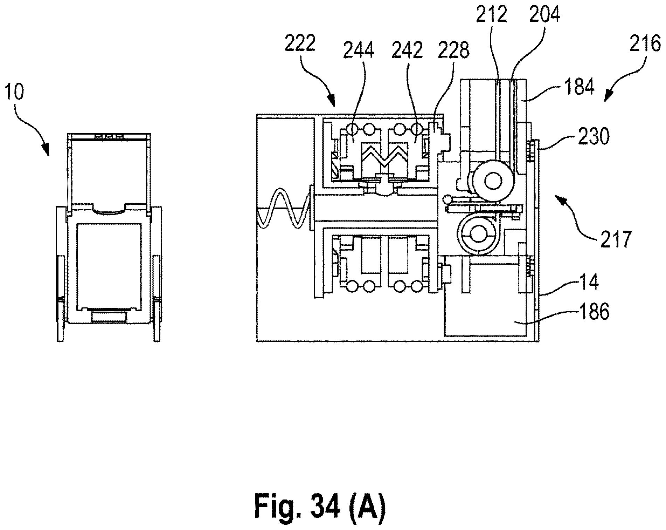

- Fig. 34(A): eine schematische Ansicht der Vorderseite des Transportwagens aus Fig. 1 und eine Längsschnittansicht des Kopplungsmechanismus in einem Arretierzustand;

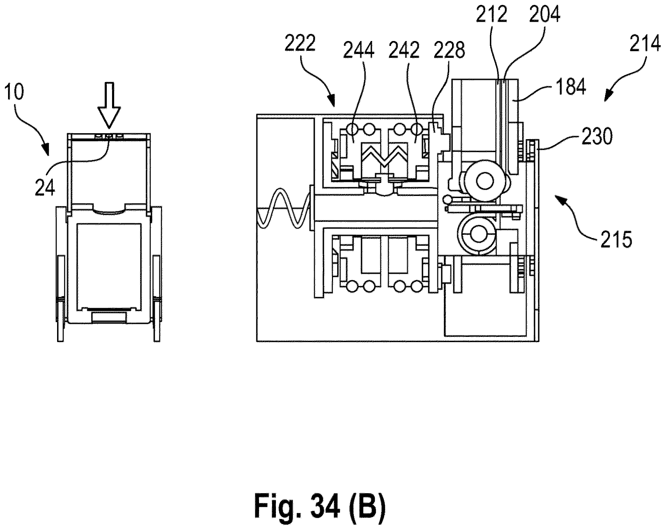

- Fig. 34(B): eine schematische Ansicht der Vorderseite des Transportwagens aus Fig. 1 und eine Längsschnittansicht des Kopplungsmechanismus in einem Freigabezustand;

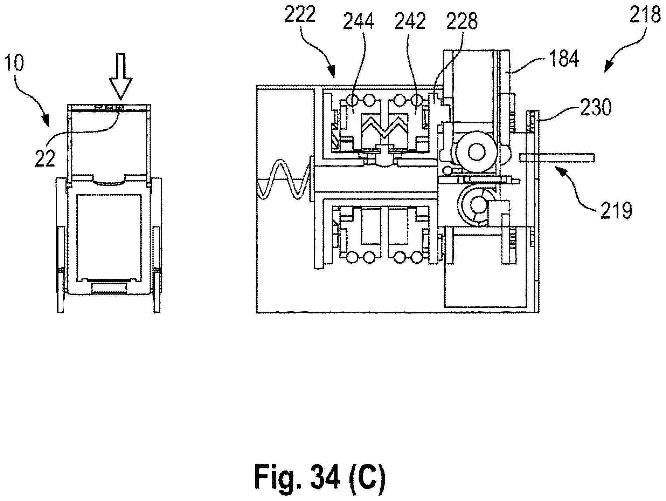

- Fig. 34(C): eine schematische Ansicht der Vorderseite des Transportwagens aus Fig. 1 und eine Längsschnittansicht des Kopplungsmechanismus in einem ersten Kopplungszustand;

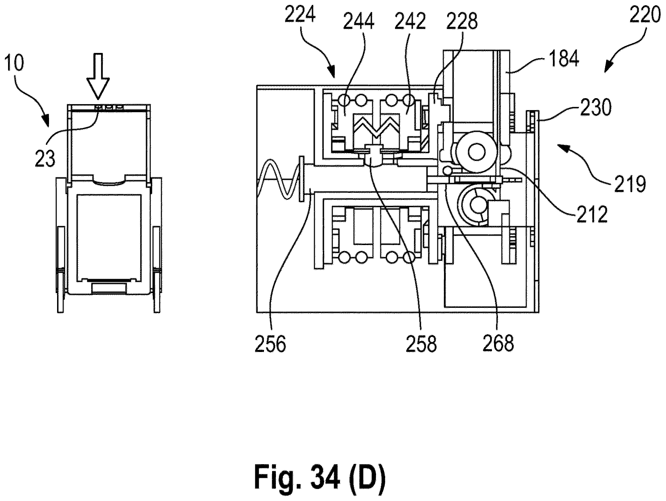

- Fig. 34(D): eine schematische Ansicht der Vorderseite des Transportwagens aus Fig. 1 und eine Längsschnittansicht des Kopplungsmechanismus in einem zweiten Kopplungszustand;

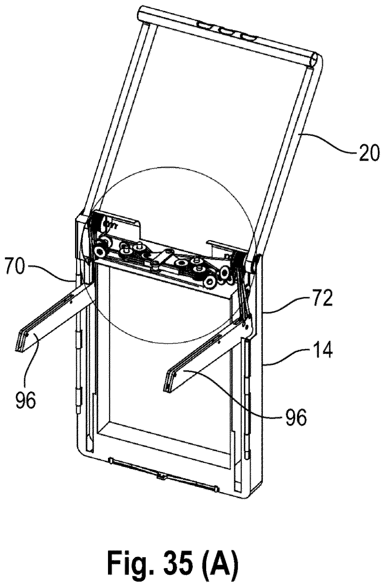

- Fig. 35(A): eine isometrische Detailansicht einer Bewegungsübertragungseinrichtung des Transportwagens aus Fig. 1 in der Basisbaugruppe des Transportwagens;

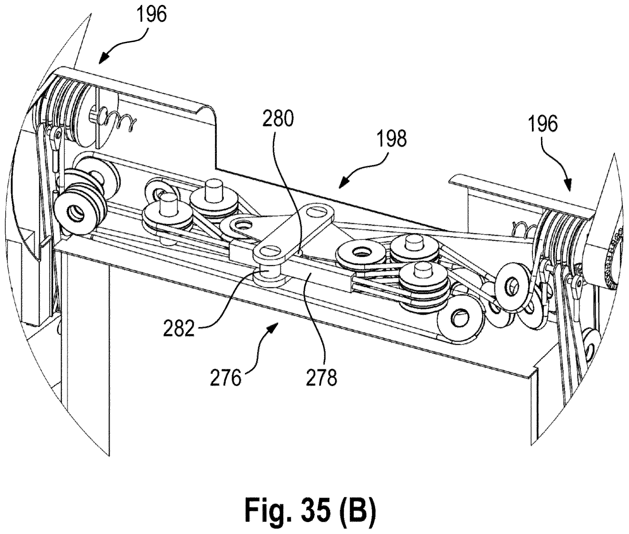

- Fig. 35(B): eine Draufsicht auf die Bewegungsübertragungseinrichtung aus Fig. 35 (A);

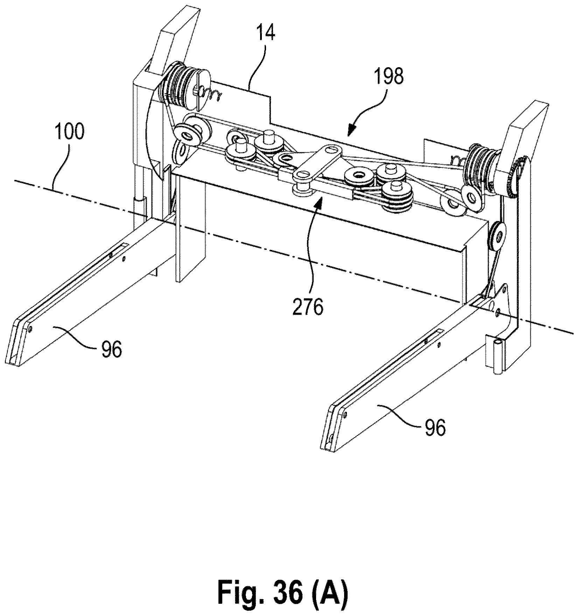

- Fig. 36(A): eine isometrische Detailansicht der Bewegungsübertragungseinrichtung aus Fig. 34 (A) ohne die Komponenten für die zweite Aktuierung;

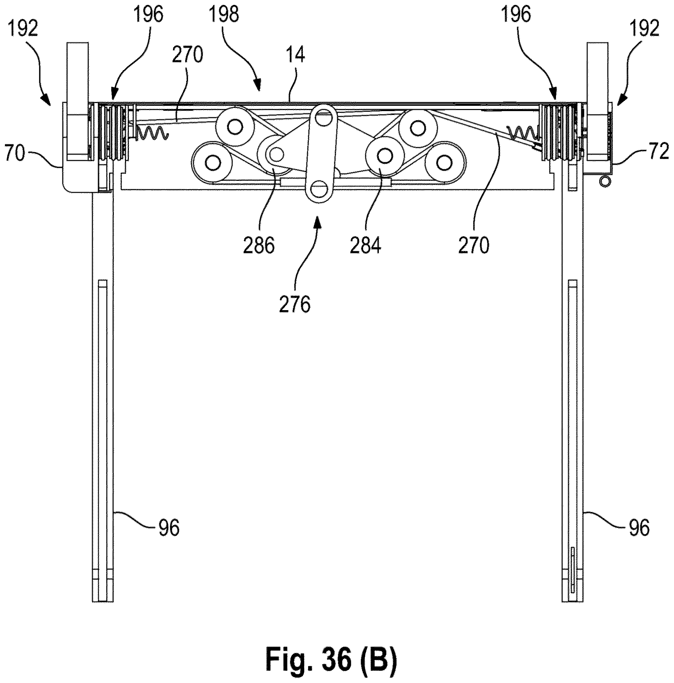

- Fig. 36(B): eine Draufsicht auf die Bewegungsübertragungseinrichtung der Fig. 36 (A);

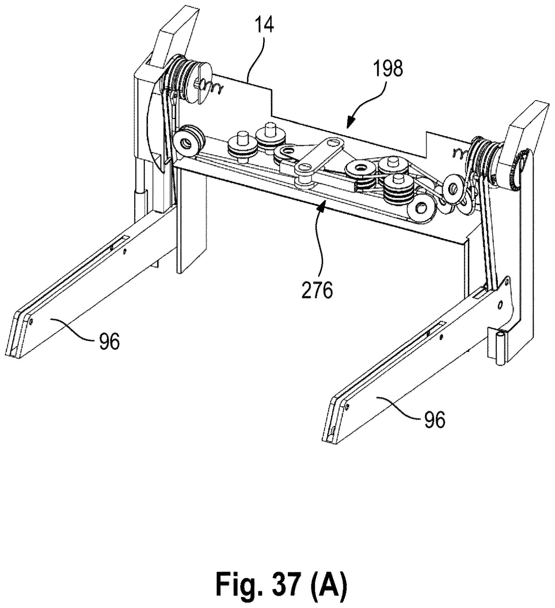

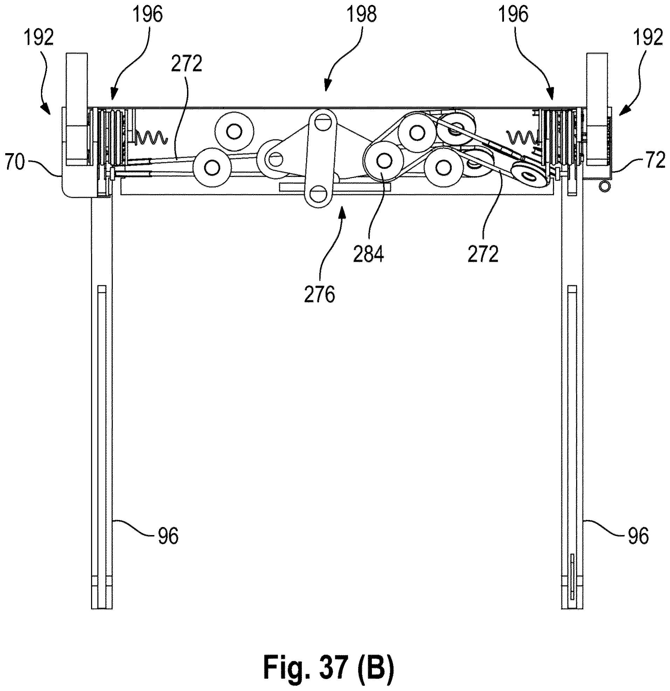

- Fig. 37(A): eine isometrische Detailansicht der Bewegungsübertragungseinrichtung aus Fig. 35 (A) ohne die Komponenten für die ersten Aktuierung;
- Fig. 37(B): eine Draufsicht auf die Bewegungsübertragungseinrichtung der Fig. 37 (A);

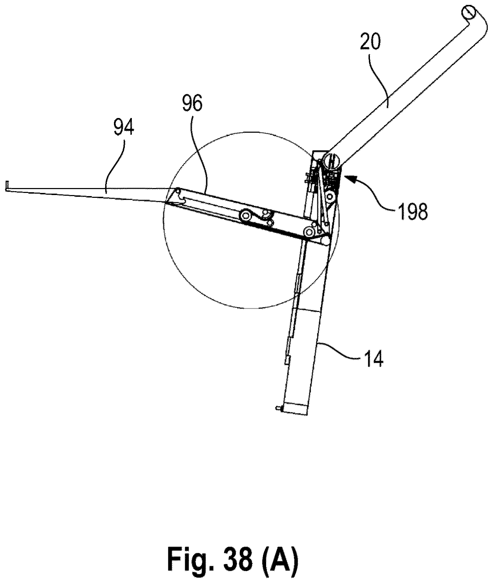

- Fig. 38(A): eine Seitenansicht der Anordnung einer ersten Aufnahme des Transportwagens aus Fig. 1 an der Basisbaugruppe des Transportwagens;

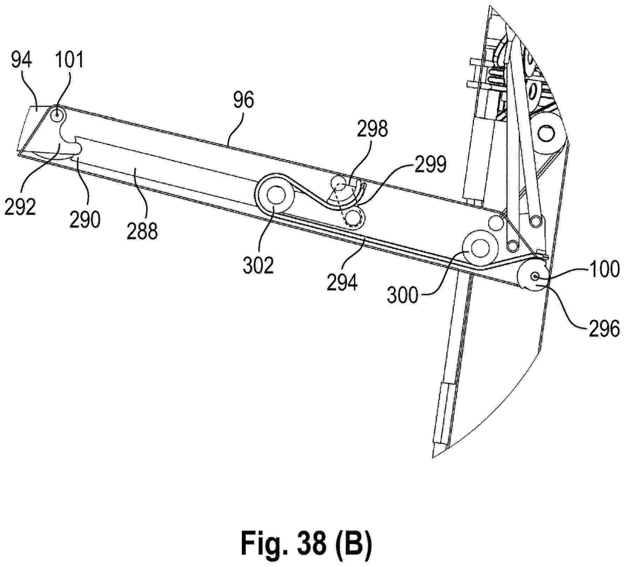

- Fig. 38(B): eine Detailansicht der Ansicht aus Fig. 38(A);

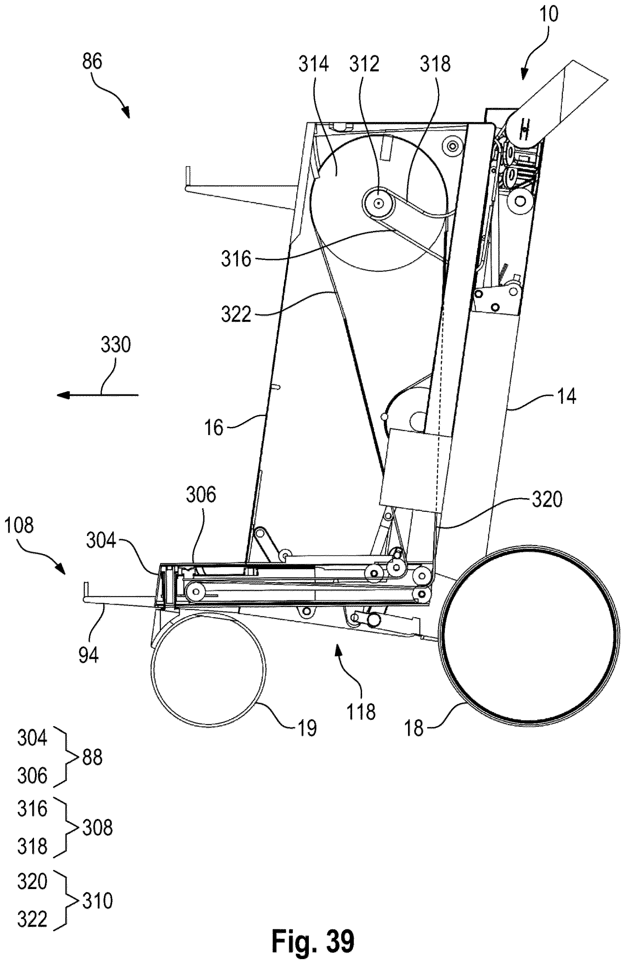

- Fig. 39: eine Schnittansicht der Seitenbaugruppe des Transportwagens aus Fig. 1 in dem ersten Betriebsmodus;

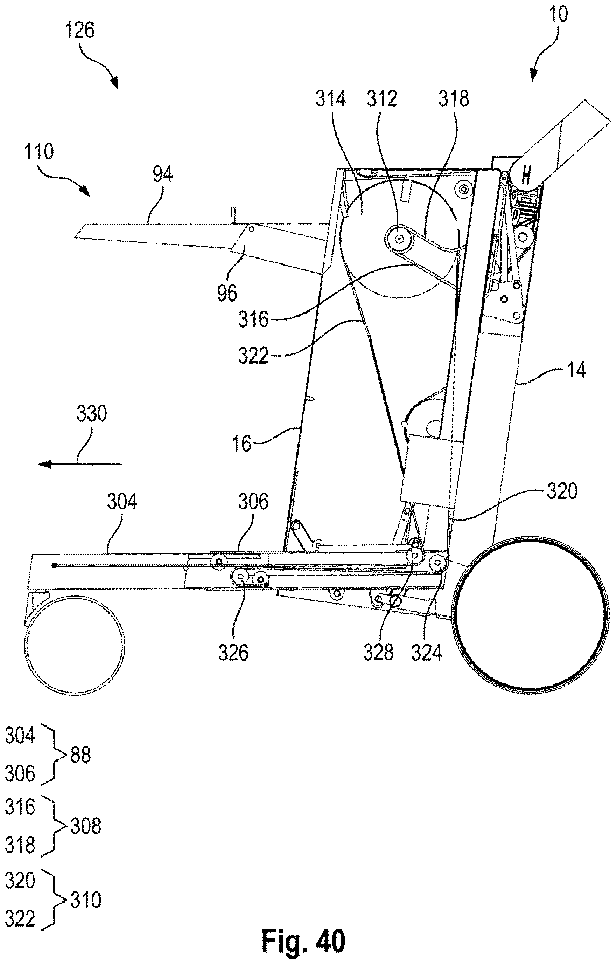

- Fig. 40: eine Schnittansicht der Seitenbaugruppe des Transportwagens aus Fig. 1 in dem zweiten Betriebsmodus;

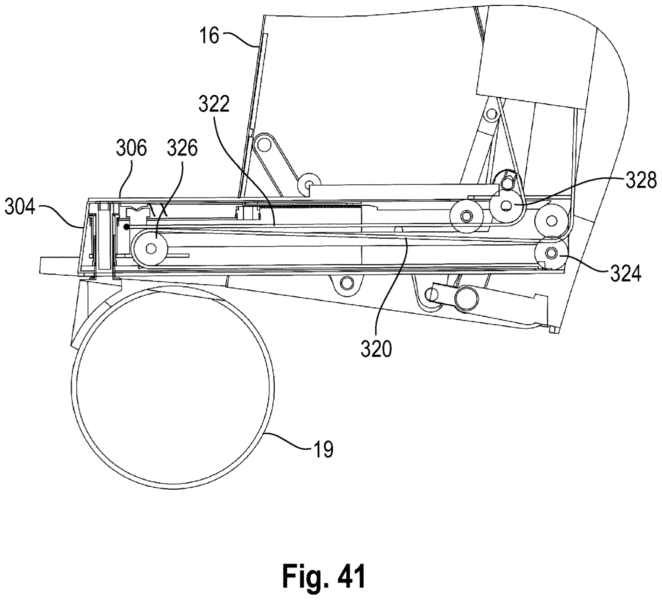

- Fig. 41: eine Detailansicht der Fig. 39;

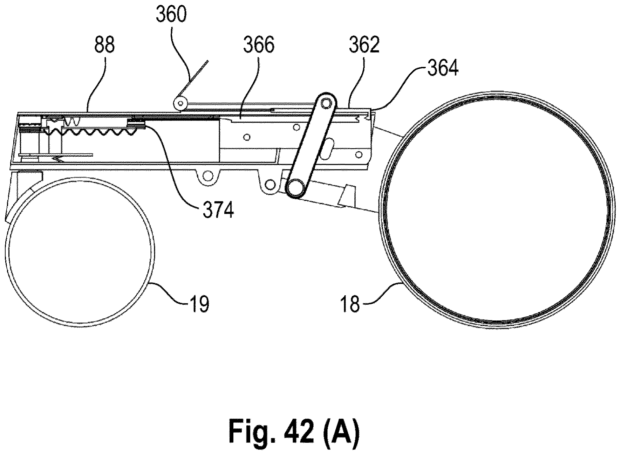

- Fig. 42(A): eine Schnittansicht eines Verbindungselements für Vorderrad und Hinterrad des Transportwagens aus Fig. 1;

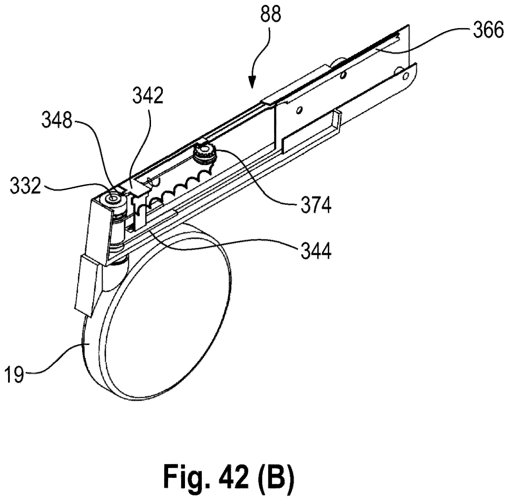

- Fig. 42(B): eine isometrische Teilansicht des Verbindungselements aus Fig. 42(A);

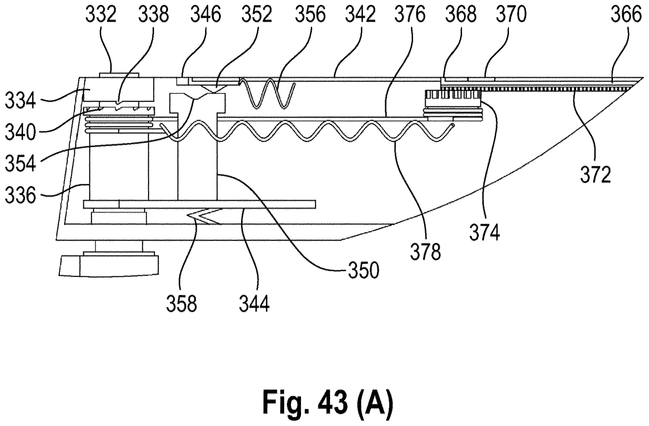

- Fig. 43(A): eine Detailansicht des Verbindungselements aus Fig. 42(A) mit dem Vorderrad in einer beliebigen Ausrichtung;

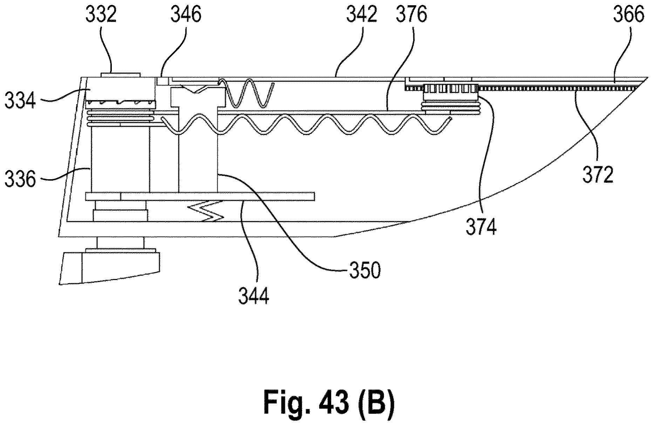

- Fig. 43(B): eine Detailansicht des Verbindungselements aus Fig. 42(A) beim Ausrichten des Vorderrads;

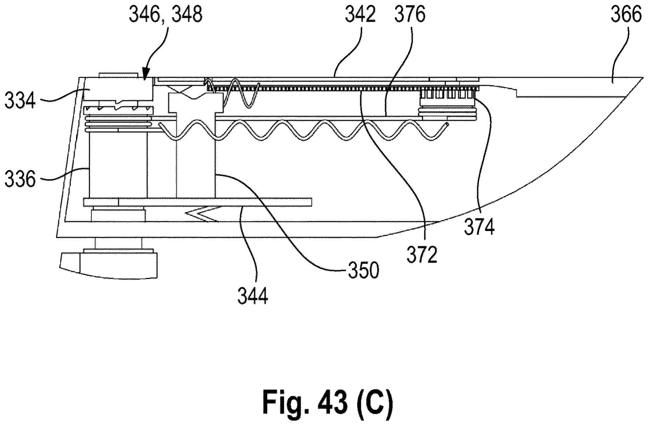

- Fig. 43(C): eine Detailansicht des Verbindungselements aus Fig. 42(A) mit dem Vorderrad in der vorbestimmten Ausrichtung;

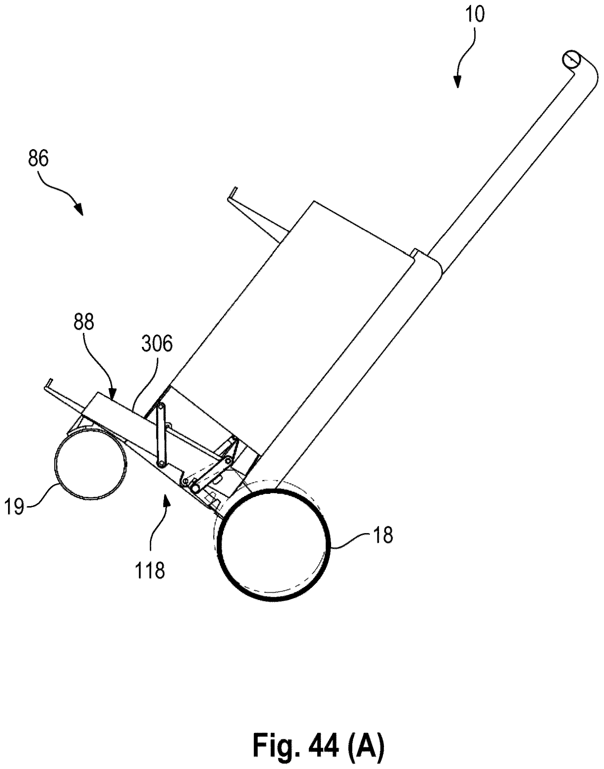

- Fig. 44(A): eine Seitenansicht des Transportwagens aus Fig. 1 in dem ersten Betriebsmodus beim Ziehen;

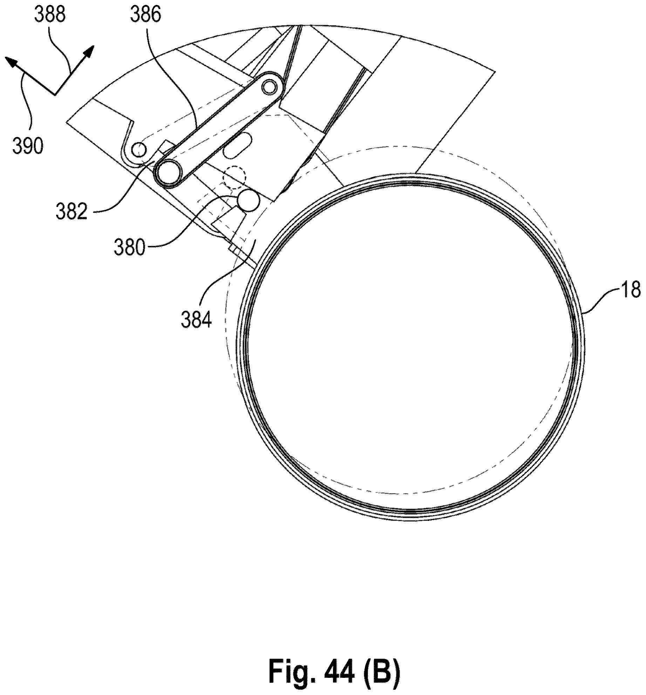

- Fig. 44(B): eine Detailansicht des Hinterrads des Transportwagens aus Fig. 44(A);

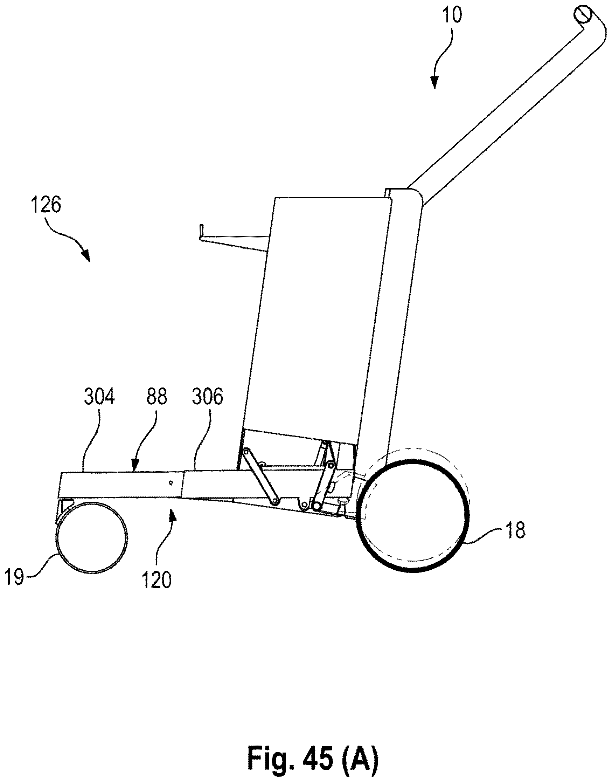

- Fig. 45(A): eine Seitenansicht des Transportwagens aus Fig. 1 in dem zweiten Betriebsmodus beim Schieben;

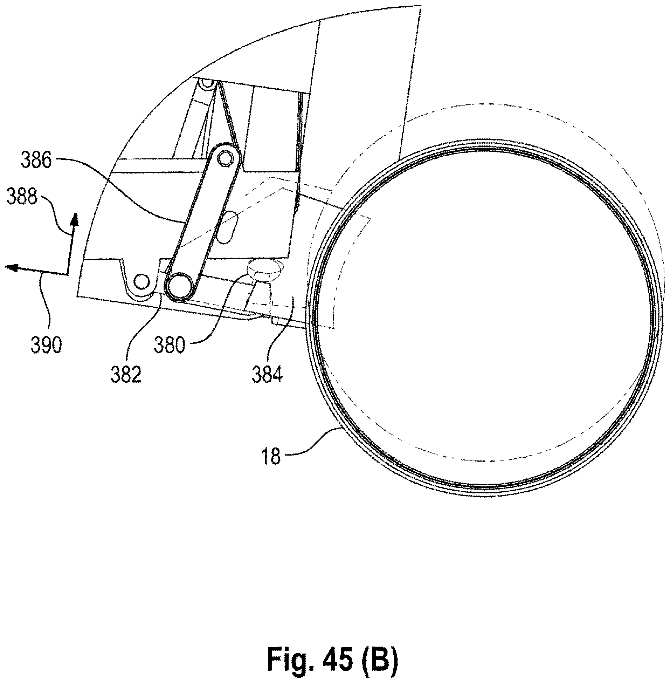

- Fig. 45(B): eine Detailansicht des Hinterrads des Transportwagens aus Fig. 45(A);

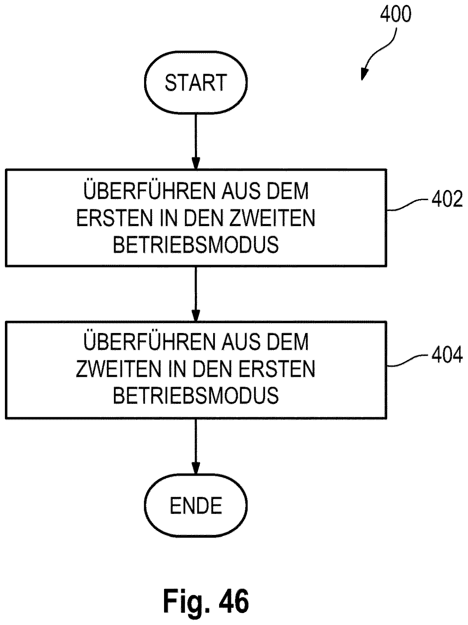

- Fig. 46: eine schematische Ansicht einer Ausführungsform eines Verfahrens zum Überführen eines Transportwagens zwischen dem ersten und dem zweiten Betriebsmodus;

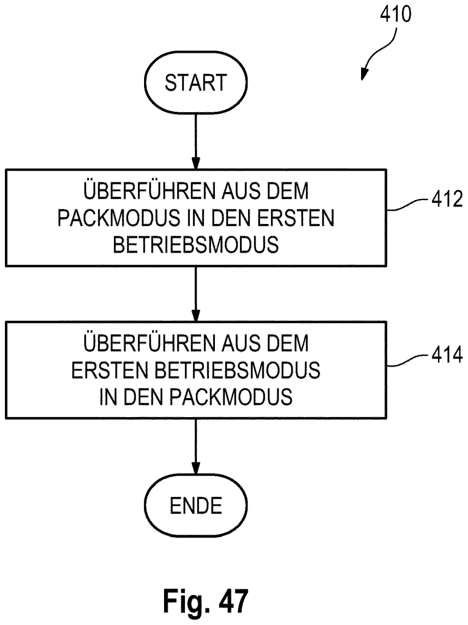

- Fig. 47: eine schematische Ansicht einer Ausführungsform eines Verfahrens zum Überführen eines Transportwagens zwischen dem Packmodus und ersten Betriebsmodus; und

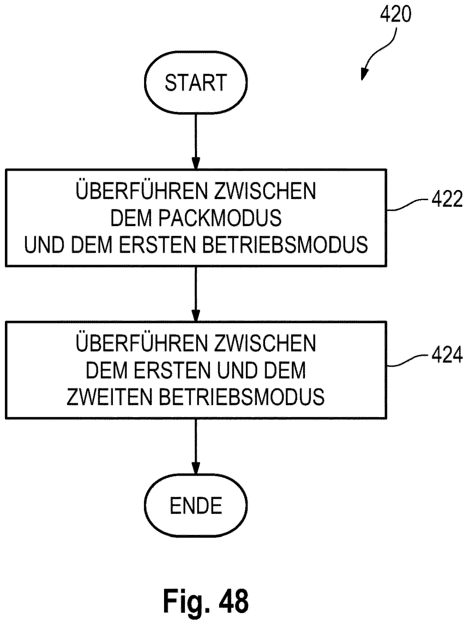

- Fig. 48: eine schematische Ansicht einer Ausführungsform eines Verfahrens zum Transformieren eines Transportwagens.

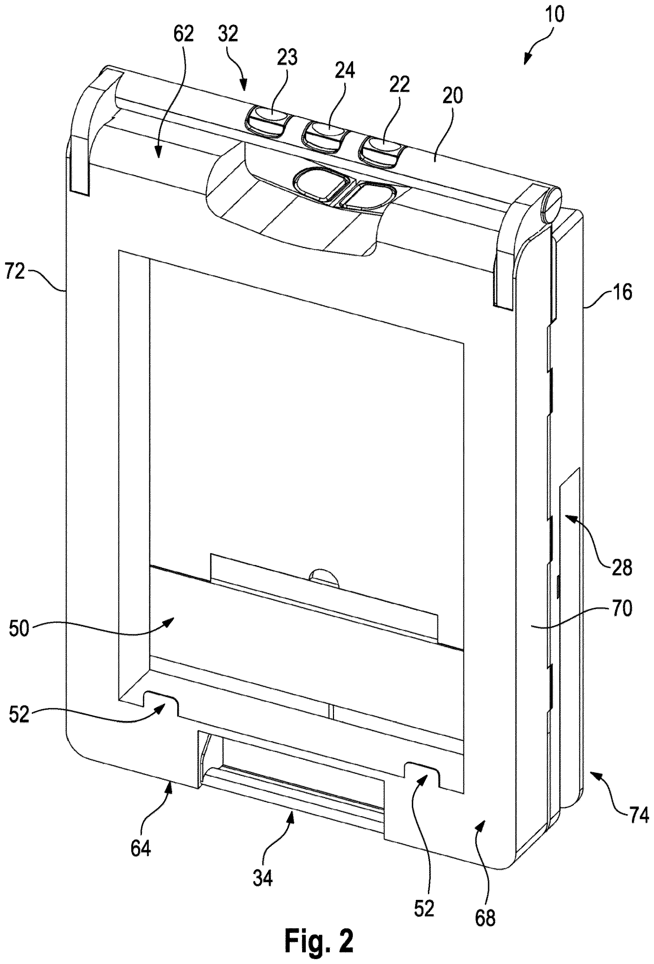

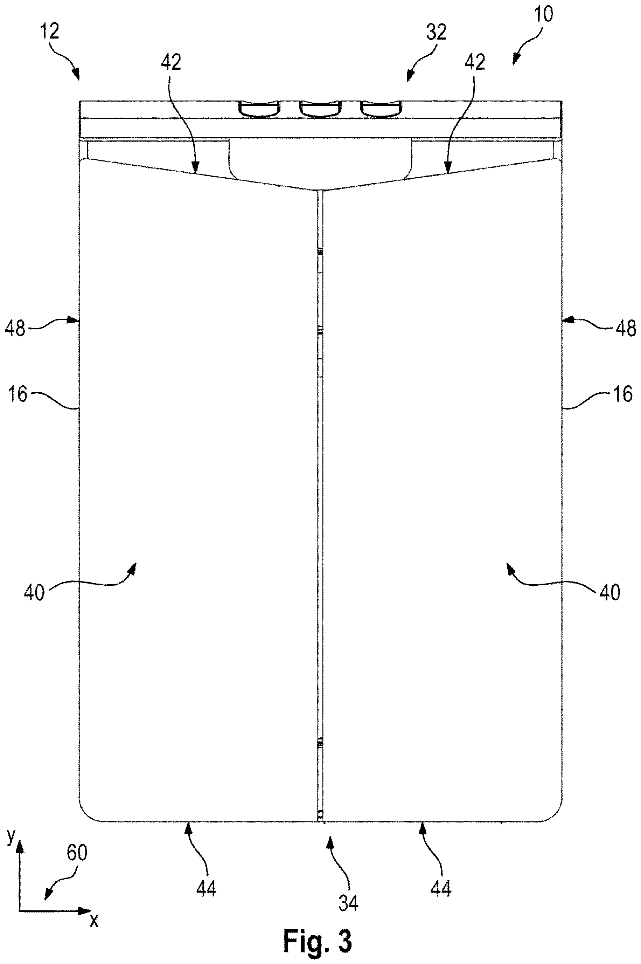

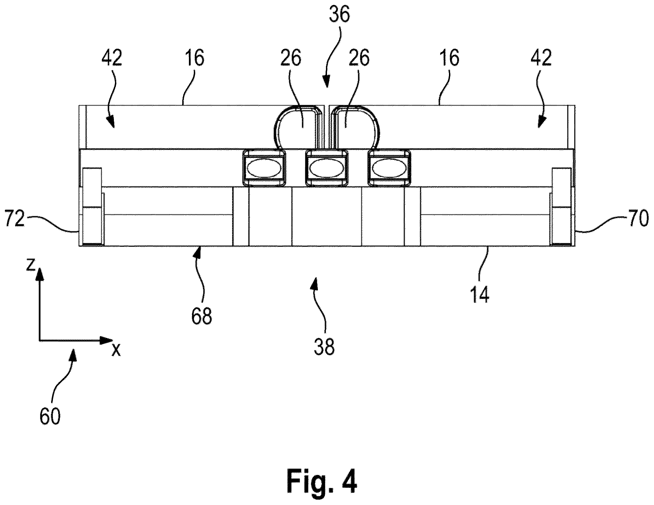

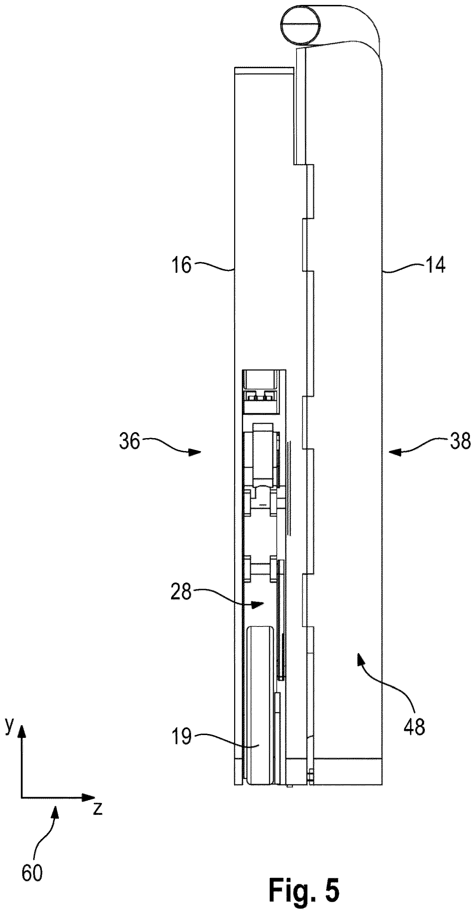

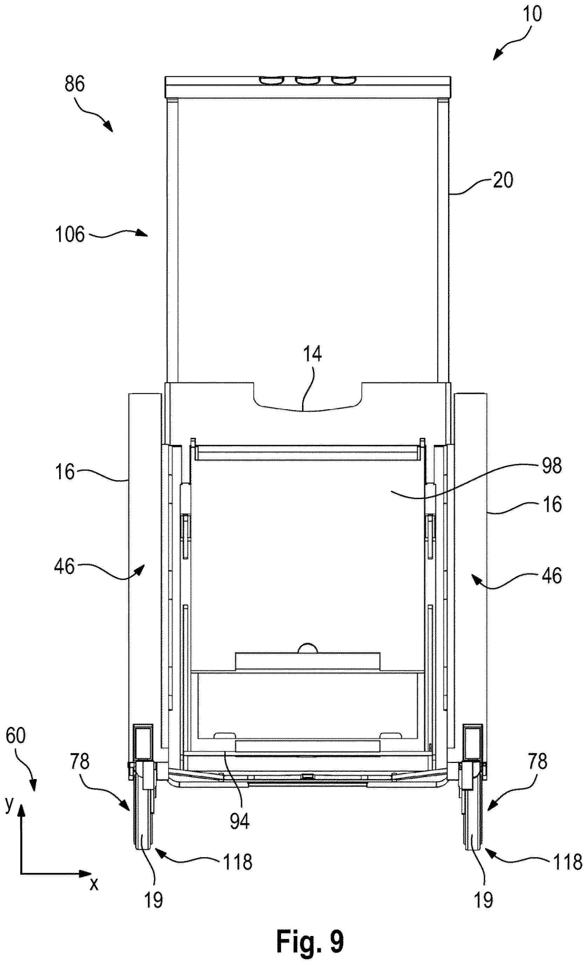

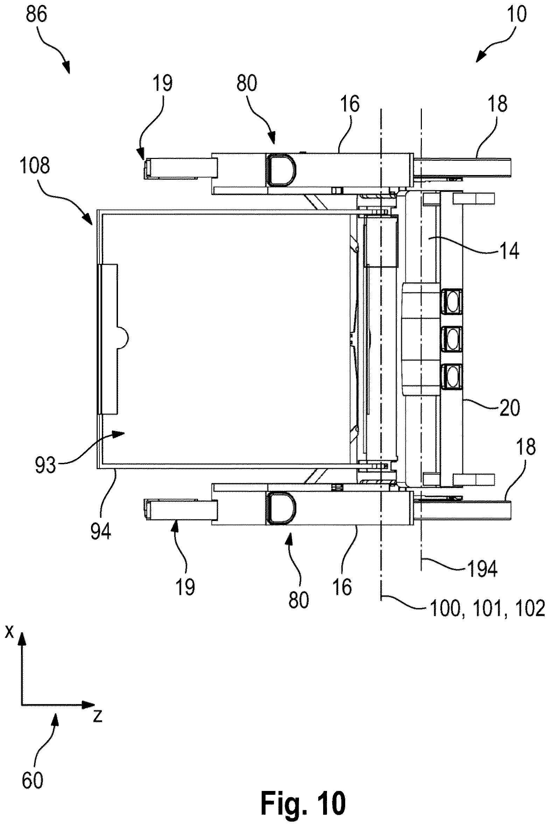

Die Figuren 1 bis 21 zeigen eine Ausführungsform eines Transportwagens 10 in verschiedenen Ansichten und Betriebsmodi. In den Figuren 1 bis 5 ist der Transportwagen 10 in einem Packmodus 12 angeordnet. Der Packmodus 12 ist besonders zum Aufbewahren bzw. Transportieren des Transportwagens 10 geeignet.

Der Transportwagen 10 weist eine Basisbaugruppe 14, zwei Seitenbaugruppen 16, zwei Hinterräder 18, zwei Vorderräder 19 und einen Griff 20 auf.

Der Transportwagen 10 weist eine Oberseite 32, eine Unterseite 34, eine Vorderseite 36 und eine Rückseite 38 auf. Die Seiten des Transportwagens 10 sind bezüglich eines kartesischen Koordinatensystems 60 im Raum angeordnet. Die y-Richtung des Koordinatensystems 60 ist vertikal ausgerichtet und entspricht somit einer vertikalen Richtung. Die y-Richtung und z-Richtung des Koordinatensystems 60 sind horizontal ausgerichtet. Die Oberseite 32 und die Unterseite 34 sind in der y-Richtung auf gegenüberliegenden Seiten des Transportwagens 10 angeordnet. Die Vorderseite 36 und die Rückseite 38 sind in der z-Richtung auf gegenüberliegenden Seiten des Transportwagens 10 angeordnet.

Die Basisbaugruppe 14 weist eine Oberseite 62, eine Unterseite 64, eine Vorderseite 66, eine Rückseite 68, eine erste Außenseite 70 und eine zweite Außenseite 72 auf. Die Oberseite 62 und die Unterseite 64 sind in der y-Richtung auf gegenüberliegenden Seiten der Basisbaugruppe 14 angeordnet. Die Vorderseite 66 und die Rückseite 68 in der z-Richtung auf gegenüberliegenden Seiten der Basisbaugruppe 14 angeordnet. Die erste Außenseite 70 und die zweite Außenseite 72 sind in der x-Richtung auf gegenüberliegenden Seiten der Basisbaugruppe 14 angeordnet

Jede Seitenbaugruppe 16 weist eine Oberseite 42, eine Unterseite 44, eine Außenseite 40, eine Innenseite 41, eine erste Randseite 46 und eine zweite Randseite 48 auf. Die Oberseite 42 und die Unterseite 44 sind in der y-Richtung auf gegenüberliegenden Seiten der jeweiligen Seitenbaugruppe 16 angeordnet. In dem Packmodus 12 sind die Außenseite 40 und die Innenseite 41 in der z-Richtung auf gegenüberliegenden Seiten der jeweiligen Seitenbaugruppe 16 angeordnet. In dem Packmodus 12 sind die erste Randseite 46 und die zweite Randseite 48 in der x-Richtung auf gegenüberliegenden Seiten der jeweiligen Seitenbaugruppe 16 angeordnet.

Die Seitenbaugruppen 16 sind an der Basisbaugruppe 14 angeordnet. Die Seitenbaugruppen 16 sind einander gegenüberliegend angeordnet. Die Seitenbaugruppen 16 sind auf gegenüberliegenden Seiten der Basisbaugruppe 14 angeordnet. Insbesondere ist je eine Seitenbaugruppe 16 an der ersten und der zweiten Außenseite 70, 72 der Basisbaugruppe 14 um je eine Schwenkachse 142 schwenkbar gelagert, so dass jede Seitenbaugruppe 16 zwischen einer zugeklappten Stellung 76, in der die Seitenbaugruppe 16 an der Basisbaugruppe anliegt, und einer aufgeklappten Stellung 80, in der sich die Seitenbaugruppe 16 von der Basisbaugruppe, vorzugsweise senkrecht, weg erstreckt.

In dem Packmodus 12 sind die Seitenbaugruppen 16 in der zugeklappten Stellung 76 angeordnet. In dem Packmodus 12 erstrecken sich die Seitenbaugruppen 16 von den Außenseiten 70, 72 entlang der Vorderseite 66 aufeinander zu. Die Seitenbaugruppen 16 sind dabei in der x-Richtung miteinander fluchtend angeordnet. Insbesondere sind die Außenseiten 40 der Seitenbaugruppen 16 parallel zueinander angeordnet und liegen in einer Ebene.

Je ein Hinterrad 18 und ein Vorderrad 19 sind an jeweils einer Seitenbaugruppe 16 angeordnet. Die beiden Räder 18, 19 sind in der entsprechenden Seitenbaugruppe 16 gemeinsam gelagert, so dass die beiden Räder 18, 19 zwischen einer eingeklappten Stellung 74, in der die beiden Räder 18, 19 in die entsprechende Seitenbaugruppe 16 eingeklappt sind, und einer ausgeklappten Stellung 78, in der die beiden Räder 18, 19 aus der entsprechenden Seitenbaugruppe 16 ausgeklappt sind, verlagert werden können.

Jede Seitenbaugruppe weist zudem ein Verbindungselement 88 auf. Das Vorderrad 19 und das Hinterrad 18 sind über das Verbindungselement 88 miteinander verbunden. Das Vorderrad 19 ist dabei an einem ersten Ende des Verbindungselements 88 und das Hinterrad 18 an einem zweiten, entgegengesetzten Ende des Verbindungselements 88 angeordnet. Das Verbindungselement 88 ist mittels eines Arms in der entsprechenden Seitenbaugruppe 16 schwenkbar gelagert, so dass das Vorderrad 19 und das Hinterrad 18 gemeinsam zwischen der eingeklappten Stellung 74 und der ausgeklappten Stellung 78 verlagerbar sind.

Jede Seitengruppe 16 weist eine Öffnung 28 auf, durch die die beiden Räder 18, 19 in die Seitenbaugruppe eingeklappt bzw. aus der Seitenbaugruppe 16 ausgeklappt werden können. Die Öffnung 28 erstreckt sich von der ersten Randseite 46 über die Unterseite 44 zur zweiten Randseite 48. In anderen Worten ist die Öffnung 28 an der Unterseite 44 der entsprechenden Seitenbaugruppe 16 angeordnet und erstreckt sich von der ersten Randseite 46 zu der zweiten Randseite 48.

Der Griff 20 ist mittels eines Mechanismus an der Basisbaugruppe 14 angeordnet, mittels dem der Griff 20 ausgezogen und eingeschoben werden kann. Insbesondere ist der Griff 20 mittels dieses Mechanismus zwischen der eingeschobenen Stellung 104 und der ausgezogenen Stellung 106 bewegbar.

Der Griff 20 weist eine Griffstange 182 und an den Enden der Griffstange 182 je eine Griffverlängerung 184 auf. Die Griffstange 182 ist dazu vorgesehen, dass ein Benutzer des Transportwagens den Griff 20 an der Griffstange 182 greifen kann, um den Transportwagen zu Bewegen. Die Griffstange 182 erstreckt sich in der x-Richtung und jede Griffverlängerung 184 erstreckt sich in der y-Richtung. Die Griffverlängerungen sind somit parallel zueinander angeordnet.

Die Basisbaugruppe 14 weist auf jeder Außenseite 70, 72 einen Einschubkasten 186 auf, in dem je eine der Griffverlängerungen 184 anordenbar ist. Dazu erstreckt sich jeder Einschubkasten 186 ebenfalls in der y-Richtung. Insbesondere kann die Griffverlängerung 184 in den entsprechenden Einschubkasten 186 eingeschoben werden bzw. aus dem Einschubkasten 186 ausgezogen werden. Auf diese Weise ist der Griff zwischen der eingeschobenen Stellung 104 und der ausgezogenen Stellung 106 bewegbar. Die Griffverlängerung 184, die in den Einschubkasten 186 auf der ersten Außenseite 70 angeordnet ist, wird auch als erste Griffverlängerung bezeichnet. Die Griffverlängerung 184, die in den Einschubkasten 186 auf der zweiten Außenseite 72 angeordnet ist, wird auch als zweite Griffverlängerung bezeichnet.

In der ausgezogenen Stellung 106 ist der Griff 20 des Weiteren um eine Schwenkachse 194 schwenkbar an der Basisbaugruppe gelagert, die parallel zu der x-Richtung verläuft.

Der Transportwagen 10 weist des Weiteren ein erstes Betätigungselement 22, ein zweites Betätigungselement 23 und eine drittes Betätigungselement 24 auf.

Durch eine Betätigung des ersten Betätigungselements 22 kann der Transportwagen 10 von dem ersten Betriebsmodus 86 in den zweiten Betriebsmodus 126 überführt werden. Die Aktuierung zum Überführen des Transportwagens von dem ersten Betriebsmodus 86 in den zweiten Betriebsmodus 126 erfolgt bei Betätigung des ersten Betätigungselements 22 durch eine Schwenkbewegung des Griffs 20 um die Schwenkachse 194. Die Richtung der Schwenkbewegung ist vorzugsweise nach unten gerichtet.

Durch eine Betätigung des dritten Betätigungselements 23 kann der Transportwagen 10 von dem zweiten Betriebsmodus 126 in den ersten Betriebsmodus 86 überführt werden. Die Aktuierung zum Überführen des Transportwagens von dem zweiten Betriebsmodus 126 in den ersten Betriebsmodus 86 erfolgt bei Betätigung des zweiten Betätigungselements 23 durch eine Schwenkbewegung des Griffs 20 um die Schwenkachse 194. Die Richtung der Schwenkbewegung ist vorzugsweise nach unten gerichtet.

Durch eine Betätigung des dritten Betätigungselements 24 kann der Griff 20 verstellt werden. Der Griff 20 kann beispielsweise bei einer Betätigung des dritten Betätigungselements 24 aus der Basisbaugruppe 14 in eine ausgezogene Stellung 106 ausgezogen werden oder in die Basisbaugruppe zurück in die eingezogene Stellung eingeschoben werden. Der Griff 20 kann auch bei Betätigung des dritten Betätigungselements 24 in der ausgezogenen Stellung 108 relativ zu der Basisbaugruppe 14 um die Schwenkachse 194 verschwenkt werden. In dem Packmodus 12 ist der Griff 20 in einer eingeschobenen Stellung 104 und nicht verschwenkt angeordnet.

Der Transportwagen 10 weist des Weiteren zwei vierte Betätigungselemente 26 auf. Je eines der vierten Betätigungselemente 26 ist jeweils an einer der Seitenbaugruppen 16 angeordnet. Durch eine Betätigung eines der vierten Betätigungselemente 26 kann eine Arretierung der entsprechenden Seitenbaugruppe 16 gelöst werden, so dass die Seitenbaugruppe 16 schwenkbar ist.

Die Basisbaugruppe 14 weist eine Aussparung 50 auf, die auf der Rückseite 68 der Basisbaugruppe 14 angeordnet ist. In der Aussparung 50 ist mindestens eine zusammengeklappte Transportbox anordenbar. Vorzugsweise können in der Aussparung 50 auch zwei zusammengeklappte Transportboxen angeordnet werden. Auf der der Unterseite 64 zugewandten Seite der Aussparung 50 weist die Basisbaugruppe 14 zwei Vorsprünge 52 auf. Die Vorsprünge 52 dienen dazu, die mindestens eine Transportbox in der Aussparung 50 zu halten.

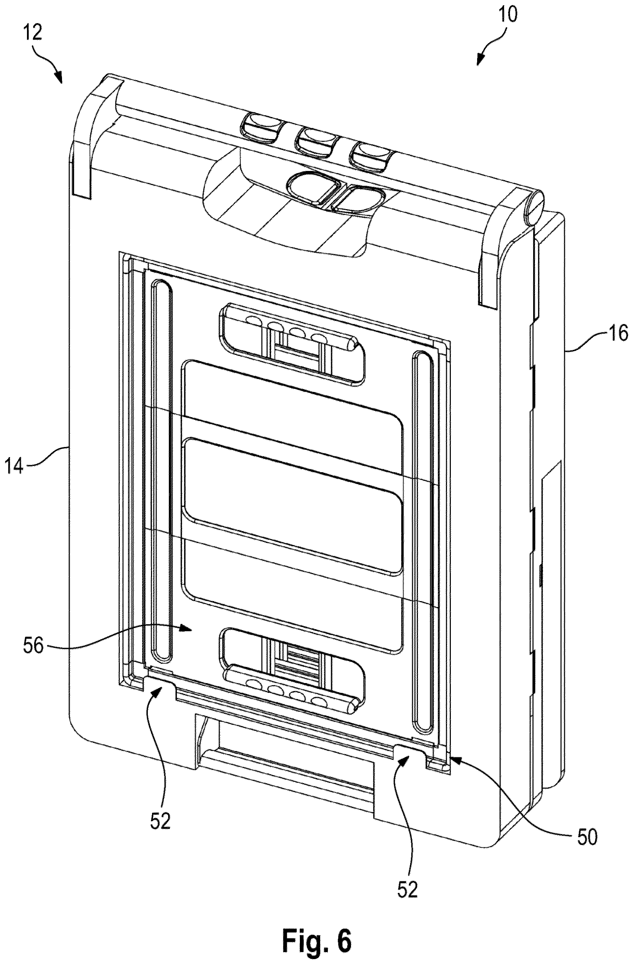

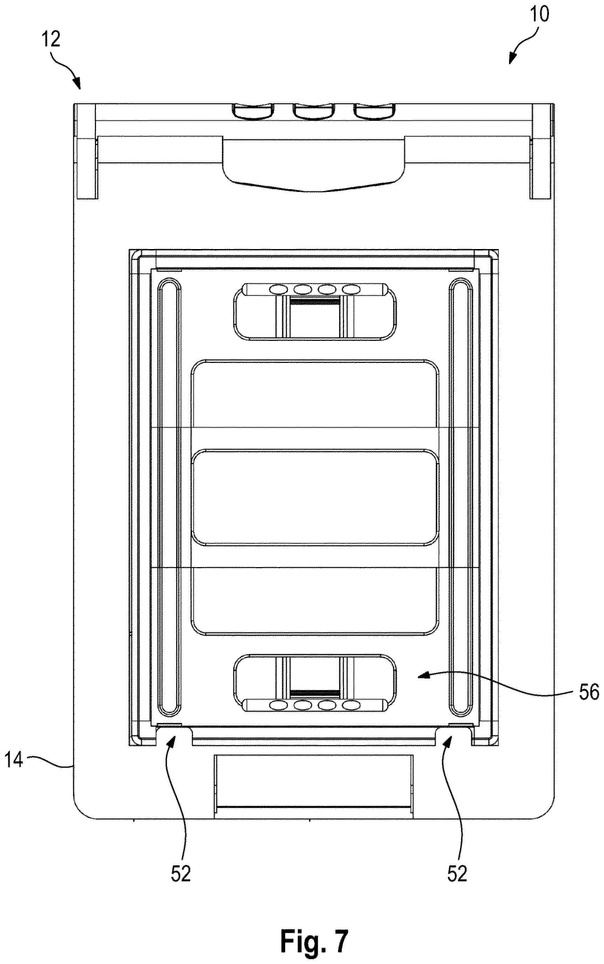

Die Figuren 6 und 7 zeigen die Rückseite des Transportwagens 10 aus den Fig. 1 bis 5, wobei in der Aussparung 50 der Basisbaugruppe 14 eine Transportbox 56 angeordnet ist. Die Transportbox 56 ist zusammengeklappt. Die Transportbox 56 ist in der Aussparung 50 hochkant angeordnet. Die Vorsprünge 52' und 52" sind dazu ausgebildet, die Transportbox 56 in der Aussparung 50 zu halten.

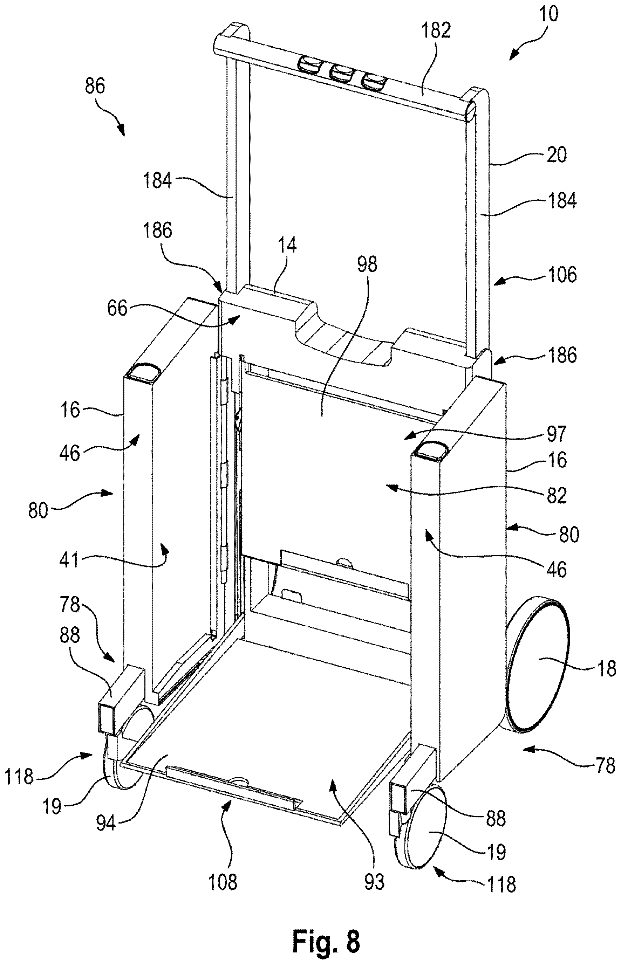

Figuren 8 bis 12 zeigen den Transportwagen 10 aus Fig. 1 in einem ersten Betriebsmodus 86. Der erste Betriebsmodus 86 eignet sich besonders zum Transportieren von Transportboxen auf dem Transportwagen bzw. generell zum Ziehen des Transportwagens 10 an dem Griff 20. Der erste Betriebsmodus 86 kann daher auch als Nachziehmodus bezeichnet werden.

In dem ersten Betriebsmodus 86 sind die Seitenbaugruppen 16 jeweils in einer aufgeklappten Stellung 80 angeordnet. In der aufgeklappten Stellung 80 erstrecken sich die Seitenbaugruppe 16 von der Basisbaugruppe 14, vorzugsweise senkrecht, weg erstreckt. Die Seitenbaugruppen 16 sind dabei in der z-Richtung parallel zueinander angeordnet. Insbesondere sind die Außenseiten 40 der Seitenbaugruppen 16 parallel zueinander angeordnet und liegen nicht in einer Ebene.

In dem ersten Betriebsmodus 86 sind die Außenseite 40 und die Innenseite 41 jeder Seitenbaugruppe 16 in der x-Richtung auf gegenüberliegenden Seiten der jeweiligen Seitenbaugruppe 16 angeordnet. In dem ersten Betriebsmodus sind die erste Randseite 46 und die zweite Randseite 48 in der z-Richtung auf gegenüberliegenden Seiten der jeweiligen Seitenbaugruppe 16 angeordnet.

In dem ersten Betriebsmodus 86 sind die Vorderräder 19 und Hinterräder 18 jeweils in der ausgeklappten Stellung 78 angeordnet. In dem ersten Betriebsmodus 86 ist der Griff 20 in der ausgezogenen Stellung 106 angeordnet.

Der Transportwagen 10 weist des Weiteren eine erste Aufnahme 93 für eine Transportbox auf. Die erste Aufnahme 93 wird durch ein erstes Aufnahmeelement 94 gebildet. Das Aufnahmeelement 94 kann beispielsweise eine Stellfläche oder Auflage für eine Transportbox sein. Das Aufnahmeelement 94 kann dazu plattenförmig ausgebildet sein. Das Aufnahmeelement 94 weist an seinem Rand eine Erhebung auf, mittels der die Transportboxen in der Aufnahme 93 gehalten werden können. Die erste Aufnahme 93 ist zwischen den Seitenbaugruppen 16 angeordnet.

Das Aufnahmeelement 94 ist über zwei Arme 96 an der Basisbaugruppe 14 angeordnet. Das Aufnahmeelement 94 ist zwischen den Armen 96 angeordnet. Die Arme 96 sind auf der Vorderseite 66 der Basisbaugruppe 14 angeordnet. Jeder erste Arm 96 ist an der Basisbaugruppe 14 um eine Schwenkachse 100 schwenkbar gelagert. Diese Schwenkachsen 100 verlaufen parallel zu der x-Richtung. Die Schwenkachsen 100 der Arme 96 sind insbesondere fluchtend zueinander angeordnet. Die Arme 96 weisen somit eine gemeinsame Schwenkachse auf. Diese gemeinsame Schwenkachse kann auch als erste Schwenkachse 100 bezeichnet werden. Der Lagerungspunkt der ersten Schwenkachse 100 ist an dem ersten Ende des jeweiligen ersten Arms 96 angeordnet. Das Aufnahmeelement 94 ist an einem zweiten, entgegengesetzten Ende des jeweiligen ersten Arms 96 angeordnet.

Mittels der ersten Arme 96 ist die erste Aufnahme 93 zwischen einer Transportposition 108 und einer Ladeposition 110 verschwenkbar. In der Transportposition 108 ist die erste Aufnahme 93 in der y-Richtung tiefer, insbesondere näher an der Unterseite 34 des Transportwagens 10, angeordnet als in der Ladeposition 110.

Das Aufnahmeelement 94 ist an den beiden Armen 96 um eine zweite Schwenkachse 101 schwenkbar gelagert. Die zweite Schenkachse 101 ist parallel zu der ersten Schwenkachse 100 angeordnet. Der Lagerungspunkt der zweiten Schwenkachse 100 ist an dem zweiten Ende des jeweiligen ersten Arms 96 angeordnet. Eine Schwenkbewegung des Aufnahmeelements 94 um die zweite Schwenkachse 101 ist mit der Schwenkbewegung der Arme 96 um die erste Schwenkachse 100 gekoppelt, so dass das Aufnahmeelement 94 in der Ladeposition 110 und der Transportposition 108 horizontal ausgerichtet ist.

Der Transportwagen 10 weist des Weiteren eine zweite Aufnahme 97 für eine Transportbox auf. Die zweite Aufnahme 97 wird durch ein zweites Aufnahmeelement 98 gebildet. Das Aufnahmeelement 98 kann beispielsweise eine Stellfläche oder Auflage für eine Transportbox sein. Das Aufnahmeelement 98 kann dazu plattenförmig ausgebildet sein. Das Aufnahmeelement 98 weist an seinem Rand eine Erhebung auf, mittels der die Transportboxen in der Aufnahme 97 gehalten werden können. Die zweite Aufnahme 97 ist zwischen den Seitenbaugruppen 16 angeordnet.

Das zweite Aufnahmeelement 98 ist an der Basisbaugruppe 14 um eine Schwenkachse 102 schwenkbar gelagert. Das Aufnahmeelement 98 ist dabei zwischen einer vertikalen Stellung 82 und einer horizontalen Stellung 84 manuell verlagerbar.

Das erste Aufnahmeelement 94 kann auch ebenfalls manuell zwischen einer vertikalen Stellung und einer horizontalen Stellung verlagert werden. Im Packmodus 12 bzw. zum Transformieren in den Packmodus 12 ist das erste Aufnahmeelement 94 in der vertikalen Stellung angeordnet. In der ersten Betriebsposition 86 sowie in der zweiten Betriebsposition 126 ist das Aufnahmeelement 94 zum Transportieren einer Transportbox in der horizontalen Stellung angeordnet. In der horizontalen Stellung ist das Aufnahmeelement 94 mit der Schwenkbeweung der Arme 96 gekoppelt, um das Aufnahmeelement 94 beim Überführen zwischen der Ladeposition 110 und der Transportposition 108 in der horizontalen Stellung zu halten.

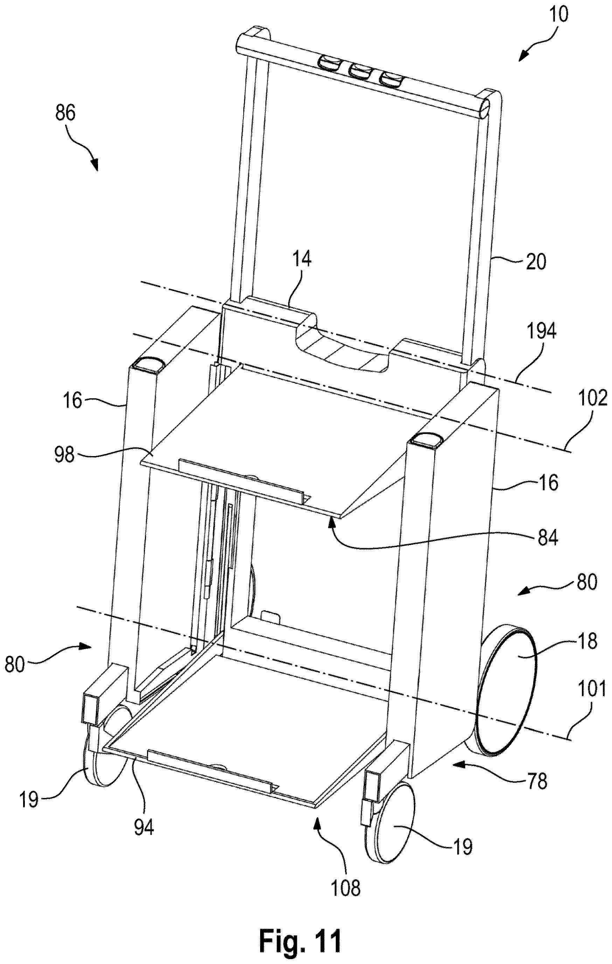

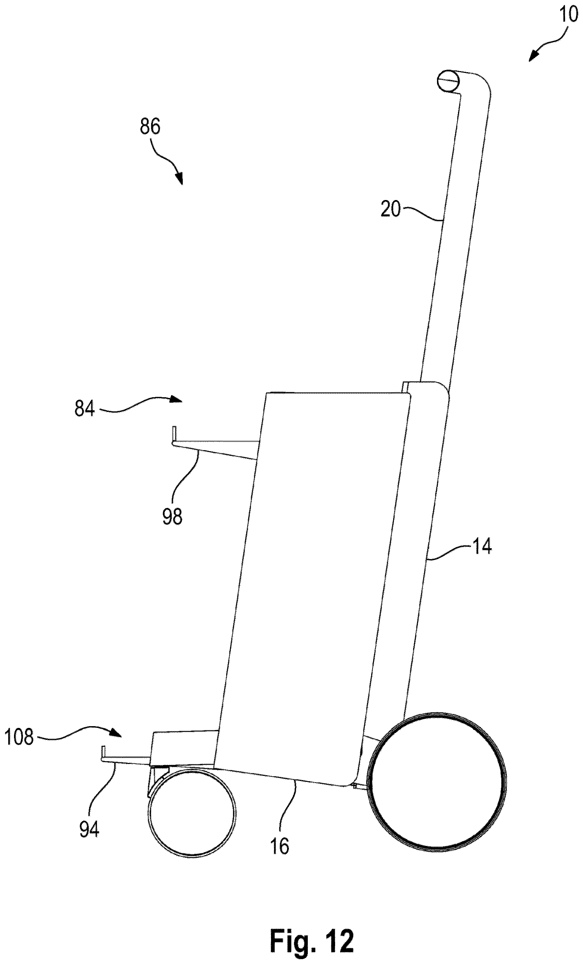

In den Figuren 8 bis 10 ist die zweite Aufnahme 97 in der vertikalen Stellung 82 angeordnet. In den Figuren 11 und 12 ist die zweite Aufnahme 97 in der horizontalen Stellung 84 angeordnet. In der horizontalen Stellung 84 kann in der Aufnahme 97 eine Transportbox aufgenommen werden.

In der Transportposition 108 ist die erste Aufnahme 93 in der y-Richtung unterhalb der zweiten Aufnahme angeordnet. Dabei ist die die erste Aufnahme 93 näher an der Unterseite 34 angeordnet als die zweite Aufnahme. In anderen Worten sind die erste Aufnahme 93 und die zweite Aufnahme 97 übereinander angeordnet.

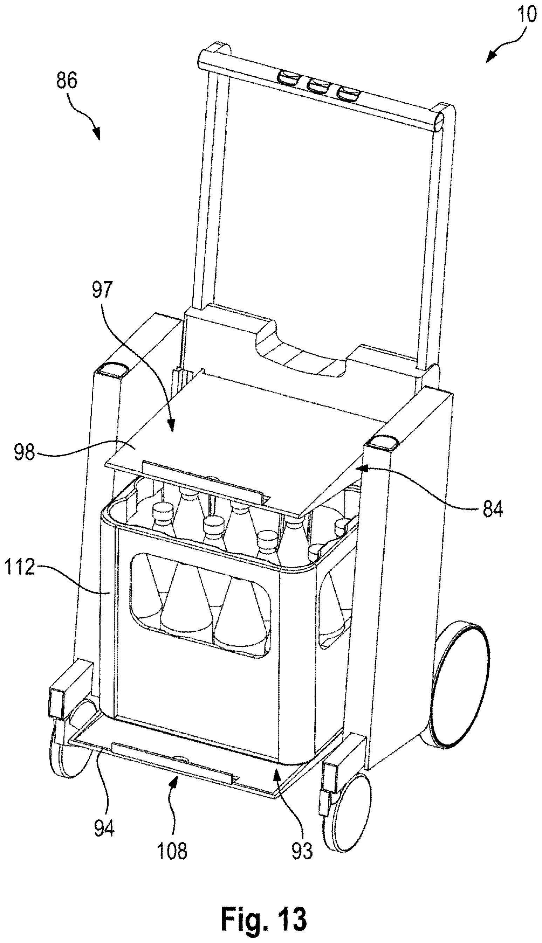

Fig. 13 zeigt den Transportwagen 10 entsprechend der Figuren 8 bis 12, wobei auf der Stellfläche der ersten Aufnahme 93 ein Kasten 112 mit Flaschen angeordnet ist.

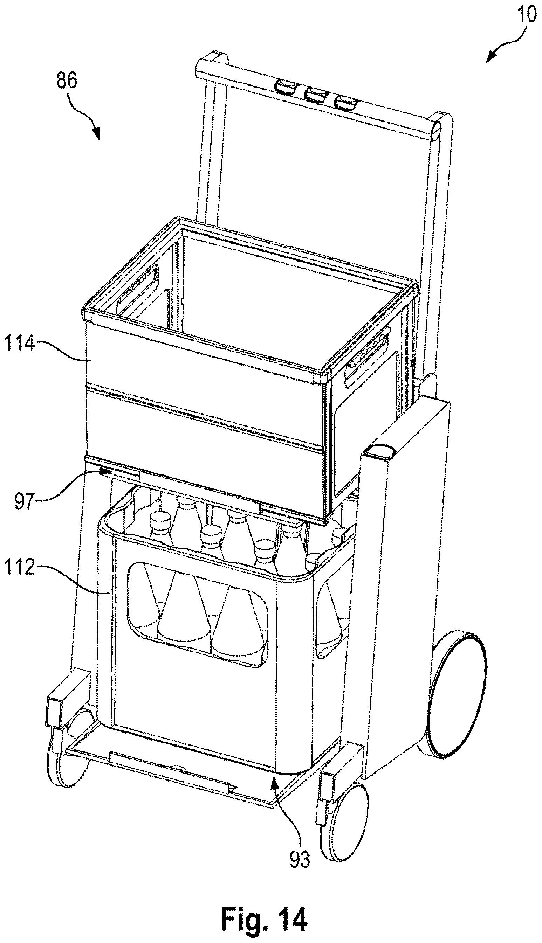

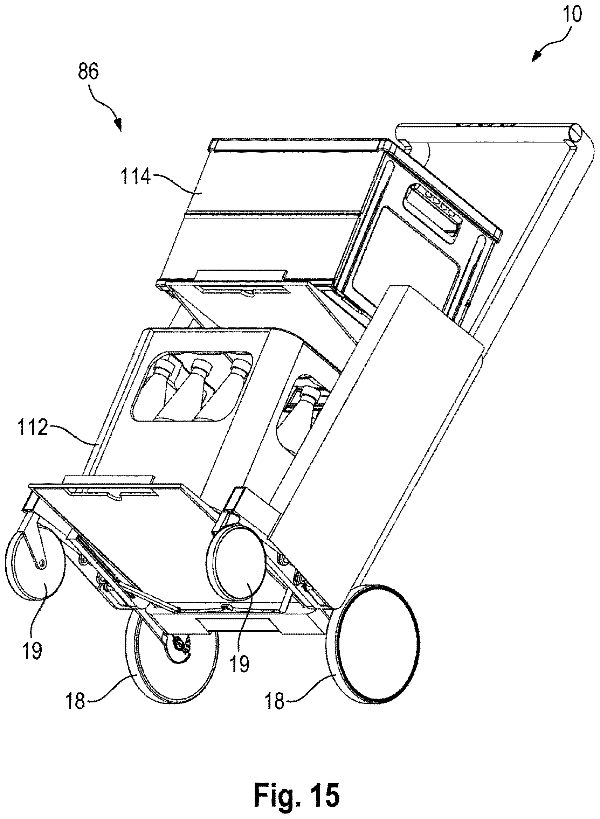

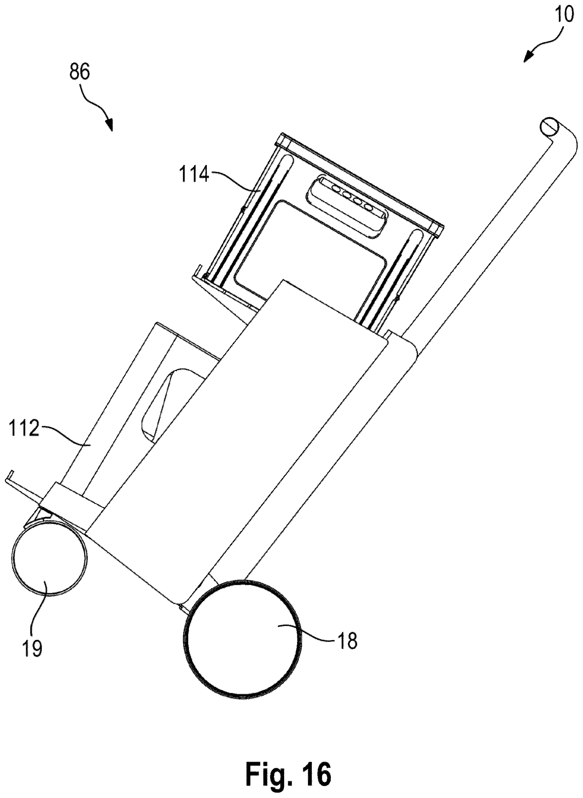

Die Figuren 14 bis 16 zeigen den Transportwagen 10 entsprechend der Fig. 13, wobei auf der Stellfläche der zweiten Aufnahme 97 eine Transportbox 114 angeordnet ist. Zum Ziehen des Transportwagens 10 wird der Transportwagen 10, wie in den Figuren 15 und 16 dargestellt, gegenüber einer Horizontalen um eine Drehachse der Räder 18 gekippt, so dass die Vorderräder 19 vom Boden gelöst werden und der Transportwagen 10 gezogen werden kann.

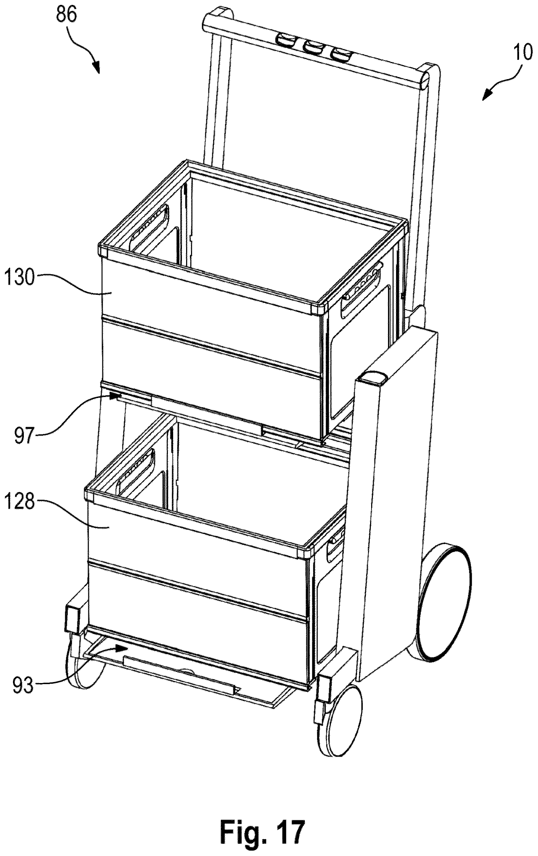

Fig. 17 zeigt den Transportwagen 10 entsprechend der Figuren 8 bis 12, wobei auf der Stellfläche der ersten Aufnahme 93 eine erste Transportbox 128 und auf der Stellfläche der zweiten Aufnahme 97 eine zweite Transportbox 130 angeordnet ist.

Die Figuren 18 bis 21 zeigen den Transportwagen 10 in einem zweiten Betriebsmodus 126. Der zweite Betriebsmodus 126 eignet sich besonders zum Beladen von Transportboxen auf dem Transportwagen bzw. generell zum Schieben des Transportwagens 10 über den Griff 20. Der zweite Betriebsmodus 126 kann daher auch als Schiebemodus bezeichnet werden.

In dem zweiten Betriebsmodus 126 ist der Griff 20 in der ausgezogenen Stellung 106 angeordnet. Der Griff 20 ist in der ausgezogenen Stellung 106 relativ zu der Basisbaugruppe 14 um eine Schwenkachse 194 schwenkbar. Der Griff 20 ist gegenüber der Ausrichtung in dem ersten Betriebsmodus 86, in der der Griff 20 parallel zu der y-Richtung erstreckt, in der z-y Ebene um die Schwenkachse 194 in Richtung der den Seitenbaugruppen 16 abgewandten Richtung verschwenkt.

In dem zweiten Betriebsmodus 126 ist jede Seitenbaugruppe 16 in der aufgeklappten Stellung 80 angeordnet. In dem zweiten Betriebsmodus 126 ist die erste Aufnahme 93 in der Ladeposition 110 angeordnet. In dem zweiten Betriebsmodus 126 ist jedes Vorderrad 19 und Hinterrad 18 weiterhin in der ausgeklappten Stellung 78 angeordnet.

Jedes Vorderrad 19 ist relativ zu dem entsprechenden Hinterrad 18 translatorisch zwischen einer eingefahrenen Stellung 118 und einer ausgefahrenen Stellung 120 verlagerbar. In dem ersten Betriebszustand ist das Vorderrad 19 in der eingefahrenen Stellung 118 angeordnet. In dem zweiten Betriebszustand 126 ist das Vorderrad 19 in der ausgefahrenen Stellung 120 angeordnet. Die translatorische Bewegung zum Verlagern des Vorderrads 19 ist mit der Schwenkbewegung der ersten Aufnahme 93 um die erste Schwenkachse 100 gekoppelt.

Die Länge des Verbindungselements 88 ist verstellbar. Dazu weist das Verbindungselement 88 ein erstes Teilstück und ein zweites Teilstück auf, die miteinander gekoppelt sind und relativ zueinander verschiebbar sind. Insbesondere kann das zweite Teilstück in das erste Teilstück eingeschoben und aus diesem herausgezogen werden. Das Vorderrad 19 ist an dem ersten Teilstück angeordnet und das Hinterrad ist an dem zweiten Teilstück angeordnet. Durch eine Änderung der Länge des Verbindungselements 88 sind das Vorderrad 19 und das Hinterrad 18 relativ zueinander zwischen der eingefahrenen Stellung 118 und der ausgefahrenen Stellung 120 bewegbar.

In der Ladeposition 110 sind die erste Aufnahme 93 und die zweite Aufnahme 97 bezüglich der y-Richtung auf gleicher Höhe angeordnet. In der x-Richtung sind die erste Aufnahme 93 und die zweite Aufnahme 97 nebeneinander angeordnet.

In der ersten Aufnahme 93 kann eine erste Transportbox 128 angeordnet werden. In der zweiten Aufnahme 97 kann eine zweite Transportbox 130 angeordnet werden.

In den Figuren 22 bis 29 ist dargestellt, wie der Transportwagen 10 zwischen dem Packmodus 12 und dem ersten Betriebsmodus 86 überführt wird. In den Fig. 22 bis 25 ist dargestellt, wie der Transportwagen 10 von dem Packmodus 12 in den ersten Betriebsmodus 86 überführt wird. In den Fig. 26 bis 29 ist dargestellt, wie der Transportwagen 10 von dem ersten Betriebsmodus 86 in den Packmodus 12 überführt wird

Zum Überführen des Transportwagens 10 von dem Packmodus 12 in den ersten Betriebsmodus 86 wird als erstes die Arretierung der Seitenbaugruppen 16 gelöst, in dem die beiden vierten Betätigungselemente 26 an den Seitenbaugruppen betätigt werden. Dies ist in den Fig. 22 (A) und 22 (B) mit "1." gekennzeichnet. Zur Arretierung kann jede Seitenbaugruppen 16 eine Arretiereinrichtung aufweisen, die zwischen einer Freigabestellung und einer Sperrstellung verlagerbar ist. Jede Arretiereinrichtung ist in die Sperrstellung vorgespannt. Durch Betätigung des jeweiligen vierten Betätigungselements 26 wird die entsprechende Arretiereinrichtung in die Freigabestellung verlagert. In der Freigabestellung kann jede Seitenbaugruppe 16 auf- und zugeklappt werden. In anderen Worten ist eine Schwenkbewegung jeder Seitenbaugruppe um die entsprechende Schwenkachse 142 in der Freigabestellung freigegeben. In der Sperrstellung ist eine Bewegung der Seitenbaugruppen 16 gesperrt, so dass diese nicht auf- und zugeklappt werden können. In anderen Worten ist eine Schwenkbewegung jeder Seitenbaugruppe um die entsprechende Schwenkachse 142 in der Sperrstellung gesperrt.

Jede Arretiereinrichtung kann beispielsweise einen Zapfen aufweisen, der mit dem jeweiligen vierten Betätigungselement 26 über einen Seilzug gekoppelt ist. Der Zapfen kann in der zugeklappten Stellung 76 und in der aufgeklappten Stellung 80 jeweils mit einer entsprechenden Aussparung an der Basisbaugruppe 14 in Eingriff gebracht werden, um die Seitenbaugruppen 16 in der zugeklappten Stellung 76 bzw. in der aufgeklappten Stellung 80 zu sperren. Jeder Zapfen kann an der Unterseite der entsprechenden Seitenbaugruppe 16 angeordnet sein. Durch Betätigung des jeweiligen vierten Betätigungselements 26 wird der Seilzug gezogen, wobei der Zapfen außer Eingriff mit der der entsprechenden Aussparung bringbar ist, so dass die entsprechende Seitenbaugruppe 16 um die jeweilige Schwenkachse zwischen der zugeklappten 76 und der aufgeklappten Stellung 80 schwenkbar ist.

Sobald die Arretierung gelöst ist, kann der Transportwagen von dem Packmodus 12 in den ersten Betriebsmodus 86 überführt werden, in dem die Seitenbaugruppen 16, beispielswiese manuell, von der zugeklappten 76 Stellung in die aufgeklappte Stellung 80 überführt werden. Dies ist in Fig. 22 (B) dargestellt. Der Zustand des ersten Betriebsmodus ist in gestrichelten Linien dargestellt und mit "5." gekennzeichnet. Mit "3." ist ein Zwischenzustand 136 gekennzeichnet der ebenfalls in gestrichelten Linien dargestellt ist. Der Zwischenzustand 136 ist zwischen dem Packmodus 12 und dem ersten Betriebsmodus 86 angeordnet. Das Überführen von dem Packmodus 12 in den Zwischenzustand 136 ist mit "2." gekennzeichnet. Das Überführen von dem Zwischenzustand 136 in den ersten Betriebsmodus 86 ist mit "4." gekennzeichnet.

Die Fig. 23 bis 25 zeigen Schnittansichten einer der Seitenbaugruppen 16, wobei in Fig. 23 der Packmodus, in Fig. 24 der Zwischenzustand 136 und in Fig. 25 der erste Betriebsmodus 126 dargestellt ist.

Jede Seitenbaugruppe 16 weist einen Klappmechanismus 143 auf, mittels dem eine Bewegung der Seitenbaugruppe 16 zwischen der zugeklappten Stellung 76 und der aufgeklappten Stellung 80 mit einer Bewegung der Räder 18, 19 zwischen der eingeklappten Stellung 74 und der ausgeklappten Stellung 78 gekoppelt ist.

Der Klappmechanismus 143 weist einen Hebel 146 auf, wobei ein erstes Ende des Hebels 146 an der Unterseite 64 der Basisbaugruppe 14 drehbar gelagert ist. Die Seitenbaugruppe weist auf der Unterseite 44 eine Führungsschiene auf, in der das zweite Ende des Hebels 146 translatorisch geführt ist. Die Führungsschiene erstreckt sich entlang der Unterseite 44 in einer Richtung von der ersten Randseite 46 zu der zweiten Randseite 48. Der Klappmechanismus 143 weist des Weiteren einen Seilzug 144 auf. Ein erstes Ende des Seilzugs 144 ist mit dem zweiten Ende des Hebels 146 verbunden. Das zweite Ende des Seilzugs 144 ist mit einer Federeinrichtung gekoppelt. Die Federeinrichtung kann beispielsweise eine Feder oder ein elastisches Element, wie beispielsweise ein Gummiseil, sein.

Der Klappmechanismus 143 weist des Weiteren eine Rolle 148 auf, die um ihre Mittelachse Drehbar gelagert ist. Der Seilzug 144 läuft zumindest teilweise um die Rolle 148 um und ist an einem Befestigungspunkt 150 an dem Umfang der Rolle befestigt, so dass eine Zugbewegung des Seilzugs 144 die Rolle um die Mittelachse dreht. Die Rolle 148 ist mit dem Verbindungselement 88 über einen Kniehebel 152 gekoppelt. Der Kniehebel weist ein erstes Hebelelement 154 und ein zweites Hebelelement 156 auf. Ein erstes Ende des ersten Hebelelements 154 ist an der Rolle 148 befestigt. Das erste Hebelelement 154 erstreckt sich in radialer Richtung von der Rolle 148 weg. Ein zweites Ende des ersten Hebelelements 154 ist mit einem ersten Ende des zweiten Hebelelements 158 drehbar gekoppelt, so dass das erste Hebelelement und das zweite Hebelelement relativ zueinander gedreht werden können. Das zweite Ende des zweiten Hebelelements ist an dem Verbindungselement 88 drehbar gelagert.

Das Verbindungselement 88 ist über einen Arm 158 in der Seitenbaugruppe gelagert. Ein erstes Ende des Arms 158 ist mit dem Verbindungselement 88 drehbar gekoppelt. Ein zweites Ende des Arms ist in der Seitenbaugruppe 16, insbesondere an der ersten Randseite 46, drehbar gelagert. An dem Arm 158 ist zusätzlich ein Stützelement 160 angeordnet, das auf einer Seite des Arms 158 angeordnet ist.

In den Figuren 23 bis 25 ist das Aufklappen der Seitenbaugruppe 16 dargestellt, wobei die Räder 18, 19 mittels des Klappmechanismus 143 ausgeklappt werden. In Fig. 23 ist die Seitenbaugruppe 16 in der zugeklappten Stellung 76 angeordnet und die Räder 18, 19 sind in der eingeklappten Stellung 74 angeordnet. Das Verbindungselement 88 ist vertikal ausgerichtet, wobei das Hinterrad 18 oben und das Vorderrad 19 unten angeordnet sind. In anderen Worten erstreckt sich das Verbindungselement 88 von der Unterseite 44 in Richtung der Oberseite 42. Das zweite Ende des Hebels 146 ist an einem der ersten Randseite 46 zugewandten Ende der Führungsschiene angeordnet. Der Kniehebel 152 ist gebeugt. Das erste Hebelelement 154 und das zweite Hebelelement 156 sind so angeordnet, dass das zweite Ende des ersten Hebelelements 154 und das erste Ende des Hebelelements 156 des Kniehebels 152 jeweils höher, sprich näher an der Oberseite 42, angeordnet sind als das erste Ende des ersten Hebelelements 154 und das zweite Ende des zweiten Hebelelements 156. Das erste Hebelelement 154 und das zweite Hebelelement 156 schließen zueinander einen spitzen Winkel ein, der vorzugsweise 30° bis 60°, insbesondere 45° beträgt. Der Arm 158 ist in Richtung der Oberseite 42 geschwenkt. Die Federeinrichtung, die das zweite Ende des Seilzugs 144 hält, ist gespannt.

Zum Aufklappen der Seitenbaugruppe 16 wird zuerst die Arretierung durch Betätigen des vierten Betätigungselements 26 gelöst. Dies ist mit dem Pfeil "1." gekennzeichnet. Dann wird die Seitenbaugruppe 16 um die Schwenkachse 142 von der Basisbaugruppe 14 weg geschwenkt. Dabei wird der Hebel 146 ebenfalls verschwenkt, wobei das zweite Ende des Hebels 146 in der Führungsschiene von der ersten Randseite 46 in Richtung der zweiten Randseite 48 verschoben wird. Dabei wird das erste Ende des Seilzugs 144 ebenfalls in diese Richtung verschoben, wobei der Seilzug entspannt wird. Da die Federeinrichtung gespannt ist, wird der Seilzug somit von dem ersten Ende in Richtung des zweiten Endes gezogen. Da der Seilzug 144 mit der Rolle 148 gekoppelt ist, wird die Rolle 148 dadurch gedreht. Dadurch wird das erste Hebelelement 154 mit der Rolle mitgedreht, wodurch das zweite Hebelelement 156 zusammen mit dem Verbindungselement 88 in Richtung der Unterseite gedrückt wird. Dabei wird der Kniehebel 152 gestreckt. Die Bewegungsrichtung des ersten Hebelelements 154 ist mit den Pfeilen "2.", "3." und "4." gekennzeichnet. Dabei wird der Arm 158 in Richtung der Unterseite 44 geschwenkt. Dabei wird das Verbindungselement aus der Öffnung 28 nach unten hinausgeschoben, wobei, das Vorderrad 19 durch die Öffnung 28 aus der Seitenbaugruppe 16 hinausgeschoben wird.

Der Arm 158 wird so lange nach unten geschwenkt bis der Zwischenzustand 136 erreicht ist, der in Fig. 24 dargestellt ist. In dem Zwischenzustand 136 ist das Vorderrad 19 unterhalb der Seitenbaugruppe 16 angeordnet. Der Kniehebel 152 ist weniger gebeugt als in dem Packmodus 12. Das erste Hebelelement 154 und das zweite Hebelelement 156 schließen zueinander einen stumpfen Winkel ein, der vorzugsweise 100° bis 140°, insbesondere 120° beträgt. Der Arm 158 ist in Richtung der Unterseite 44 geschwenkt. Das Stützelement 160 ist in Anlage an der ersten Randseite 46.

Wenn die Seitenbaugruppe 16 weiter von dem Zwischenzustand 136 in die aufgeklappte Stellung 80 des ersten Betriebsmodus 86 aufgeklappt wird, verbleibt der Arm 158 in der Stellung, die er in dem Zwischenzustand 136 eingenommen hat. Das erste Hebelelement 154 wird weiter in Richtung der Unterseite 44 gedreht, wobei das zweite Hebelelement 156 weiter nach unten gedrückt wird und der Kniehebel 152 weiter gestreckt wird. Da das zweite Hebelelement 156 und der Arm 158 versetzt voneinander an dem Verbindungselement 88 gelagert sind, wird das Verbindungselement 88 um den Lagerungspunkt des Arms 158 gedreht. Dabei wird das Hinterrad 18 durch die Öffnung aus der zweiten Randseite 48 und der Unterseite 44 herausgeschwenkt. Zuletzt wird die Arretierung durch Loslassen des vierten Betätigungselements 26 wieder gesperrt. Dies ist mit dem Pfeil "5." gekennzeichnet.

In dem ersten Betriebsmodus 86 sind die Räder 18, 19 in der ausgeklappten Stellung 78 angeordnet. Das Verbindungselement 88 ist im Wesentlichen horizontal ausgerichtet. Die Räder 18, 19 sind zumindest teilweise unterhalb der Seitenbaugruppe 16 angeordnet. Der Kniehebel 152 ist gestreckt. Das erste Hebelelement 154 und das zweite Hebelelement 156 schließen zueinander einen Winkel von 180° ein. Das erste Hebelelement 154 und das zweite Hebelelement 156 sind somit fluchtend zueinander ausgerichtet. Die Federeinrichtung ist weniger gespannt als in dem Packmodus.

In den Figuren 26 bis 29 ist das Zuklappen der Seitenbaugruppe 16 dargestellt, wobei die Räder 18, 19 mittels des Klappmechanismus 143 zugeklappt werden. Wie in Fig. 26 (A) dargestellt, wird zuerst die Arretierung wieder gelöst durch Betätigung der vierten Betätigungselemente 26. Dann werden die Seitenbaugruppen wieder von der aufgeklappten Stellung 80 des ersten Betriebsmodus 86, über den Zwischenzustand 136, der mit "3." gekennzeichnet ist, in die zugeklappte Stellung 76 des Packmodus 12, die mit "5." gekennzeichnet ist, zugeklappt. Dies ist in Fig. 26 (B) dargestellt. Das Überführen von dem ersten Betriebsmodus 86 in den Zwischenzustand 136 ist mit "2." gekennzeichnet. Das Überführen von dem Zwischenzustand 136 in den Packmodus 12 ist mit "4." gekennzeichnet.

In den Figuren 27 bis 29 ist das Zuklappen der Seitenbaugruppe 16 dargestellt, wobei die Räder 18, 19 mittels des Klappmechanismus 143 eingeklappt werden. In Fig. 27 ist die Seitenbaugruppe 16 in der aufgeklappten Stellung 80 angeordnet. In Fig. 28 ist die Seitenbaugruppe 16 in dem Zwischenzustand 136 angeordnet. In Fig. 29 ist die Seitenbaugruppe 16 in der zugeklappten Stellung 76 angeordnet. Zuerst wird die Arretierung durch Betätigen des vierten Betätigungselements 26 gelöst. Dies ist mit dem Pfeil "1." gekennzeichnet. Beim Zuklappen der Seitenbaugruppe 16 wird dann das zweite Ende des Hebels 146 von der zweiten Randseite 48 in Richtung der ersten Randseite 46 in der Führungsschiene verschoben. Dadurch wird der Seilzug 144 von seinem zweiten Ende in Richtung seines ersten Endes gezogen. Dadurch wird die Federeinrichtung am zweiten Ende des Seilzugs 144 gespannt. Des Weiteren dreht sich dadurch die Rolle 148 in umgekehrter Richtung verglichen mit dem Aufklappen. Dadurch wird das erste Hebelelement 154 zur Oberseite 42 hin gedreht und das zweite Hebelelement 156 nach oben gezogen, wodurch sich der Kniehebel 152 beugt. Die Bewegungsrichtung des ersten Hebelelements 154 ist mit den Pfeilen "2.", "3." und "4." gekennzeichnet. Dabei wird das Verbindungselement 88 zuerst um die Lagerung des Arms 158 gedreht bis der Zwischenzustand 136 erreicht ist. Dies ist in Fig. 28 dargestellt. Dann wird der Kniehebel 152 weiter nach oben bewegt. Der Arm 158 wird dabei zur Oberseite 42 hin geschwenkt, wodurch das Verbindungselement 88 nach oben gezogen wird, bis das Verbindungselement 88 wieder komplett durch die Öffnung 28 in der Seitenbaugruppe 16 eingezogen ist. Die Räder 18, 19 sind dann wieder in der eingeklappten Stellung 74 angeordnet und die Seitenbaugruppe ist wieder in der zugeklappten Stellung 76 angeordnet. Zuletzt wird die Arretierung durch Loslassen des vierten Betätigungselements 26 wieder gesperrt. Dies ist mit dem Pfeil "5." gekennzeichnet.

In den Abbildungen (A) bis (E) der Fig. 30 ist die Transformation des Transportwagens 10 von dem ersten Betriebsmodus 86 in den zweiten Betriebsmodus 126 dargestellt. In Fig. 30 (A) und (B) ist der Transportwagen in dem ersten Betriebszustand dargestellt. In Fig. 30 (E) ist der Transportwagen 10 in dem zweiten Betriebsmodus dargestellt. In den Fig. 30 (C) und (D) sind Zwischenzustände zwischen dem ersten und zweiten Betriebsmodus 86, 126 dargestellt.

Die Transformation von dem ersten Betriebsmodus 86 in den zweiten Betriebsmodus 126 wird durch eine Schwenkbewegung des Griffs 20 bewirkt, während das erste Betätigungselement 22 betätigt ist. Wie zuvor beschrieben, ist der Griff in der ausgezogenen Stellung 106 relativ zu der Basisbaugruppe 14 um die Schwenkachse 194 schwenkbar, die parallel zu der x-Richtung verläuft. Der Griff 20 wird dabei beispielsweise von einer ersten Schwenkposition 188 in eine zweite Schwenkposition 190 bewegt. Vorzugsweise wird nur eine Bewegung in einer Drehrichtung um die Schwenkachse 194 zur Transformation verwendet. In anderen Worten wird eine Schwenkbewegung von der ersten Schwenkposition 188 in die zweite Schwenkposition 190 zum Transformieren verwendet, während eine Bewegung des Griffs in die entgegengesetzte Richtung nicht verwendet wird. Insbesondere ist die Schwenkbewegung, die zur Transformation verwendet wird, abwärts und rückwärts bezüglich des Transportwagens 10 gerichteten. In anderen Worten ist die Drehrichtung derart, dass der Griff 20 von der Vorderseite 66 der Basisbaugruppe 14 weggeschwenkt und auf die Rückseite 68 der Basisbaugruppe zu geschwenkt wird.

Dabei ist eine Bewegung in der Drehrichtung um die Schwenkachse 194 von der ersten Schwenkposition 188 in die zweite Schwenkposition 190 mit einer Bewegung der ersten Aufnahme 93 und der Vorderräder 19 gekoppelt, um die erste Aufnahme 93 von der Transportposition 108 in die Ladeposition 110 zu überführen und die Vorderräder gleichzeitig von der eingefahrenen Stellung 118 in die ausgefahrene Stellung 120 zu überführen. Des Weiteren ist eine Bewegung in der entgegengesetzten Drehrichtung um die Schwenkachse 194 von der zweiten Schwenkposition 190 in die erste Schwenkposition 188 nicht mit den Bewegungen der ersten Aufnahme 93 und des Vorderrads gekoppelt. Die Schwenkbewegung des Griffs 20 um die Schwenkachse 194 bei gleichzeitiger Betätigung des ersten Betätigungselements 22 wird auch als erste Aktuierung bezeichnet.

Beim in Fig. 30 dargestellten Überführen aus dem ersten Betriebsmodus 86 in den zweiten Betriebsmodus 126 wird somit der Griff 20 ein oder mehrere Male, vorzugsweise drei Mal, von der ersten Schwenkposition 188 in die zweite Schwenkposition 190 bzw. zwischen der ersten und zweiten Schwenkposition 188, 190 bewegt. Dabei werden die Aufnahme 93 von der Transportposition 108 in die Ladeposition 110 geschwenkt und die Vorderräder 19 von der ersten eingefahrenen Stellung 118 in die ausgefahrene Stellung 120 verschoben.

Entsprechend wird der Transportwagen auch wieder von dem zweiten Betriebsmodus 126 in den ersten Betriebsmodus 86 transformiert. Die Transformation von dem zweiten Betriebsmodus 126 in den ersten Betriebsmodus 86 wird durch eine Schwenkbewegung des Griffs 20 bewirkt, während das zweite Betätigungselement 23 betätigt ist. Dabei ist wieder die Schwenkbewegung des Griffs 20 in der Drehrichtung um die Schwenkachse 194 von der ersten Schwenkposition 188 in die zweite Schwenkposition 190 mit der Bewegung der ersten Aufnahme 93 und der Vorderräder 19 gekoppelt. Der Griff wird somit ein oder mehrere Male von der ersten Schwenkposition 188 in die zweite Schwenkposition 190 bzw. zwischen der ersten und zweiten Schwenkposition 188, 190 bewegt. Dabei werden die Aufnahme 93 von der Ladeposition 110 in die Transportposition 108 geschwenkt und die Vorderräder 19 von der ausgefahrenen Stellung 120 in die eingefahrene Stellung 118 verschoben. Die Schwenkbewegung des Griffs 20 um die Schwenkachse 194 bei gleichzeitiger Betätigung des zweiten Betätigungselements 23 wird auch als zweite Aktuierung bezeichnet.

In die Fig. 31 ist die Basisbaugruppe 14 zusammen mit den Armen 96 und dem Griff 20 dargestellt. Die Arme 96 sind dabei horizontal ausgerichtet, so dass die Aufnahme 93 in der Ladeposition 110 angeordnet ist und der Transportwagen 10 entsprechend in dem zweiten Betriebsmodus 126. Der Rahmen der Basisbaugruppe 14 ist auf der Oberseite 62 zu Anschauungszwecken teilweise aufgeschnitten, damit die Komponenten, die in der Basisbaugruppe 14 angeordnet sind, sichtbar sind. In der Basisbaugruppe 14 sind ein Kopplungsmechanismus 192, eine Aktuierungsvorrichtung 196, und eine Bewegungsübertragungsvorrichtung 198 angeordnet. Die Aktuierungsvorrichtung 196 weist die Bewegungsübertragungsvorrichtung 198 auf. Mittels des Kopplungsmechanismus 192, der Aktuierungsvorrichtung 196 und der Bewegungsübertragungseinrichtung 198 kann eine Bewegung des Griffs um die Schwenkachse 194 mit einer Bewegung der Arme 96 um die erste Schwenkachse 100 gekoppelt werden, um die Aufnahme 93 zwischen der Transportposition 108 und der Ladeposition 110 zu verlagern.

Der Kopplungsmechanismus 192 ist an den beiden Außenseiten 70, 72 der Basisbaugruppe 14 angeordnet. Der Kopplungsmechanismus 192 ist an einem oberen Ende jeder Außenseite 70, 72 angeordnet. Der Kopplungsmechanismus 192 ist insbesondere am oberen Ende jedes Einschubkastens 186 angeordnet. Die Aktuierungsvorrichtung 196 ist ebenfalls an den beiden Außenseiten 70, 72 der Basisbaugruppe angeordnet und erstreckt sich von dem Kopplungsmechanismus 192 auf jeder Seite nach Innen. In anderen Worten hat die Aktuierungsvorrichtung 196 zwei Teile, wobei jeder Teil auf einer Außenseite 70, 72 der Basisbaugruppe 14 angeordnet ist. Mittels des Kopplungsmechanismus 192 kann eine Schwenkbewegung des Griffs 20 um die Schwenkachse 194 mit der Aktuierungsvorrichtung 196 gekoppelt werden. Die Bewegungsübertragungseinrichtung 198 ist an der Oberseite 62 der Basisbaugruppe 14 angeordnet. Die Bewegungsübertragungseinrichtung 198 ist zwischen den beiden Teilen der Aktuierungsvorrichtung 196 angeordnet. Die Bewegungsübertragungseinrichtung 198 ist mit der Aktuierungsvorrichtung 196 koppelbar, so dass eine Bewegung der Aktuierungsvorrichtung 196 auf die Bewegungsübertragungseinrichtung 198 übertragen werden kann. Die Bewegungsübertragungseinrichtung 198 ist mit den Armen 96 gekoppelt, um diese gleichermaßen um die erste Schwenkachse 100 zu verschwenken.

In Fig. 32 ist ein Betätigungsmechanismus an der Griffstange 182 des Griffs 20 im Detail dargestellt, mittels dem der Kopplungsmechanismus 192 angesteuert wird. Der Betätigungsmechanismus umfasst das erste Betätigungselement 22, das zweite Betätigungselement 23 und das dritte Betätigungselement 24. Die Betätigungselemente 22, 23, 24 sind an der Griffstange 182 angeordnet und können zur Betätigung gedrückt werden. Die Griffstange 182 erstreckt sich in der x-Richtung. Die Betätigungselemente 22, 23, 24 sind in der x-Richtung aufeinanderfolgend angeordnet. Die Betätigungselemente 22, 23, 24 sind in der x-Richtung voneinander beabstandet. Das dritte Betätigungselement 24 ist zwischen dem ersten Betätigungselement 22 und dem zweiten Betätigungselement 23 angeordnet. Zur Betätigung können die Betätigungselemente 22, 23, 24 in einer Betätigungsrichtung gedrückt werden, die senkrecht zu der x-Richtung verläuft.

Der Betätigungsmechanismus weist des Weiteren einen ersten Seilzug 200, einen zweiten Seilzug 202 und einen dritten Seilzug 204 auf. Der dritte Seilzug 204 erstreckt sich von dem Kopplungsmechanismus 192 auf der ersten Außenseite 70 durch den Griff 20, insbesondere durch die erste und zweite Griffverlängerung 184 und die Griffstange 182, bis zu dem Kopplungsmechanismus 192 auf der zweiten Außenseite 72.

Ein erstes Ende des ersten Seilzugs 200 ist zwischen dem ersten Betätigungselement 22 und dem dritten Betätigungselement 24 in der Griffstange 182 befestigt und verläuft in der x-Richtung an dem ersten Betätigungselement 22 vorbei. Vorzugsweise verläuft der erste Seilzug 200 unterhalb des ersten Betätigungselements 22. Nach dem ersten Betätigungselement 22 teilt sich der erste Seilzug 200 in zwei Zugseile, beispielsweise über eine Y-Verbindung, wobei das eine Zugseil in die erste Griffverlängerung des Griffs 20 geführt wird und das andere Zugseil in die zweite Griffverlängerung des Griffs 20 geführt wird.

Ein erstes Ende des zweiten Seilzugs 202 ist zwischen dem zweiten Betätigungselement 23 und dem dritten Betätigungselement 24 in der Griffstange 182 befestigt und verläuft in der x-Richtung an dem zweiten Betätigungselement 23 vorbei. Vorzugsweise verläuft der zweite Seilzug 202 unterhalb des zweiten Betätigungselements 23. Nach dem zweiten Betätigungselement 23 teilt sich der zweite Seilzug 202 in zwei Zugseile, beispielsweise über eine Y-Verbindung, wobei das eine Zugseil in die erste Griffverlängerung des Griffs 20 geführt wird und das andere Zugseil in die zweite Griffverlängerung des Griffs 20 geführt wird.

Das Zugseil des ersten Seilzugs und das Zugseil des zweiten Seilzugs sind in der ersten und zweiten Griffverlängerung 184 jeweils mit einem vierten Seilzug 212 verbunden, beispielsweise über eine Y-Verbindung. Jeder vierte Seilzug 212 erstreckt sich von den Zugseilen der ersten und zweiten Seilzüge 200, 202 in der jeweiligen Griffverlängerung 184 bis zu dem Kopplungsmechanismus 192 an der entsprechenden Außenseite 70, 72 der Basisbaugruppe 14.

Das erste Betätigungselement 22 ist mit zwei Umlenkrollen 206 verbunden. Das zweite Betätigungselement 23 ist mit zwei Umlenkrollen 208 verbunden. Das dritte Betätigungselement 24 ist mit einer Umlenkrolle 210 verbunden. Der erste und der dritte Seilzug 200, 204 laufen teilweise um je eine der Umlenkrollen 206 um. Der zweite und der dritte Seilzug 202, 204 laufen teilweise um je eine der Umlenkrollen 208 um. Der dritte Seilzug 204 läuft teilweise um die Umlenkrolle 210 um. Die Seilzüge 200, 202, 204 laufen dabei um die Umlenkrollen 206, 208, 210 jeweils auf einer Seite um, die in der Betätigungsrichtung dem jeweiligen Betätigungselement 22, 23, 24 abgewandt ist. Wenn die Betätigungselemente 22, 23, 24 gedrückt werden, werden die entsprechenden Umlenkrollen 206, 208, 210 in der Betätigungsrichtung verlagert. Dadurch werden die entsprechenden Seilzüge 200, 202, 204 gezogen. Zwischen den Betätigungselementen können weitere Umlenkrollen zum Umlenken der Seilzüge 200, 202, 204 angeordnet sein.

Der Betätigungsmechanismus für das erste und zweite Betätigungselement 22, 23 ist derart ausgebildet, dass der vierte Seilzug 212 bei einer Betätigung des zweiten Betätigungselements 23 weiter als bei einer Betätigung des ersten Betätigungselements 22 gezogen wird. Beispielsweise kann der zweite Seilzug 202 bei Betätigung des zweiten Betätigungselements 23 weiter als der erste Seilzug 200 bei Betätigung des ersten Betätigungselements 22 eingedrückt werden. Alternativ können der erste und/oder der zweite Seilzug 200, 202 mit dem jeweiligen vierten Seilzug 212 über eine Übersetzungsvorrichtung gekoppelt sein.

In den Figuren 33 und 34 ist der Kopplungsmechanismus 192 an der zweiten Außenseite 72 im Detail dargestellt. Der Kopplungsmechanismus 192 an der ersten Außenseite 70 ist entsprechend dazu ausgebildet. Der Kopplungsmechanismus 192 kann verschiedene Zustände annehmen. In Fig. 34(A) ist der Kopplungsmechanismus 192 in einem Arretierzustand 216 angeordnet. In Fig. 34(B) ist der Kopplungsmechanismus 192 in einem Freidrehzustand 214 angeordnet. In Fig. 34(C) ist der Kopplungsmechanismus 192 in einem ersten Kopplungszustand 218 angeordnet. In Fig. 34(D) ist der Kopplungsmechanismus 192 in einem zweiten Kopplungszustand 220 angeordnet.

In den Fig. 33 und 34 ist der Griff 20 in der ausgezogenen Stellung 106 angeordnet. Wie zuvor beschrieben, ist der Griff 20 in der ausgezogenen Stellung um die Schwenkachse 194 drehbar, wobei die Schwenkachse 194 in der x-Richtung verläuft. Die Richtung, in der die Schwenkachse 194 verläuft wird im Folgenden axiale Richtung genannt. Entsprechend sind die radiale Richtung die Richtung, die sich radial von der Schwenkachse 194 weg erstreckt, und die Umlaufrichtung die Richtung, die um die Schwenkachse 194 umläuft. Die axiale Richtung, die radiale Richtung und die Umlaufrichtung stehen jeweils paarweise senkrecht aufeinander.

Der Kopplungsmechanismus 192 weist einen Grundkörper 226 auf. Der Grundkörper 226 ist an einem unteren Ende der Griffverlängerung 184 des Griffs 20 angeordnet. Die Griffverlängerung 184 ist gegenüber dem Grundkörper 226 in der axialen Richtung der Schwenkachse 194 verlagerbar. Die axiale Richtung der Schwenkachse 194 ist parallel zu der x-Richtung. Der Grundkörper 226 ist senkrecht zu der axialen Richtung der Schwenkachse 194 mit der Griffverlängerung 184 gekoppelt. Mit anderen Worten sind der Grundkörper 226 und die Griffverlängerung 184 in der x- und z-Richtung miteinander gekoppelt, so dass sie in der x- und z-Richtung gemeinsam bewegbar sind.

Beim Einschieben und Ausziehen der Griffverlängerung 184 in bzw. aus dem Einschubkasten 186 wird die Griffverlängerung 184 zusammen mit dem Grundkörper in der y-Richtung verlagert. Der Grundkörper 226 ist in der ausgezogenen Stellung 106 fluchtend mit der Schwenkachse 194 angeordnet und gemeinsam mit der Griffverlängerung 184 um die Schwenkachse 194 drehbar. In der ausgezogenen Stellung 106 ist der Grundkörper 226 in der Basisbaugruppe 14, insbesondere in dem Einschubkasten 186, um die Schwenkachse 194 drehbar gelagert.

Die Aktuierungsvorrichtung 196 weist ein Aktuierungselement 228 auf. Das Aktuierungselement 228 ist in der Basisbaugruppe 14 um die Schwenkachse 194 drehbar gelagert.

Die Basisbaugruppe 14 weist ein Arretierelement 230 auf. Das Arretierelement 230 ist starr mit der Basisbaugruppe 14 verbunden. Das Arretierelement ist an einem oberen Ende der Außenseite 72 angeordnet. Ein weiteres derartiges Arretierelement kann an der anderen Außenseite 70 angeordnet sein.

Der Grundkörper 226 und die Griffverlängerung 184 sind in der axialen Richtung zwischen dem Aktuierungselement 228 und dem Arretierelement 230 angeordnet. Insbesondere sind das Aktuierungselement 228 und das Arretierelement 230 auf gegenüberliegenden Seiten des Einschubkastens 186 angeordnet. Ein Abstand des Aktuierungselements 228 zu dem Arretierelement 230 ist in der axialen Richtung vorzugsweise größer eine Breite der Griffverlängerung 184 in der axialen Richtung. Die Griffverlängerung 184 weist eine erste Seite und eine zweite Seite auf. Die erste und die zweite Seite sind in der axialen Richtung entgegengesetzt zueinander angeordnet. Die erste Seite ist in der axialen Richtung dem Arretierelement 230 der Außenseite 72 zugewandt und die zweite Richtung ist in der axialen Richtung dem Aktuierungselement 228 zugewandt.

Die Griffverlängerung 184 weist auf der ersten Seite erste Vorsprünge 232 auf. Das Arretierelement 230 weist auf einer der Griffverlängerung 184 zugewandten Seite erste Ausnehmungen 234 auf. Die ersten Ausnehmungen 234 sind komplementär zu den ersten Vorsprüngen 232 ausgebildet. Die ersten Ausnehmungen 234 und die ersten Vorsprünge 232 sind jeweils symmetrisch in der Umlaufrichtung um die Schwenkachse 194 verteilt.

Die Griffverlängerung 184 weist auf der zweiten Seite zweite Ausnehmungen 238 auf. Das Aktuierungselement 228 weist auf einer der Griffverlängerung 184 zugewandten Seite zweite Vorsprünge 236 auf. Die zweiten Ausnehmungen 238 sind komplementär zu den zweiten Vorsprüngen 236 ausgebildet. Die zweiten Ausnehmungen 238 und die zweiten Vorsprünge 236 sind jeweils symmetrisch in der Umlaufrichtung um die Schwenkachse 194 verteilt.

Die Griffverlängerung 184 ist in der axialen Richtung zwischen einer Arretierstellung 217, einer Freidrehstellung 215 und einer Koppelstellung 219 verlagerbar. In dem Arretierzustand 216 ist die Griffverlängerung 184 in der Arretierstellung 217 angeordnet. In dem Freidrehzustand 214 ist die Griffverlängerung 184 in der Freidrehstellung 215 angeordnet. In dem ersten und zweiten Kopplungszustand ist die Griffverlängerung 184 in der Kopplungsstellung 219 angeordnet.

In der Arretierstellung 217 sind die ersten Vorsprünge 232 in Eingriff mit den ersten Ausnehmungen 234 und die zweiten Vorsprünge 236 außer Eingriff mit den zweiten Ausnehmungen 238. In der Arretierstellung 217 ist die Griffverlängerung 184 fest mit dem Arretierelement 230 gekoppelt und kann nicht um die Schwenkachse 194 gedreht werden. Auf diese Weise ist der Griff 20 in dem Arretierzustand 216 mit der Basisbaugruppe 14 fest verbunden und kann nicht um die Schwenkachse 194 geschwenkt werden. Die Griffverlängerung 184 ist über eine Federeinrichtung in die Arretierstellung 217 vorgespannt, so dass der Kopplungsmechanismus 192 in den Arretierzustand 216 vorgespannt ist.

In der Freidrehstellung 215 sind die ersten Vorsprünge 232 außer Eingriff mit den ersten Ausnehmungen 234 und die zweiten Vorsprünge 236 außer Eingriff mit den zweiten Ausnehmungen 238. Auf diese Weise ist die Griffverlängerung 184 weder mit dem Arretierelement 230 noch mit dem Aktuierungselement 228 gekoppelt. In der Freidrehstellung 215 ist die Griffverlängerung 184 um die Schwenkachse 194 frei drehbar. Auf diese Weise kann der Griff 20 in dem Freidrehzustand 214 frei um die Schwenkachse 194 geschwenkt werden.

In der Kopplungsstellung 219 sind die ersten Vorsprünge 232 außer Eingriff mit den ersten Ausnehmungen 234 und die zweiten Vorsprünge 236 in Eingriff mit den zweiten Ausnehmungen 238. In der Kopplungsstellung 219 ist die Griffverlängerung 184 fest mit dem Aktuierungselement 228 gekoppelt und kann zusammen mit dem Aktuierungselement 228 um die Schwenkachse 194 gedreht werden. Auf diese Weise kann der Griff 20 relativ zu der Basisbaugruppe 14 um die Schwenkachse 194 geschwenkt werden, wobei die Schwenkbewegung auf das Aktuierungselement 228 übertragen wird.

Die zweiten Vorsprünge 236 und die zweiten Ausnehmungen 238 sind dabei so ausgebildet, dass die Schwenkbewegung des Griffs 20 um die Schwenkachse 194 parallel zu einer ersten Bewegungsrichtung 240 in der Umlaufrichtung um die Schwenkachse 194 übertragen werden kann. Vorzugsweise ist jeder Vorsprung 236 in der Umlaufrichtung um die Schwenkachse 194 schräg ausgebildet. Insbesondere weist jeder Vorsprung 236 eine gerade Flanke und eine schräge Flanke auf, die in der Umlaufrichtung auf entgegengesetzten Seiten jedes Vorsprungs 236 angeordnet sind. Die gerade Flanke ist in der ersten Bewegungsrichtung stromabwärts von der schrägen Flanke angeordnet. Die schräge Flanke steigt in der ersten Bewegungsrichtung an. Die gerade Flanke erstreckt sich in der axialen Richtung und steht somit senkrecht zu der Umlaufrichtung. Die schräge Flanke weist vorzugsweise gegenüber der Umlaufrichtung eine Steigung zwischen 45° und 90°, vorzugsweise zwischen 60° und 80°, insbesondere 70°, auf. In der Kopplungsstellung 219 wird der Griff 20 derart in Richtung des Aktuierungselements 228 gedrückt, dass die Vorsprünge 236 mit den Ausnehmungen 238 bei einer Drehung um die Schwenkachse 194 sowohl in als auch entgegen der ersten Bewegungsrichtung 240 in Eingriff sind bzw. bleiben. Die schrägen Flanken der Vorsprünge 236 dienen somit nur dem Spielausgleich, wenn die Vorsprünge 236 und die Ausnehmungen 238 in der Koppelstellung 219 aufeinandergedrückt werden, um ein Klappern bei Schwenkbewegungen des Griffs 20 zu vermeiden.

Die Aktuierungsvorrichtung 196 weist des Weiteren ein erstes Drehelement 242 und ein zweites Drehelement 244 auf. Die Drehelemente 242, 244 sind in der Basisbaugruppe 14 um die Schwenkachse 194 drehbar gelagert. Die Drehelemente 242, 244 sind in der axialen Richtung nebeneinander angeordnet. Die Drehelemente 242, 244 sind unabhängig voneinander um die Schwenkachse 194 drehbar. In anderen Worten ist eine Drehbewegung des ersten Drehelements 242 um die Schwenkachse 194 nicht mit einer Drehbewegung des zweiten Drehelements um die Schwenkachse 194 gekoppelt. Das erste Drehelement 242 ist in der axialen Richtung näher an dem Grundkörper 226 und der Griffverlängerung 184 angeordnet als das zweite Drehelement 244.

Das Aktuierungselement 228 weist in der axialen Richtung ein U-förmiges Profil auf. Dazu weist das Aktuierungselement 228 einen axialen Abschnitt, einen ersten radialen Abschnitt und einen zweiten radialen Abschnitt auf, wobei der axiale Abschnitt zwischen den beiden radialen Abschnitten angeordnet ist. Der axiale Abschnitt erstreckt sich in der axialen Richtung und die radialen Abschnitte erstrecken sich in der radialen Richtung von dem axialen Abschnitt nach außen. Die Drehelemente 242, 244 sind zwischen den radialen Abschnitten angeordnet. Die Drehelemente 242, 244 sind bezüglich des axialen Abschnitts radial außen angeordnet. Der erste radiale Abschnitt ist in der axialen Richtung näher an dem Grundkörper 226 angeordnet als der zweite radiale Abschnitt.

Die Drehelemente 242, 244 sind gemeinsam in der axialen Richtung zwischen einer ersten Koppelstellung 222 und einer zweiten Koppelstellung 224 verlagerbar. In der ersten Koppelstellung 222 ist das erste Drehelement 242 mit dem Aktuierungselement 228 gekoppelt, so dass eine Drehbewegung des Aktuierungselements 228 um die Schwenkachse 194, insbesondere in der ersten Bewegungsrichtung, auf das erste Drehelement 242 übertragen wird. In der zweiten Koppelstellung 224 ist das zweite Drehelement 244 mit dem Aktuierungselement 228 gekoppelt, so dass eine Drehbewegung des Aktuierungselements 228 um die Schwenkachse 194, insbesondere in der ersten Bewegungsrichtung, auf das zweite Drehelement 244 übertragen wird. In dem ersten Kopplungszustand 218 sind die Drehelemente 242, 244 in der ersten Koppelstellung 222 angeordnet. In dem zweiten Kopplungszustand 220 sind die Drehelemente 242, 244 in der zweiten Koppelstellung 224 angeordnet.

Das Aktuierungselement 228 weist dazu an dem ersten radialen Abschnitt dritte Vorsprünge 246 und an dem zweiten radialen Abschnitt vierte Vorsprünge 250 auf. Das erste Drehelement 242 weist auf einer dem ersten radialen Abschnitt zugewandten Seite dritte Ausnehmungen 248 auf. Das zweite Drehelement 244 weist auf einer dem zweiten radialen Abschnitt zugewandten Seite vierte Ausnehmungen 252 auf. Die dritten Ausnehmungen 246 sind komplementär zu den dritten Vorsprüngen 248 ausgebildet. Die vierten Ausnehmungen 250 sind komplementär zu den vierten Vorsprüngen 252 ausgebildet. Die dritten Ausnehmungen 246 und die dritten Vorsprünge 248 sind jeweils symmetrisch in der Umlaufrichtung um die Schwenkachse 194 verteilt. Die vierten Ausnehmungen 250 und die vierten Vorsprünge 252 sind jeweils symmetrisch in der Umlaufrichtung um die Schwenkachse 194 verteilt.

In der ersten Koppelstellung 222 sind die dritten Vorsprünge 246 in Eingriff mit den dritten Ausnehmungen 248 und die vierten Vorsprünge 250 außer Eingriff mit den vierten Ausnehmungen 252. In der ersten Koppelstellung 222 ist das Aktuierungselement 228 dadurch mit dem ersten Drehelement 242 gekoppelt und kann zusammen mit dem ersten Drehelement 242 um die Schwenkachse 194 in der ersten Bewegungsrichtung 240 gedreht werden. In der ersten Koppelstellung 222 ist das zweite Drehelement 244 um die Schwenkachse 194 frei drehbar.

In der zweiten Koppelstellung 224 sind die dritten Vorsprünge 246 außer Eingriff mit den dritten Ausnehmungen 248 und die vierten Vorsprünge 250 in Eingriff mit den vierten Ausnehmungen 252. In der zweiten Koppelstellung 224 ist das Aktuierungselement 228 dadurch mit dem zweiten Drehelement 244 gekoppelt und kann zusammen mit dem zweiten Drehelement 244 um die Schwenkachse 194 in der ersten Bewegungsrichtung 240 gedreht werden. In der zweiten Koppelstellung 224 ist das erste Drehelement 242 um die Schwenkachse 194 frei drehbar.

Die dritten und vierten Vorsprünge 246, 250 und die dritten und vierten Ausnehmungen 248, 252 sind dabei so ausgebildet, dass in der ersten und zweiten Koppelstellung 222, 224 eine Drehbewegung des Aktuierungselements 228 nur in der ersten Bewegungsrichtung 240 in der Umlaufrichtung um die Schwenkachse 194 übertragen werden kann. Mit anderen Worten sind die dritten und vierten Vorsprünge 246, 250 und die dritten und vierten Ausnehmungen 248, 252 jeweils als Freilauf ausgebildet, wobei nur eine Bewegung des Aktuierungselements 228 in der ersten Bewegungsrichtung 240 in der ersten und zweiten Koppelstellung 222, 224 auf das jeweilige Drehelement 242, 244 übertragen wird. Jeder der dritten und vierten Vorsprünge 246, 250 ist in der Umlaufrichtung um die Schwenkachse 194 schräg ausgebildet. Insbesondere weist jeder der Vorsprünge 246, 250 eine gerade Flanke und eine schräge Flanke auf, die in der Umlaufrichtung auf entgegengesetzten Seiten des jeweiligen Vorsprungs 246, 248 angeordnet sind. Die gerade Flanke ist in der ersten Bewegungsrichtung stromabwärts von der schrägen Flanke angeordnet. Die schräge Flanke steigt in der ersten Bewegungsrichtung an. Die gerade Flanke erstreckt sich in der axialen Richtung und steht somit senkrecht zu der Umlaufrichtung. Die schräge Flanke weist vorzugsweise gegenüber der Umlaufrichtung eine Steigung zwischen 5° und 45°, vorzugsweise zwischen 10° und 30°, insbesondere 20°, auf.

Die Drehelemente 242, 244 sind mittels einer Federeinrichtung in der ersten Koppelstellung vorgespannt. Die Federeinrichtung weist ein erstes Federelement 254, einen Stab 256, einen Zapfen 258 und ein Hülsenelement 260 auf. Der Stab 256 erstreckt sich entlang der Schwenkachse 194. Das Aktuierungselement 228 ist radial außen von dem Stab 256 angeordnet. Das Hülsenelement 260 ist zwischen dem axialen Abschnitt des Aktuierungselements 228 und den Drehelementen 242, 244 angeordnet. Das Hülsenelement 260 weist an axialen Enden radiale Halteabschnitte auf, die das erste und das zweite Drehelement 242, 244 zwischen sich halten. Zwischen den Drehelementen 242, 244 ist ein zweites Federelement angeordnet, dass die Drehelemente 242, 244 in der axialen Richtung voneinander weg und gegen die Halteabschnitte des Hülsenelements 260 drückt. Das Hülsenelement 260 ist mit dem Stab 256 über den Zapfen 258 verbunden. Das Aktuierungselement 228 weist eine Aussparung auf, durch die sich der Zapfen 258 hindurch erstreckt. Durch eine Bewegung des Stabs 256 in der axialen Richtung, wird das Hülsenelement 260 in der axialen Richtung bewegt. Durch eine Bewegung des Hülsenelements 260 in der der axialen Richtung werden die Drehelemente gemeinsam in der axialen Richtung verlagert. Der Stab 256 ist auf der zweiten Seite des Grundkörpers 226 angeordnet. Mittels des Federelements 254 ist der Stab 256 in der axialen Richtung in Richtung des Grundkörpers 226 vorgespannt. Auf diese Weise werden die Drehelemente 242, 244 in die erste Koppelstellung 222 vorgespannt.

Zum Überführen des Kopplungsmechanismus 192 zwischen den einzelnen Zuständen weist der Kopplungsmechanismus 192 eine erste Rolle 262, eine zweite Rolle 264, ein Anschlagelement 266 und einen Stift 268 auf.

Die erste Rolle 262 ist an der Griffverlängerung 184 drehbar gelagert. Die zweite Rolle 264 ist an dem Grundkörper 226 drehbar gelagert. Die Drehachsen der ersten und zweiten Rolle 262, 264 erstrecken sich in der z-Richtung. Die erste Rolle 262 ist gemeinsam mit der Griffverlängerung in der axialen Richtung der Schwenkachse 194 relativ zu dem Grundkörper 226 verlagerbar.

Die erste Rolle 262 ist mit dem dritten Seilzug 204 gekoppelt. Der dritte Seilzug 204 läuft um die erste Rolle 262 um und ein Ende des dritten Seilzugs 204 ist an dem Grundkörper 226 befestigt. Der Befestigungspunkt liegt in der axialen Richtung zwischen dem Aktuierungselement 228 und der ersten Rolle 262. Wird der dritte Seilzug 204 gezogen, so wird die Rolle 262 in der axialen Richtung in Richtung des Aktuierungselements 228 verlagert. Auf diese Weise wird auch die Griffverlängerung 184 in der axialen Richtung von dem Arretierelement 230 in Richtung des Aktuierungselements 228 verlagert.

Die zweite Rolle 264 ist mit dem vierten Seilzug 212 gekoppelt. Der vierte Seilzug 212 läuft um die zweite Rolle 264 um und ein Ende des vierten Seilzugs 212 ist an dem Stift 268 befestigt. Der Stift ist an dem Grundkörper 226 angeordnet und relativ zu dem Grundkörper 226 in der axialen Richtung der Schwenkachse 194 verlagerbar. Der Stift 268 ist in der axialen Richtung mit dem Stab 256 fluchtend angeordnet. Wird der vierte Seilzug 212 gezogen, so wird der Stift 268 in der axialen Richtung in Richtung des Aktuierungselements 228 verlagert und die Rolle 264 wird um ihre Drehachse gedreht.

Das Anschlagelement 266 ist mit der Griffverlängerung 184 in der axialen Richtung gekoppelt. Das Anschlagelement 266 ist in der axialen Richtung relativ zu dem Grundkörper 226 verlagerbar. Das Anschlagelement 266 ist in der axialen Richtung zwischen der zweiten Rolle 264 und dem Arretierelement 230 angeordnet. Das Anschlagelement 266 ist in der axialen Richtung fluchtend mit der Drehachse der zweiten Rolle 264 angeordnet. Die zweite Rolle 264 bildet in einer ersten Drehposition einen ersten Anschlag und in einer zweiten Drehposition einen zweiten Anschlag für das Anschlagelement 266 aus. Wenn das Anschlagelement 266 an dem zweiten Anschlag anliegt, ist das Anschlagelement 266 weiter in der axialen Richtung der Schwenkachse 194 in Richtung des Aktuierungselements 228 verlagert, als wenn es an dem ersten Anschlag anliegt. Im Grundzustand, sprich wenn an dem Seilzug 212 nicht gezogen wird, ist die zweite Rolle 264 in der ersten Drehposition angeordnet. Die zweite Rolle 264 kann in die zweite Drehposition gedreht werden, indem an dem Seilzug 212 gezogen wird.

Ein Umfang der zweiten Rolle 264 bildet den ersten Anschlag für das Anschlagelement 266 aus. Die Rolle 264 weist an ihrem Umfang eine Aussparung auf, die sich entlang des Umfangs über einen Teil, insbesondere die Hälfte, des Umfangs erstreckt. Die Aussparung weist in der z-Richtung eine Breite auf, die mindestens zu groß ist wie eine Breite des Anschlagelements 266 in der z-Richtung. Das Anschlagelement 266 ist in der x-Richtung fluchtend mit der Aussparung angeordnet. Das Innere der Aussparung erstreckt sich vorzugsweise bis zu einer Lagerungsachse der zweiten Rolle 264. Das Innere der Aussparung, insbesondere die Lagerungsachse, bildet den zweiten Anschlag für das Anschlagelement 266.

Wenn keines der Betätigungselemente 22, 23, 24 betätigt wird und keiner der Seilzüge 204, 212 gezogen wird, ist der Kopplungsmechanismus 192 in dem Arretierzustand 216 angeordnet. Dies ist in Fig. 34 (A) dargestellt.

Um den Kopplungsmechanismus 192 in den Freidrehzustand 214 zu verlagern, wird das dritte Betätigungselement 24 betätigt. Dies ist in Fig. 34 (B) dargestellt. Dadurch wird der dritte Seilzug 204 gezogen, wodurch die Griffverlängerung 184 in der axialen Richtung von dem Arretierelement 230 in Richtung des Aktuierungselements 228 verlagert wird, bis das Anschlagelement 266 an dem ersten Anschlag anliegt. Der erste Anschlag ist so angeordnet, dass die Griffverlängerung 184 weder mit dem Arretierelement 230 noch mit dem Aktuierungselement 228 gekoppelt ist, wobei die Griffverlängerung 184 in der Freidrehstellung 215 angeordnet ist.

Um den Kopplungsmechanismus 192 in ersten Kopplungszustand 218 zu verlagern, wird das erste Betätigungselement 22 betätigt. Dies ist in Fig. 34 (C) dargestellt. Dadurch werden der dritte Seilzug 204 und der vierte Seilzug 212 gezogen. Der vierte Seilzug 212 wird dabei so weit gezogen, dass die zweite Rolle 264 in der zweiten Drehposition angeordnet ist. Der Stift 268 wir dabei in der axialen Richtung in Richtung des Stabs 256, so dass der Stift 268 näher an dem Stab 256 angeordnet ist, insbesondere an dem Stab 256 anliegt. Durch das Ziehen des dritten Seilzugs 204 wird die Griffverlängerung 184 in der axialen Richtung von dem Arretierelement 230 in Richtung des Aktuierungselements 228 verlagert, bis das Anschlagelement 266 an dem zweiten Anschlag anliegt. Der zweite Anschlag ist so angeordnet, dass die Griffverlängerung 184 mit dem Aktuierungselement 228 gekoppelt ist, wobei die Griffverlängerung 184 in der Kopplungsstellung 219 angeordnet ist.

Um den Kopplungsmechanismus 192 in den zweiten Kopplungszustand 220 zu verlagern, wird das zweite Betätigungselement 23 betätigt. Dies ist in Fig. 34 (D) dargestellt. Der vierte Seilzug 212 wird dabei so weit gezogen, dass die zweite Rolle 264 in der zweiten Drehposition angeordnet ist. Der vierte Seilzug 212 wird dabei weiter gezogen als bei der Betätigung des ersten Betätigungselements 22. Der Stift 268 wird in der axialen Richtung in Richtung des Stabs 256 gezogen und verschiebt den Stab 256 entgegen der Vorspannkraft des Federelements 254 in der axialen Richtung. Dabei werden die Drehelemente 242, 244 von der ersten Koppelstellung 222 in die zweite Koppelstellung 224 verlagert. Durch das Ziehen des dritten Seilzugs 204 wird die Griffverlängerung 184 in der axialen Richtung von dem Arretierelement 230 in Richtung des Aktuierungselements 228 verlagert, bis das Anschlagelement 266 an dem zweiten Anschlag anliegt. Der zweite Anschlag ist so angeordnet, dass die Griffverlängerung 184 mit dem Aktuierungselement 228 gekoppelt ist, wobei die Griffverlängerung 184 in der Kopplungsstellung 219 angeordnet ist.

Die Bewegungsübertragungseinrichtung 198 weist zwei erste Bewegungsübertragungselemente 270 und zwei zweite Bewegungsübertragungselemente 272 auf. Die Bewegungsübertragungselemente 270, 272 sind zumindest teilweise als Seilzüge ausgebildet. Auf jeder Außenseite 70, 72 der Basisbaugruppe 14 ist das jeweilige erste Drehelement 242 mit je einem der ersten Bewegungsübertragungselemente 270 gekoppelt. Auf jeder Außenseite 70, 72 der Basisbaugruppe 14 ist das jeweilige zweite Drehelement 244 mit je einem der zweiten Bewegungsübertragungselemente 272 gekoppelt. Auf diese Weise kann über Aktuierungsvorrichtung eine Bewegung in der ersten Bewegungsrichtung in dem ersten Kopplungszustand 218 auf die ersten Bewegungsübertragungselemente 270 und in dem zweiten Kopplungszustand 220 auf die zweiten Bewegungsübertragungselemente 272 übertragen werden.

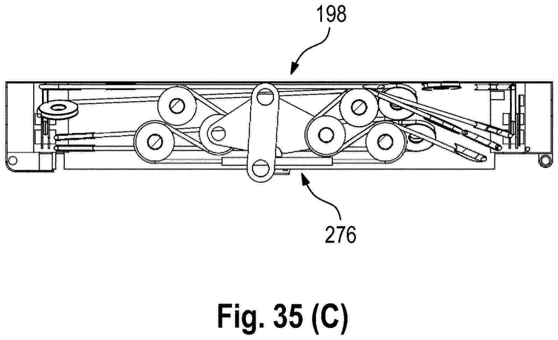

In den Fig. 35 bis 37 ist die Bewegungsübertragungseinrichtung 198 im Detail dargestellt. In Fig. 35 ist die Bewegungsübertragungseinrichtung 198 als ganzes dargestellt.

Ein erstes Ende jedes ersten Bewegungsübertragungselements 270 ist mit dem entsprechenden ersten Drehelement 242 gekoppelt. Das erste Bewegungsübertragungselement 270 läuft zumindest teilweise in der Umlaufrichtung um das erste Drehelement 242 um. Durch eine Schwenkbewegung des ersten Drehelements 242 in der ersten Bewegungsrichtung wird das Bewegungsübertragungselement 270 gezogen. Auf diese Weise wird eine Bewegung in der ersten Bewegungsrichtung auf das Bewegungsübertragungselement 270 übertragen.

Ein erstes Ende jedes zweiten Bewegungsübertragungselements 272 ist mit dem entsprechenden zweiten Drehelement 244 gekoppelt. Das zweite Bewegungsübertragungselement 272 läuft zumindest teilweise in der Umlaufrichtung um das zweite Drehelement 244 um. Durch eine Schwenkbewegung des zweiten Drehelements 244 in der ersten Bewegungsrichtung wird das Bewegungsübertragungselement 272 gezogen. Auf diese Weise wird eine Bewegung in der ersten Bewegungsrichtung auf das Bewegungsübertragungselement 272 übertragen.

Das zweite Ende jedes ersten Bewegungsübertragungselements 270 ist mit jeweils einem Arm 96 derart gekoppelt, dass, wenn die ersten Bewegungsübertragungselemente 270 in der ersten Bewegungsrichtung bewegt werden, die Arme 96 einer Drehrichtung um die erste Schwenkachse 100 von der Transportposition 108 in die Ladeposition 110 geschwenkt werden. Das zweite Ende jedes ersten Bewegungsübertragungselements 270 ist dazu exzentrisch zur ersten Schwenkachse 100 an dem Arm 96 angebracht.

Das zweite Ende jedes zweiten Bewegungsübertragungselements 272 ist mit jeweils einem Arm 96 derart gekoppelt, dass, wenn die zweiten Bewegungsübertragungselemente 270 in der ersten Bewegungsrichtung bewegt werden, die Arme 96 in einer Drehrichtung um die erste Schwenkachse 100 von der Ladeposition 110 in die Transportposition 108 geschwenkt werden. Das zweite Ende jedes zweiten Bewegungsübertragungselements 272 ist dazu exzentrisch zur ersten Schwenkachse 100 an dem Arm 96 angebracht.

Jedes erste Bewegungsübertragungselements 270 weist einen ersten Zugabschnitt, einen Bremsabschnitt und einen zweiten Zugabschnitt auf. Der Bremsabschnitt ist zwischen den beiden Zugabschnitten angeordnet. Der erste Zugabschnitt erstreckt sich bis zu dem ersten Ende des Bewegungsübertragungselements 270 und der zweite Zugabschnitt erstreckt sich bis zu dem zweiten Ende des Bewegungsübertragungselements 270. Die Zugabschnitte sind als Seilzüge ausgebildet. Der Bremsabschnitt ist aus einem steifen Material ausgebildet, wie beispielsweise einem Metall. Die beiden Bremsabschnitte der beiden Bewegungsübertragungselemente 270 sind integral mittels eines Bremselements 278 ausgebildet sein.

Jedes zweite Bewegungsübertragungselement 272 weist einen Zugabschnitt und einen Schubabschnitt auf. Der Zugabschnitt erstreckt sich bis zu dem ersten Ende des Bewegungsübertragungselements 272 und der Schubabschnitt erstreckt sich bis zu dem zweiten Ende des Bewegungsübertragungselements 272. Der Zugabschnitt ist als Seilzug ausgebildet. Der Schubabschnitt ist als Schubstange ausgebildet. Der Zugabschnitt ist mit dem Schubabschnitt derart gekoppelt, dass eine Zugbewegung des zweiten Bewegungsübertragungselements 272 in der ersten Bewegungsrichtung den Schubabschnitt in Richtung des zweiten Endes des zweiten Bewegungsübertragungselements 272 schiebt.

Die Bewegungsübertragungseinrichtung 198 weist des Weiteren eine Vielzahl von Umlenkrollen auf, mittels denen die Seilzüge der Zugabschnitte der ersten und zweiten Bewegungsübertragungselemente 270, 272 mehrfach umgelenkt werden. Diese Umlenkrollen sind in der Basisbaugruppe drehbar gelagert.

Die Bewegungsübertragungseinrichtung 198 weist des Weiteren eine Bremseinrichtung 276 für die ersten Bewegungsübertragungselemente 270 auf. Die Bremseinrichtung 276 ist zwischen einer Blockierstellung und einer Freigabestellung verlagerbar. In der Blockierstellung sind die ersten Bewegungsübertragungselemente 270, insbesondere entgegen der ersten Bewegungsrichtung, gebremst bzw. blockiert. Die Bremseinrichtung 276 ist durch eine Zugbewegung bzw. Zugkraft des ersten Bewegungsübertragungselements 270 entgegen der ersten Bewegungsrichtung in die Blockierstellung verlagerbar. Aufgrund der Gewichtskraft der Arme 96 und der Aufnahme 93 und gegebenenfalls der auf der ersten Aufnahme 93 abgeordneten Ladung (beispielsweise einer Transportbox oder Kiste), wird auf das erste Bewegungsübertragungselement 270 eine Zugkraft entgegen der ersten Bewegungsrichtung ausgeübt, wenn keine erste Aktuierung erfolgt. Die Blockierstellung dient somit dazu, eine Schwenkbewegung der Arme 96 um die erste Schwenkachse 100 zu verhindern, wenn keine erste Aktuierung erfolgt. Damit wird die erste Aufnahme 93 in der jeweiligen Position gehalten wird. Durch eine Bewegung des ersten oder zweiten Bewegungsübertragungselements 270, 272 in der ersten Bewegungsrichtung ist die Bremseinrichtung 276 in die Freigabestellung verlagerbar. In der Freigabestellung werden die ersten Bewegungsübertragungselemente 270 nicht gebremst und somit freigegeben.

Die Bremsreinrichtung 276 weist das Bremselement 278, ein Blockierelement 280 und eine Anlageelement 282 auf. Das Bremselement 278 ist zwischen dem Blockierelement 280 und dem Anlageelement 282 angeordnet. In der Blockierstellung ist das Bremselement 278 zwischen dem Blockierelement 280 und dem Anlageelement 282 eingeklemmt, so dass das Bremselement 278 nicht in der ersten Bewegungsrichtung bewegt werden kann. In der Freigabestellung ist das Bremselement 278 nicht zwischen dem Blockierelement 280 und dem Anlageelement 282 geklemmt, so dass das Bremselement 278 in und entgegen der ersten Bewegungsrichtung bewegt werden kann. Ein erstes Ende des Blockierelements 280 ist um eine Schwenkachse schwenkbar in der Basisbaugruppe 14 gelagert. Ein zweites Ende des Blockierelements 280 bildet einen Bremsabschnitt aus, der in der Blockierstellung an dem Bremselement 278 anliegt bzw. gegen das Bremselement 278 gedrückt wird. Das zweite Ende des Blockierelements 280 ist entgegengesetzt zu dem ersten Ende angeordnet. Zum Verlagern zwischen der Freigabestellung und der Blockierstellung wird das Blockierelement 280 um die Schwenkachse geschwenkt.

Die Seilzüge der ersten Zugabschnitte der ersten Bewegungsübertragungselemente 270 sowie die Seilzuge der Zugabschnitte der zweiten Bewegungsübertragungselemente 272 laufen jeweils um eine erste Umlenkrolle 284 um, die an dem Blockierelement 280 zwischen dem ersten und zweiten Ende des Blockierelements 280 drehbar gelagert ist. Eine Zugbewegung der ersten oder zweiten Bewegungsübertragungselemente 270, 272 durch die erste oder zweite Aktuierung in der ersten Bewegungsrichtung wird über die ersten Umlenkrollen 284 auf das Blockierelement 280 übertragen und zieht das Blockierelement 280 von der Blockierstellung in die Freigabestellung.

Die Seilzüge der zweiten Zugabschnitte der ersten Bewegungsübertragungselemente 270 laufen jeweils um eine zweite Umlenkrolle 286 um, die an dem Blockierelement 280 zwischen dem ersten und zweiten Ende des Blockierelements 280 drehbar gelagert ist. Eine Zugbewegung der ersten Bewegungsübertragungselemente 270, 272 über die zweiten Zugabschnitte entgegen der ersten Bewegungsrichtung wird über die zweiten Umlenkrollen 286 auf das Blockierelement 280 übertragen und zieht das Blockierelement 280 von der Freigabestellung in die Blockierstellung.

Das Drehmoment, das durch die erste und zweite Aktuierung über die ersten Umlenkrollen 284 auf das Blockierelement 278 um die Schwenkachse beaufschlagt wird, ist dabei größer als das Drehmoment, das durch die Zugkraft der zweiten Zugabschnitte, die aus der Gewichtskraft der Arme 96 und der Aufnahme 93 und gegebenenfalls der auf der ersten Aufnahme 93 abgeordneten Ladung resultiert, über die zweiten Umlenkrollen 286 auf das Blockierelement 278 um die Schwenkachse beaufschlagt wird.

Bei der ersten Aktuierung werden die ersten Bewegungsübertragungselemente 270 in der ersten Bewegungsrichtung gezogen. Dadurch wird die Bremseinrichtung 276 in die Freigabestellung verlagert und die Aufnahme 93 in einer Drehrichtung um die Schwenkachse 101 von der Transportposition 108 in die Ladeposition 110 geschwenkt. Dabei werden die zweiten Bewegungsübertragungselemente 272 entgegen der ersten Bewegungsrichtung bewegt. Dies ist möglich, da bei der ersten Aktuierung das zweite Drehelement 244 frei drehbar ist.

Bei der zweiten Aktuierung werden die zweiten Bewegungsübertragungselemente 272 in der ersten Bewegungsrichtung gezogen. Dadurch wird die Bremseinrichtung 276 in die Freigabestellung verlagert und die Aufnahme 93 in einer Drehrichtung um die Schwenkachse 100 von der Ladeposition 110 in die Transportposition 108 geschwenkt. Dabei werden die ersten Bewegungsübertragungselemente 270 entgegen der ersten Bewegungsrichtung bewegt. Dies ist möglich, da bei der zweiten Aktuierung das erste Drehelement 242 frei drehbar ist.

In Fig. 38 ist ein Haltemechanismus dargestellt, mittels dem das Aufnahmeelement 94 während einer Schwenkbewegung der Arme 96 um die erste Schwenkachse 100 zwischen der Transportposition 108 und der Ladeposition 110 horizontal gehalten wird. Der Haltemechanismus ist in beiden Armen 96 entsprechend ausgebildet.

Wie zuvor beschrieben, ist das Aufnahmeelement 94 um die zweite Schenkachse 101 an dem zweiten Ende jedes Arms 96 drehbar gelagert. In jedem Arm 96 ist ein längliches bzw. langgestrecktes Anschlagelement 288 angeordnet. Das Anschlagelement 288 ist insbesondere stabförmig ausgebildet. Das Anschlagelement 288 erstreckt sich in einer Richtung von dem ersten Ende zu dem zweiten Ende des Arms 96. Das Anschlagelement 288 weist ein erstes Ende, das dem ersten Ende des Arms 96 zugewandt ist, und ein zweites Ende, das dem zweiten Ende des Arms 96 zugewandt ist, auf.

Das zweite Ende des Anschlagelements 288 weist einen Anschlagabschnitt 290 für das Aufnahmeelement 94 auf. Der Anschlagabschnitt 290 hält das Aufnahmeelement 94 in der horizontalen Stellung und verhindert, dass das Aufnahmeelement 94 weiter nach unten geschwenkt bzw. gekippt werden kann. Wie zuvor beschrieben, kann das Aufnahmeelement 94 um die zweite Schwenkachse 101 manuell nach oben in eine vertikale Stellung geschwenkt bzw. geklappt werden, wobei das Aufnahmeelement 94 von dem Anschlagelement 288 weg geschwenkt wird. In der horizontalen Stellung liegt ein Anlageabschnitt 292 des Aufnahmeelements 94 an dem Anschlagabschnitt 290 des Anschlagelements 288 an. Der Anlageabschnitt 292 und der Anschlagabschnitt 290 können komplementär zueinander ausgebildet sein. Insbesondere kann der Anlageabschnitt 292 eine halbkreisförmige Ausnehmung aufweisen und der Anlageabschnitt 290 einen entsprechenden halbkreisförmigen Vorsprung aufweisen, wobei der halbkreisförmige Vorsprung in der horizontalen Stellung in der halbkreisförmigen Ausnehmung angeordnet ist. Das Anschlagelement 288 ist in dem Arm 96 translatorisch parallel zu einer Erstreckungsrichtung des Arms 96 verlagerbar. Die Erstreckungsrichtung verläuft von dem ersten Ende zu dem zweiten Ende des Arms 96. Durch eine Verlagerung des Anschlagelements 288 wird die Position des Anschlagabschnitts 290 verändert.

Zum Verlagern des Anschlagelements 288 ist die Bewegung des Anschlagelements mit der Schwenkbewegung des Arms 96 um die erste Schwenkachse 100 gekoppelt. Dazu ist das Anschlagelement 288 mit einem Seilzug 294 gekoppelt. Der Seilzug 294 ist in der Ladeposition 110 entspannt und in der Transportposition 108 gespannt.

Der Seilzug 294 koppelt eine erste Profilscheibe 296 mit einer zweiten Profilscheibe 298. Ein erstes Ende des Seilzugs 294 ist an der ersten Profilscheibe 296 befestigt. Die erste Profilscheibe 296 weist einen ersten Umlaufabschnitt auf, um den der Seilzug 294 umläuft. Ein zweites Ende des Seilzugs 294 ist an der zweiten Profilscheibe 298 befestigt. Die zweite Profilscheibe 298 weist einen zweiten Umlaufabschnitt auf, um den der Seilzug 294 umläuft. Die erste Profilscheibe 296 ist an der ersten Schwenkachse 100 angeordnet und starr mit der Basisbaugruppe 14 verbunden. Die zweite Profilscheibe 298 in dem Arm 96 drehbar gelagert. Das zweite Ende des Anschlagelements ist über einen Hebel 299 mit der zweiten Profilscheibe 298 gekoppelt. Ein erstes Ende des Hebels 299 ist an dem zweiten Ende des Anschlagelements 288 drehbar gelagert. Das zweite Ende des Hebels 299 ist drehfest mit der zweiten Profilscheibe 298 verbunden. Durch eine Drehung der zweiten Profilscheibe 298 wird das Anschlagelement 288 über den Hebel 299 parallel zu der Erstreckungsrichtung des Arms 96 verlagert.

Ein Radius der ersten Profilscheibe 296 in dem ersten Umlaufabschnitt entspricht einem Radius der zweiten Profilscheibe 298 in dem zweiten Umlaufabschnitt. Des Weiteren entspricht eine Länge des Hebels 299 einem Abstand zwischen der zweiten Schwenkachse 101 und dem Anschlagabschnitt 290.

Der Seilzug 294 läuft zwischen den Profilscheiben 296, 298 um eine erste Umlenkrolle 300 und eine zweite Umlenkrolle 302 um. Die erste Umlenkrolle 300 ist in der Erstreckungsrichtung des Arms 96 zwischen den Profilscheiben 296, 298 angeordnet. Die zweite Umlenkrolle 302 ist in der Erstreckungsrichtung stromabwärts von der zweiten Profilscheibe 298 angeordnet. In anderen Worten ist die zweite Umlenkrolle 302 zwischen der zweiten Profilscheibe 298 und dem zweiten Ende des Arms 96 angeordnet.

Wenn die Arme 96 in der Transportposition 108 angeordnet sind, läuft der Seilzug 294 entlang des ersten Umlaufabschnitts der ersten Profilscheibe 296 um eine erste Strecke um. Wenn die Arme 96 in der Ladeposition 110 angeordnet sind, läuft der Seilzug 294 entlang des ersten Umlaufabschnitts der ersten Profilscheibe 296 um eine zweite Strecke um. Die erste Strecke ist länger als die zweite Strecke. Mit anderen Worten entsprechen die erste und zweite Strecke jeweils der umlaufenden Wegstrecke, über die der Seilzug 294 an dem ersten Umlaufabschnitt anliegt. Daher liegt der Seilzug 294 in der Transportposition 108 über eine weitere Wegstrecke an dem ersten Umlaufabschnitt an als in der Ladeposition 110.

Eine Gesamtlänge des Seilzugs 294 von dem ersten zu dem zweiten Ende ist in der Transportposition 108 und der Ladeposition 110 gleich und verändert sich nicht. Die Länge des Abschnitts des Seilzugs 294 zwischen dem ersten Umlaufabschnitt der ersten Profilscheibe 296 und dem zweiten Ende des Seilzugs 296 ist daher in der Transportposition 108 kürzer als in der Ladeposition 110. Somit ist die zweite Profilscheibe 298 in der Transportposition 108 gegenüber der Ladeposition 110 um einen Winkel gedreht. Da die Radien der Profilscheiben 296, 298 gleich groß sind, entspricht dieser Winkel genau dem Winkel, über den der Seilzug länger an dem ersten Umlaufabschnitt anliegt. In anderen Worten ist der Winkel, der die Differenz der ersten und zweiten Strecke entlang des ersten Umlaufabschnitts überstreicht, gleich dem Winkel, um den die zweite Profilscheibe 298 gedreht ist.

Das Anschlagelement 288 ist entgegen der Erstreckungsrichtung vorgespannt. Die Vorspannung kann beispielsweise durch die Gewichtskraft des Aufnahmeelements 94 erfolgen, durch die das Aufnahmeelement 94 um die zweite Schwenkachse 101 gegen das Anschlagelement 288 gedrückt wird. Zusätzlich oder alternativ kann eine Federeinrichtung vorgesehen sein, die das Anschlagelement 288 entgegen der Erstreckungsrichtung vorspannt. Alternativ können auch der Hebel 299 oder die zweite Profilscheibe entgegen der Erstreckungsrichtung vorgespannt sein, wodurch das Anschlagelement entgegen der Erstreckungsrichtung vorgespannt ist.

Im Folgenden wird die Funktionsweise des Haltemechanismus beschrieben, mittels dem das Aufnahmeelement 94 während einer Schwenkbewegung der Arme 96 um die erste Schwenkachse 100 zwischen der Transportposition 108 und der Ladeposition 110 horizontal gehalten wird.

Wenn die Arme 96 von der Transportposition 108 in die Ladeposition 110 geschwenkt werden, verkürzt sich die Strecke, entlang der der Seilzug 294 an dem ersten Umlaufabschnitt der ersten Profilscheibe 296 anliegt. Dadurch wird die zweite Profilscheibe 298 durch die Vorspannung zusammen mit dem Hebel 299 entgegen der Erstreckungsrichtung in Richtung des ersten Endes des Arms 96 gedreht. Dadurch wird das Anschlagelement 288 entgegen der Erstreckungsrichtung verschoben. Dadurch ändert sich der Anschlag für das Aufnahmeelement 94 derart, dass das Aufnahmeelement 94 in der horizontalen Stellung horizontal ausgerichtet bleibt, wenn es an dem Anschlag anliegt.

Wenn die Arme 96 von der Ladeposition 110 in die Transportposition 108 geschwenkt werden, verlängert sich die Strecke, entlang der der Seilzug 294 an dem ersten Umlaufabschnitt der ersten Profilscheibe 296 anliegt. Dadurch wird die zweite Profilscheibe 298 zusammen mit dem Hebel 299 in der Erstreckungsrichtung in Richtung des zweiten Endes des Arms 96 gedreht. Dadurch wird das Anschlagelement 288 in der Erstreckungsrichtung verschoben. Dadurch ändert sich der Anschlag für das Aufnahmeelement 94 derart, dass das Aufnahmeelement 94 in der horizontalen Stellung horizontal ausgerichtet bleibt, wenn es an dem Anschlag anliegt.

Vorzugsweise können auch zwei Seilzüge 294 vorgesehen sein, die die erste und zweite Profilscheibe 296, 298 miteinander koppeln. Jeder Seilzug 294 erstreckt sich dabei von der ersten Profilscheibe 296 zu der zweiten Profilscheibe 298. Die Seilzüge 294 verlaufen in der Erstreckungsrichtung des Arms 96 parallel zueinander. Insbesondere ist das Anschlagelement 288 zwischen den Seilzügen 294 angeordnet.

In den Figuren 39 bis 41 ist einen Verlagerungsmechanismus dargestellt, mittels dem die Vorderräder 19 des Transportwagens 10 zwischen der eingefahrenen Stellung 118 und der ausgefahrenen Stellung 120 verlagert werden können. Insbesondere ist mittels des Verlagerungsmechanismus eine Schwenkbewegung der ersten Aufnahme 93 zwischen der Transportposition 108 und der Ladeposition 110 mit einer Verlagerung jedes Vorderrads 19 zwischen der eingefahrenen Stellung 118 und der ausgefahrenen Stellung 120 gekoppelt.

In den Fig. 39 ist das Vorderrad in der eingefahrenen Stellung 118 angeordnet. In Fig. 40 ist das Vorderrad in der ausgefahrenen Stellung 120 angeordnet. In Fig. 41 ist ein Ausschnitt aus Fig. 39 vergrößert dargestellt, der die Anordnung der Komponenten des Verlagerungsmechanismus in dem Verbindungselement 88 im Detail zeigt.

Das erste Teilstück des Verbindungselements 88 ist mit dem Bezugszeichen 304 gekennzeichnet. Das zweite Teilstück des Verbindungselements 88 ist mit dem Bezugszeichen 306 gekennzeichnet. Wie zuvor bereits beschrieben, ist das erste Teilstück 304 relativ zu dem zweiten Teilstück 306 translatorisch verlagerbar. Das zweite Teilstück 306 weist vorzugsweise eine Öffnung auf, durch die das erste Teilstück 304 in das zweite Teilstück 306 eingezogen bzw. aus der das erste Teilstück 304 aus dem zweiten Teilstück 306 herausgezogen werden kann.

Beim Verlagern aus der eingefahrenen Stellung 118 in die ausgefahrene Stellung 120 werden das Vorderrad 19 und das erste Teilstück 304 gemeinsam in einer Ausfahrrichtung 330 bewegt. Beim Verlagern aus der ausgefahrenen Stellung 120 in die eingefahrene Stellung 118 werden das Vorderrad 19 und das das erste Teilstück 304 gemeinsam entgegen der Ausfahrrichtung 330 bewegt.

Der Verlagerungsmechanismus weist einen ersten Seilzug 308 und einen zweiten Seilzug 310 auf, die über eine erste Scheibe 312 und eine zweite 314 miteinander gekoppelt sind. Der erste Seilzug 308 läuft in Umfangsrichtung um die erste Scheibe 312 um. Der zweite Seilzug 310 läuft in Umfangsrichtung um die zweite Scheibe 314 um.

Die erste und die zweite Scheibe 312, 314 sind in der Seitenbaugruppe 16 um eine gemeinsame Drehachse drehbar, wobei Scheiben 312, 314 drehfest miteinander gekoppelt sind. Die Drehachse ist vorzugsweise senkrecht zu der Außenseite 40 und Innenseite 41 der Seitenbaugruppe 16 angeordnet. Die Scheiben 312, 314 sind in einer oberen Hälfte der Seitenbaugruppe 16. angeordnet. Die erste Scheibe 312 hat einen ersten Durchmesser und die zweite Scheibe 314 hat einen zweiten Durchmesser. Der erste Durchmesser ist kleiner als der zweite Durchmesser. Das Verhältnis des ersten Durchmessers zu dem zweiten Durchmesser kann 1:2 bis 1:8, vorzugsweise 1:4 bis 1:6, insbesondere 1:5, betragen.

Der erste Seilzug 308 weist einen ersten Abschnitt 316 und einen zweiten Abschnitt 318 auf. Der erste Abschnitt 316 erstreckt sich von der ersten Scheibe 312 bis zu einem ersten Ende des ersten Seilzugs 308 und der zweite Abschnitt 318 erstreckt sich von der ersten Scheibe 312 bis zu einem zweiten Ende des ersten Seilzugs 308. Beide Abschnitte 316, 318 sind aus der Seitenbaugruppe 16 in die Basisbaugruppe 14 geführt und an dem Arm 96 befestigt, der an der Basisbaugruppe 14 angeordnet ist. Der erste Abschnitt 316 des Seilzugs 308 erstreckt sich von dem Arm 96 nach unten und der zweite Abschnitt 318 erstreckt sich von dem Arm 96 nach oben. Auf diese Weise wird das erste Ende des ersten Seilzugs 308 gezogen, wenn der Arm 96 von der Transportposition 108 in die Ladeposition 110 geschwenkt wird, und das zweite Ende des ersten Seilzugs 308 gezogen, wenn der Arm 96 von der Ladeposition 110 in die Transportposition 108 geschwenkt wird. Wird das erste Ende des ersten Seilzugs 308 gezogen, so werden die Scheiben 312, 314 in einer ersten Drehrichtung gedreht. Wird das zweite Ende des ersten Seilzugs 308 gezogen, so werden die Scheiben 312, 314 in einer zweiten, entgegengesetzten Drehrichtung gedreht.

Der zweite Seilzug 310 weist einen ersten Abschnitt 320 und einen zweiten Abschnitt 322 auf. Der erste Abschnitt 320 erstreckt sich von der zweiten Scheibe 314 bis zu einem ersten Ende des zweiten Seilzugs 310 und der zweite Abschnitt 322 erstreckt sich von der zweiten Scheibe 314 bis zu einem zweiten Ende des zweiten Seilzugs 310. Die Abschnitte 320, 322 sind aus der Seitenbaugruppe in das Verbindungselement 88 geführt. Das erste Ende des zweiten Seilzugs 310 ist auf einer ersten Seite des ersten Teilstücks 304 befestigt. Das zweite Ende des zweiten Seilzugs 310 ist auf einer zweiten Seite des ersten Teilstücks 304 befestigt. Die erste Seite des ersten Teilstücks 304 ist in der Ausfahrrichtung 330 stromaufwärts und die zweite Seite in der Ausfahrrichtung 330 stromabwärts angeordnet.

Bei einer Drehbewegung der zweiten Scheibe 314 in der ersten Drehrichtung wird an dem ersten Abschnitt 320 des zweiten Seilzugs 310 gezogen, wobei das erste Ende des zweiten Seilzugs 310 in Richtung des zweiten Endes gezogen wird. Bei einer Drehbewegung der zweiten Scheibe 314 in der zweiten Drehrichtung wird an dem zweiten Abschnitt 322 des zweiten Seilzugs 310 gezogen, wobei das zweite Ende des zweiten Seilzugs 310 in Richtung des ersten Endes gezogen wird.

Der erste Abschnitt 320 des zweiten Seilzugs 310 wird über eine erste Umlenkrolle 324 und eine zweite Umlenkrolle 326 umgelenkt. Die zweite Umlenkrolle 326 ist entlang des Seilzugs 310 zwischen der ersten Umlenkrolle 324 und dem ersten Ende angeordnet. Die erste Umlenkrolle 324 ist auf einer ersten Seite des zweiten Teilstücks 306 drehbar gelagert. Die zweite Umlenkrolle 326 ist auf einer zweiten Seite des zweiten Teilstücks 306 drehbar gelagert. Die erste Seite des zweiten Teilstücks 306 ist in der Ausfahrrichtung 330 stromaufwärts und die zweite Seite in der Ausfahrrichtung 330 stromabwärts angeordnet. Wenn mittels der zweiten Scheibe 314 der erste Abschnitt 320 des zweiten Seilzugs 310 gezogen wird, wird das erste Ende des zweiten Seilzugs 310 in der Ausfahrrichtung 330 in Richtung der zweiten Umlenkrolle 326 gezogen, wobei das erste Teilstück in der Ausfahrrichtung 330 verlagert wird.

Der zweite Abschnitt 322 des zweiten Seilzugs 310 wird über eine dritte Umlenkrolle 328 umgelenkt. Die dritte Umlenkrolle 328 ist auf der ersten Seite des zweiten Teilstücks 306 drehbar gelagert. Wenn mittels der zweiten Scheibe 314 der zweite Abschnitt 320 des zweiten Seilzugs 310 gezogen wird, wird das zweite Ende des zweiten Seilzugs 310 in der Ausfahrrichtung 330 in Richtung der dritten Umlenkrolle 328 gezogen, wobei das erste Teilstück 304 in der entgegen der Ausfahrrichtung 330 verlagert wird.

Wenn die Aufnahme 93 von der Transportposition 108 in die Ladeposition 110 verlagert wird, wird der erste Seilzug 308 derart bewegt, dass sich die Scheiben 312, 314 in der ersten Drehrichtung drehen. Dadurch wird der zweite Seilzug 310 derart bewegt, dass das erste Teilstück 304 gegenüber dem zweiten Teilstück 306 in der Ausfahrrichtung 330 verlagert wird, wodurch das Vorderrad 19 von der eingefahrenen Stellung 118 in die ausgefahrene Stellung 120 verlagert wird.

Wenn die Aufnahme 93 von der Ladeposition 110 in die Transportposition 108 verlagert wird, wird der erste Seilzug 308 derart bewegt, dass sich die Scheiben 312, 314 in der zweiten Drehrichtung drehen. Dadurch wird der zweite Seilzug 310 derart bewegt, dass das erste Teilstück 304 gegenüber dem zweiten Teilstück 306 entgegen der Ausfahrrichtung 330 verlagert wird, wodurch das Vorderrad 19 von der ausgefahrenen Stellung 120 in die eingefahrene Stellung 118 verlagert wird.

In den Figuren 42 und 43 ein Mechanismus dargestellt, mittels dem jedes Vorderrad 19 in eine vorbestimmte Ausrichtung gedreht wird, wenn die entsprechende Seitenbaugruppen 16 von der aufgeklappten Stellung 80 in die zugeklappte Stellung 76 verlagert wird.

Wie zuvor beschrieben ist das Vorderrad 19 an einem ersten Ende des Verbindungselements 88 und das Hinterrad 18 an einem zweiten, entgegengesetzten Ende des Verbindungselements 88 angeordnet. Insbesondere ist das Vorderrad 19 auf der zweiten Seite des ersten Teilstücks 304 angeordnet und das Hinterrad 18 auf der ersten Seite des zweiten Teilstücks 306 angeordnet. Die Richtung von der ersten zu der zweiten Seite des Verbindungselements 88 wird als Erstreckungsrichtung bezeichnet. Die Erstreckungsrichtung verläuft parallel zu der Ausfahrrichtung 330.

Das Vorderrad 19 ist an dem Verbindungselement 88, insbesondere an dem ersten Teilstück 304, mittels einer Lenkachse 332 drehbar gelagert. Die Lenkachse 332 ist senkrecht zu der Erstreckungsrichtung angeordnet. In der ausgeklappten Stellung 78 erstreckt sich die Lenkachse 332 in einer Richtung von der Unterseite 44 zu der Oberseite 42 der Seitenbaugruppe. In anderen Worten erstreckt sich die Lenkachse 332 dabei in der y-Richtung. Die Lenkachse 332 ist insbesondere in dem ersten Teilstück 304 gelagert und erstreckt sich nach unten aus dem ersten Teilstück heraus 304, wobei das Vorderrad 19 an einem unteren Ende der Lenkachse 332 angeordnet ist.

In der vorbestimmten Ausrichtung ist das Vorderrad 19 parallel zu der Erstreckungsrichtung ausgerichtet. Insbesondere ist das Vorderrad 19 bezüglich der Erstreckungsrichtung stromabwärts von der Lenkachse 332 angerordnet.

Um die Lenkachse 332 herum sind ein erstes Hülsenelement 334 und ein zweites Hülsenelement 336 angeordnet. Das erste Hülsenelement 334 ist oberhalb des zweiten Hülsenelements 336 angeordnet. Das erste Hülsenelement 334 ist mit der Lenkachse 332 drehfest gekoppelt. Das zweite Hülsenelement 336 ist auf der Lenkachse 332 drehbar gelagert.

Das zweite Hülsenelement 336 kann in einer axialen Richtung der Lenkachse 332 zwischen einer gekoppelten Stellung und einer entkoppelten Stellung verlagert werden. In der gekoppelten Stellung ist das zweite Hülsenelement 336 mit dem ersten Hülsenelement 334 drehfest gekoppelt. In der entkoppelten Stellung ist die Lenkachse 332 um das zweite Hülsenelement 336 frei drehbar.

Das erste Hülsenelement 334 weist in der axialen Richtung der Lenkachse 332 auf der dem zweiten Hülsenelement 336 zugewandten Seite mindestens einen Vorsprung 338 auf. Das zweite Hülsenelement 338 weist in der axialen Richtung der Lenkachse 332 auf der dem zweiten Hülsenelement 336 zugewandten Seite komplementär dazu geformte Ausnehmungen 340 auf. Jeder Vorsprung 338 ist mit einer der Ausnehmungen 340 in Eingriff bringbar, um die Hülsenelemente 334, 336 miteinander zu koppeln.

Auf der Oberseite des Verbindungselements 88 ist ein erstes Schubelement 342 angeordnet. Das erste Schubelement 342 ist plattenförmig ausgebildet und erstreckt sich in der Erstreckungsrichtung des Verbindungselements 88. In der Erstreckungsrichtung ist das erste Schubelement 342 zwischen dem ersten Hülsenelement 334 und der ersten Seite des Verbindungselements 88 angeordnet. Das erste Schubelement 342 ist in der Erstreckungsrichtung verlagerbar.

Auf der Unterseite des Verbindungselements 88 ist ein zweites Schubelement 344 angeordnet. Das zweite Schubelement 344 ist plattenförmig ausgebildet und erstreckt sich in der Erstreckungsrichtung des Verbindungselements 88. In der Erstreckungsrichtung erstreckt sich das zweite Schubelement 344 von der Lenkachse 332 in Richtung der ersten Seite des Verbindungselements 88 angeordnet. Das zweite Schubelement 344 ist in senkrecht zu der Erstreckungsrichtung und parallel zu der Lenkachse 332 verlagerbar.

Das erste Schubelement 342 weist in der Erstreckungsrichtung auf der dem ersten Hülsenelement 334 zugewandten Seite einen ersten Vorsprung 346 auf, wobei das erste Hülsenelement in Umfangsrichtung der Lenkachse 332 eine komplementäre erste Aussparung 348 aufweist. Durch eine Verlagerung des ersten Schubelements 342 in der Erstreckungsrichtung kann der erste Vorsprung 346 mit der ersten Aussparung 348 in Eingriff gebracht werden, wodurch die Lenkachse 332 nicht gedreht werden kann. Sind der erste Vorsprung 346 und die erste Aussparung 348 außer Eingriff, kann die Lenkachse 332 gedreht werden. Wenn der erste Vorsprung 346 und die erste Aussparung 348 fluchtend zueinander angeordnet sind, ist das Vorderrad 19 in der vorbestimmten Ausrichtung angeordnet.

Zwischen dem ersten Schubelement 342 und dem zweiten Schubelement 344 ist ein Kopplungselement 350 angeordnet. Das Kopplungselement 350 ist ebenfalls plattenförmig ausgebildet. Das Kopplungselement 350 erstreckt sich von dem zweiten Schubelement 344 zu dem ersten Schubelement 342. Das Kopplungselement 350 erstreckt sich somit senkrecht zu der Erstreckungsrichtung des Verbindungselements 88 und parallel zu der Lenkachse 332. Auf der dem ersten Schubelement 342 zugewandten Seite weist das Kopplungselement 350 einen zweiten Vorsprung 352 auf, wobei das erste Schubelement 342 auf der dem Kopplungselement 350 zugewandten Seite eine komplementäre zweite Aussparung 354 aufweist.

Das erste Schubelement 342 parallel zu der Erstreckungsrichtung zwischen einer ersten Entkoppelposition, einer Koppelposition und einer zweiten Entkoppelposition verlagerbar. In der Koppelposition ist das erste Schubelement 342 so angeordnet, dass der zweite Vorsprung 352 in der axialen Richtung fluchtend mit der Aussparung 354 angerordnet ist, so dass der Vorsprung 352 mit der Aussparung 354 durch eine Verlagerung des Kopplungselements 350 in der axialen Richtung in Eingriff gebracht werden kann. In der ersten und zweiten Entkoppelstellung ist das erste Schubelement 342 so angerodnet, dass der zweite Vorsprung 352 in der axialen Richtung nicht fluchtend mit der Aussparung 354 angerordnet ist, so dass der Vorsprung 352 nicht in Eingriff mit der Aussparung 354 gebracht werden kann. In der ersten Entkoppelstellung ist der zweite Vorsprung 352 in der Erstreckungsrichtung stromaufwärts von der zweiten Aussparung 354 angeordnet. In der zweiten Entkoppelstellung ist der zweite Vorsprung 352 in der Erstreckungsrichtung stromabwärts von der zweiten Aussparung 354 angeordnet.

Das Kopplungselement 350 ist mit dem zweiten Schubelement 344 verbunden, so dass das Kopplungselement 350 und das zweite Schubelement gemeinsam parallel zu der Lenkachse 332 verlagert werden können. Das zweite Hülsenelement 336 ist auf der dem ersten Hülsenelement 334 abgewandten Seite mit dem zweiten Schubelement 344 in der axialen Richtung der Lenkachse gekoppelt, so dass das zweite Hülsenelement 336 und das zweite Schubelement gemeinsam parallel zu der Lenkachse 332 verlagert werden können. Das zweite Hülsenelement ist relativ zu dem zweiten Schubelement 344 um die Lenkachse 332 drehbar. Auf diese Weise können das zweite Schubelement 344, das zweite Hülsenelement 336 und das Kopplungselement 350 gemeinsam parallel zu der Lenkachse verlagert werden. In Fig. 43 (A) ist das erste Schubelement 342 in der ersten Entkoppelstellung angeordnet. In Fig. 43 (B) ist das erste Schubelement 342 in der Koppelstellung angeordnet. In Fig. 43 (C) ist das erste Schubelement 342 in der zweiten Entkoppelstellung angeordnet.

Das erste Schubelement 342 ist mittels eines ersten Federelements 356 parallel zu der Erstreckungsrichtung in Eingriffsrichtung mit dem ersten Hülsenelement 334 vorgespannt.

Das zweite Schubelement 344 ist mittels eines zweiten Federelements 358 in der axialen Richtung in Richtung des ersten Schubelements 342 vorgespannt. Auf diese Weise sind das zweite Hülsenelement 336 und das Kopplungselement 350 in Eingriffsrichtung mit dem ersten Hülsenelement 334 und dem ersten Schubelement 342 vorgespannt. Das erste Hülsenelement 334 ist nur dann mit dem zweiten Hülsenelement 336 koppelbar, wenn das erste Schubelement 342 in der Koppelstellung angeordnet ist. Dies wird dadurch erreicht, dass der zweite Vorsprung 352 in der axialen Richtung eine größere Erstreckung als der mindestens eine Vorsprung 338 hat, so dass das erste und zweite Hülsenelement 334, 336 nur miteinander gekoppelt sind, wenn auch das Kopplungselement 350 mit dem ersten Schubelement 342 gekoppelt ist.

Zum Aktivieren des Mechanismus ist in der Seitenbaugruppe 16 ein erster Seilzug angeordnet. Der Seilzug 360 erstreckt sich von einem ersten Ende, das an dem Kniehebel 152, insbesondere an dem zweiten Hebelelement 156 befestigt ist, zu einem zweiten Ende erstreckt, das an einem dritten Schubelement 362 befestigt ist. Das zweite Ende ist insbesondere auf einer in der Erstreckungsrichtung stromabwärts gelegenen Seite des dritten Schubelements 362 angeordnet. Das dritte Schubelement 362 ist parallel zu der Erstreckungsrichtung des Verbindungselements 88 verlagerbar.

Auf der in der Erstreckungsrichtung stromaufwärts gelegenen Seite des dritten Schubelements 362 weist das dritte Schubelement 362 einen Schubabschnitt 364 auf, der um 180° gebogen ist, so dass das freie Ende des Schubabschnitts 364 in Erstreckungsrichtung ausgerichtet ist. Das dritte Schubelement 362 ist oberhalb des Verbindungselements 88 angeordnet, wobei sich der Schubabschnitt 364 in das Verbindungselement 88 durch eine, vorzugsweise in der Erstreckungsrichtung schlitzförmige, Aussparung hinein erstreckt.

In dem Verbindungselement 88 ist ein Verlagerungselement 366 angeordnet. Das Verlagerungselement 366 erstreckt sich in der Erstreckungsrichtung zwischen dem Schubabschnitt 364 und dem ersten Schubelement 342. Das Verlagerungselement 366 ist in der Erstreckungsrichtung verlagerbar. An dem dem Schubabschnitt 364 zugewandten Ende des Verlagerungselement 366 ist eine Aussparung angeordnet, wobei der Schubabschnitt 264 eine dazu komplementären Dorn aufweist. Die Aussparung und der Dorn sind in der Erstreckungsrichtung fluchtend angeordnet. Wenn das dritte Schubelement 362 in der Erstreckungsrichtung verlagert wird, wird der Schubabschnitt 364 gegen das Verlagerungselement 366 gedrückt und verschiebt dieses in der Erstreckungsrichtung. Dabei kommen die Aussparung und der Dorn in Eingriff miteinander.

An dem dem ersten Schubelement 342 zugewandten Ende des Verlagerungselement 366 ist ein erster Hakenabschnitt 368 angeordnet, wobei das erste Schubelement 342 an dem dem Verlagerungselement 366 zugewandten Ende einen zweiten Hakenabschnitt 370 aufweist. Der erste Hakenabschnitt 368 ist in der Erstreckungsrichtung stromabwärts von dem zweiten Hakenabschnitt 370 angeordnet. Der erste Hakenabschnitt 368 und der zweite Hakenabschnitt 370 sind hakenförmig ausgebildet. Der erste Hakenabschnitt 368 und der zweite Hakenabschnitt 370 sind miteinander koppelbar, wenn das Verlagerungselement 366 entgegen der Erstreckungsrichtung verlagert wird oder das erste Schubelement 342 in der Erstreckungsrichtung verlagert wird.

Das Verlagerungselement 366 weist des Weiteren ein Zahnband 372 auf, das sich in der Erstreckungsrichtung erstreckt. In dem Verbindungselement ist des Weiteren ein Zahnrad 374 um eine Drehachse drehbar gelagert, die parallel zu der Lenkachse 332 ausgerichtet ist. Das Zahnrad 374 ist in Eingriff mit dem Zahnband 372. Wenn das Verlagerungselement 366 in der Erstreckungsrichtung verlagert wird, wird das Zahnrad 374 um seine Drehachse in einer ersten Drehrichtung gedreht. Wenn das Verlagerungselement 366 entgegen der Erstreckungsrichtung verlagert wird, wird das Zahnrad 374 um seine Drehachse in einer zweiten Drehrichtung gedreht.

Das Zahnrad 374 ist mit dem zweiten Hülsenelement 336 über einen Seilzug 376 gekoppelt. Das Zahnrad 374 weist einen Zahnungsabschnitt, der mit dem Zahnband 372 in Eingriff ist, und einen Wickelabschnitt auf. Ein erstes Ende des Seilzugs 376 ist an dem Wickelabschnitt des Zahnrads 374 befestigt. In der der ersten Drehrichtung wird der Seilzug 376 um den Wickelabschnitt abgewickelt, wobei der Seilzug nachgegeben wird. In der zweiten Drehrichtung wird der Seilzug 376 um den Wickelabschnitt aufgewickelt, wobei der Seilzug gezogen wird. Ein zweites Ende des Seilzugs 376 ist an einem dritten Federelement 378 befestigt, das derart vorgespannt ist, dass es den Seilzug 376 von dem ersten Ende zu dem zweiten Ende zieht. Zwischen dem ersten und zweiten Ende umläuft der Seilzug 376, insbesondere mehrfach das zweite Hülsenelement 336. Insbesondere ist der Seilzug 376 mehrfach um das Hülsenelement 336 gewickelt. Die Vorspannkraft des dritten Federelements 378 ist größer als die Vorspannkraft des ersten Federelements 356.

In der aufgeklappten Stellung 80 der Seitenbaugruppe 16 ist der Seilzug 360 entspannt. Dadurch sind das dritte Schubelement 362 und das Verlagerungselement 366 in der Erstreckungsrichtung durch die Vorspannkraft des dritten Federelements 378 verschoben, wobei das Verlagerungselement 366 bis zu einem in der Erstreckungsrichtung stromabwärts gelegenen Ende des Zahnradbandes 372 verlagert ist. Das erste Schubelement 342 ist über die beiden Hakenschnitte mit dem Verlagerungselement gekoppelt und entgegen der Vorspannkraft des ersten Federelements 356 in der ersten Entkoppelstellung angeordnet. Dadurch ist das zweite Hülsenelement 336 außer Eingriff mit dem ersten Hülsenelement 334, so dass das Vorderrad 19 um die Lenkachse 332 frei drehbar ist. Dieser Zustand ist in Fig. 43 (A) dargestellt.

Im Folgenden wird die Funktionsweise des Ausrichtungsmechanismus des Vorderrads beim Zuklappen der Seitenbaugruppe 16 beschrieben. Wenn der Kniehebel 152 beim Zuklappen der Seitenbaugruppe 16 geknickt wird, wird der Seilzug 360 von dem zweiten Ende in Richtung des ersten Endes gezogen, so dass das dritte Schubelement 362 in der Erstreckungsrichtung verlagert wird. Dadurch wird das Verlagerungselement 366 in der Erstreckungsrichtung verlagert. Durch die Vorspannkraft des ersten Federelements 356 wird das erste Schubelement 342 in Erstreckungsrichtung verlagert, wobei das Schubelement 342 von der ersten Entkoppelstellung in die Koppelstellung verlagert wird. Durch die Vorspannkraft des zweiten Federelements 358 werden das erste und zweite Hülsenelement 334, 336 sowie das erste Schubelement 342 und das Kopplungselement 350 miteinander gekoppelt, sprich in Eingriff miteinander gebracht. Durch die Verlagerung des Verlagerungselements in der Erstreckungsrichtung wird das Zahnrad 374 in der ersten Drehrichtung gedreht, wobei das zweite Hülsenelement 336 über den Seilzug 376 mitgedreht wird. Da das zweite Hülsenelement 336 mit dem ersten Hülsenelement 334 gekoppelt ist, wird dadurch die Lenkachse 332 gedreht. Dabei wird die erste Aussparung 348 ebenfalls um die Lenkachse 332 gedreht. Dieser Zustand ist in Fig. 43 (B) dargestellt.

Sobald der erste Vorsprung 346 fluchtend mit der ersten Aussparung 348 angeordnet ist, wird das Schubelement 342 durch die Vorspannkraft des ersten Federelements 356 in der Erstreckungsrichtung weiter von der Koppelstellung in die zweite Entkoppelstellung verlagert. Dadurch werden das erste und zweite Hülsenelement 334, 336 sowie das erste Schubelement 342 und das Kopplungselement 350 voneinander entkoppelt, sprich außer Eingriff gebracht. Dadurch dreht sich die Lenkachse 332 frei um das zweite Hülsenelement 336 . Das Verlagerungselement 366 wird solange in der Erstreckungsrichtung verlagert, bis das Zahnrad 374 an dem stromaufwärts gelegenen Ende des Zahnradbandes 372 angeordnet ist.

In der zugeklappten Stellung 76 der Seitenbaugruppe 16 ist der Seilzug 360 gespannt. Dadurch sind das dritte Schubelement 362 und das Verlagerungselement 366 entgegen der Erstreckungsrichtung verschoben, wobei das Verlagerungselement 366 bis zu einem in der Erstreckungsrichtung stromaufwärts gelegenen Ende des Zahnradbandes 372 verlagert ist. Das erste Schubelement 342 ist über die beiden Hakenschnitte mit dem Verlagerungselement 366 gekoppelt und entgegen der Vorspannkraft des ersten Federelements 356 in der zweiten Entkoppelstellung angeordnet. Dadurch ist das zweite Hülsenelement 336 außer Eingriff mit dem ersten Hülsenelement 334, so dass das Vorderrad 19 um die Lenkachse 332 frei drehbar ist. Dieser Zustand ist in Fig. 43 (C) dargestellt.

Beim Aufklappen der Seitenbaugruppe 16 wird der Kniehebel 152 gestreckt, wobei der Seilzug 360 entspannt wird. Dadurch werden das dritte Schubelement 362, das Verlagerungselement 366 und das erste Schubelement 342 durch die Vorspannkraft des dritten Federelements 378 entgegen der Erstreckungsrichtung verlagert. Dabei wird das erste Schubelement von der zweiten Entkoppelstellung in die erste Entkoppelstellung verlagert.

In den Figuren 44 und 45 ist ein Federungsmechanismus des Hinterrads 18 dargestellt. Der Federungsmechanismus ist auf beiden Seitenbaugruppen 16 für jedes Hinterrad 18 vorgesehen. Der Federungsmechanismus weist eine erste Federeinrichtung 380 und eine zweite Federeinrichtung 382 auf. Die erste Federeinrichtung 380 ist dazu ausgebildet, das Hinterrad 18 beim Bewegen des Transportwagens 10 in einer ersten Richtung 388 zu federn. Die zweite Federeinrichtung 382 ist dazu ausgebildet, das Hinterrad 18 beim Bewegen des Transportwagens 10 in einer zweiten Richtung 390 zu federn, die senkrecht zu der ersten Richtung 388 angeordnet ist. Die erste Richtung 388 und die zweite Richtung 390 sind jeweils senkrecht zu einer Laufachse des Hinterrads 18 ausgerichtet. Die Erstreckungsrichtung schließt mit der ersten Richtung 388 einen Winkel von 90° bis 110°, insbesondere 100°, ein. Die Erstreckungsrichtung schließt mit der zweiten Richtung 390 einen Winkel von 0° bis 20°, insbesondere 10°, ein.

Das Hinterrad 18 ist an einem Lagerungselement 384 um die Laufachse drehbar gelagert. Das Lagerungselement 384 ist über einen Hebel 386 mit dem Verbindungselement 88, insbesondere mit dem zweiten Teilstück 306, gekoppelt. Ein erstes Ende des Hebels 386 ist an dem zweiten Teilstück 306 um eine Achse drehbar gelagert, die parallel zu der Laufachse des Hinterrads 18 verläuft. Die Lagerung des ersten Endes ist auf einer Oberseite des Verbindungselements 88 angeordnet. Ein zweites Ende des Hebels 386 ist an dem Lagerungselement 384 um eine Achse drehbar gelagert, die ebenfalls parallel zu der Laufachse des Hinterrads 18 verläuft. Der Lagerungspunkt des Hebels 386 an dem Lagerungselement 384 ist unterhalb des Verbindungselements 88 angeordnet.

Der Hebel 386 verläuft im Wesentlichen parallel zu der ersten Richtung 388. Die erste Federeinrichtung 380 ist im Wesentlichen parallel zu dem Hebel 386 angeordnet. Die zweite Federeinrichtung 382 ist im Wesentlichen senkrecht zu dem Hebel 386 angeordnet.

Ein erstes Ende der ersten Federeinrichtung 380 ist an dem Lagerungselement 384 angeordnet. Das erste Ende der ersten Federeinrichtung 380 ist insbesondere in der ersten Richtung 388 zwischen dem Lagerungspunkt des Hebels 386 an dem Lagerungselement 384 und der Laufachse des Hinterrads 18 an dem Lagerungselement 384 befestigt. Ein zweites Ende der ersten Federeinrichtung 380 ist auf der Unterseite des Verbindungselements 88 befestigt.

Ein erstes Ende der zweiten Federeinrichtung 382 ist an dem Lagerungselement 384 drehbar gelagert und ein zweites Ende der zweiten Federeinrichtung 382 ist auf einer Unterseite des Verbindungselements 88 drehbar gelagert. Die zweite Federeinrichtung 382 erstreckt sich von dem Lagerungspunkt des Hebels 386 an dem Lagerungselement 384 in der ersten Richtung 388 von dem Hinterrad 18 weg. Insbesondere ist das erste Ende der zweiten Federeinrichtung 382 auf derselben Achse gelagert wie der Hebel 386.

Wenn der Transportwagen 10 vertikal ausgerichtet ist, sind die Vorderräder 19 und die Hinterräder 18 auf dem Boden aufgesetzt. Die vertikale Ausrichtung eignet sich besonders zum Schieben des Transportwagens 10. Wird der Transportwagen 10 in der vertikalen Ausrichtung geschoben und stößt dabei mit dem Hinterrad 18 gegen eine Unebenheit oder ein Hinderniss, so wirkt durch diesen Stoß eine Kraft auf das Hinterrad 18 in der ersten Richtung 388. Dies ist in Fig. 45 dargestellt. Durch die erste Federeinrichtung 380 wird der Stoß in der ersten Richtung 388 abgefedert.

Wenn der Transportwagen 10 gegenüber der vertikalen Ausrichtung gekippt ist, sind nur die Hinterräder 18 auf dem Boden aufgesetzt und die Vorderräder sind von dem Boden abgehoben. Die gekippte Ausrichtung eignet sich besonders zum Ziehen des Transportwagens 10. Wird der Transportwagen 10 in der gekippten Ausrichtung gezogen und stößt dabei mit dem Hinterrad 18 gegen eine Unebenheit oder ein Hinderniss, so wirkt durch diesen Stoß eine Kraft auf das Hinterrad 18 in der zweiten Richtung 390. Dies ist in Fig. 44 dargestellt. Durch die zweite Federeinrichtung 382 wird der Stoß in der zweiten Richtung 390 abgefedert.

Beim Ziehen und Schieben des Transportwagens 10 können grundsätzlich auch Kräfte auf das Hinterrad 18 wirken, die Teilkräfte in der ersten und zweiten Richtung 388, 390 aufweisen. Dabei wird die Teilkraft in der ersten Richtung 388 durch die erste Federeinrichtung 380 und die Teilkraft in der zweiten Richtung 390 durch die zweite Federeinrichtung 382 abgefedert.

Fig. 46 zeigt eine Ausführungsform eines Verfahrens 400 zum Überführen eines Transportwagens 10 zwischen einem ersten Betriebsmodus 86 und einem zweiten Betriebsmodus 126. Der Tarnsportwagen 10 kann entsprechend der in den Fig. 1 bis 45 dargestellten Ausführungsformen ausgebildet sein.

In einem ersten Schritt 402 des Verfahrens 400 wird der Transportwagen 10 mittels der Aktuierungsvorrichtung 196 von dem ersten Betriebsmodus 86 in den zweiten Betriebsmodus 126 überführt. Insbesondere kann der Transportwagen 10 mittels einer ersten Aktuierung, bei der das Aktuierungselement 228 der Aktuierungsvorrichtung 196 in einer ersten Bewegungsrichtung 240 bewegt wird, von dem ersten Betriebsmodus 86 in den zweiten Betriebsmodus 126 überführt werden.

In einem weiteren Schritt 404 des Verfahrens 400 wird der Transportwagen 10 mittels der Aktuierungsvorrichtung 196 von dem zweiten Betriebsmodus 126 in den ersten Betriebsmodus 86 überführt. Insbesondere kann der Transportwagen 10 mittels einer zweiten Aktuierung, bei der das Aktuierungselement 228 in der ersten Bewegungsrichtung 240 bewegt wird, von dem zweiten Betriebsmodus 126 in den ersten Betriebsmodus 86 überführt werden.

Fig. 47 zeigt eine Ausführungsform eines Verfahrens 410 zum Überführen eines Transportwagens 10 zwischen einem Packmodus 12 und einem ersten Betriebsmodus 86. Der Tarnsportwagen 10 kann entsprechend der in den Fig. 1 bis 45 dargestellten Ausführungsformen ausgebildet sein.

In einem ersten Schritt 412 des Verfahrens 410 wird der Transportwagen 10 aus dem Packmodus 12, in dem jedes Rad (insbesondere jedes Vorder- und Hinterrad) 18, 19 in der eingeklappten Stellung 74 und jede Seitenbaugruppe 16 in der zugeklappten Stellung 76 angeordnet ist, in den ersten Betriebsmodus 86, in dem jedes Rad 18, 19 in der ausgeklappten Stellung 78 und jede Seitenbaugruppe 16 in der aufgeklappten Stellung 80 angeordnet ist, mittels eines Bewegens der Seitenbaugruppen 16 von der zugeklappten Stellung 76 in die aufgeklappte Stellung 80 überführt, wobei die Bewegung jeder Seitenbaugruppe 16 zwischen der zugeklappten Stellung 76 und der aufgeklappten Stellung 80 mit einer Bewegung des entsprechenden Rads 18 zwischen der eingeklappten Stellung 74 und ausgeklappten Stellung 78 gekoppelt ist.

In einem weiteren Schritt 414 des Verfahrens 410 wird der Transportwagen 10 aus dem ersten Betriebsmodus 86 in den Packmodus 12 mittels eines Bewegens der Seitenbaugruppen 16 von der aufgeklappten Stellung 80 in die zugeklappte Stellung 76 überführt.

Fig. 48 zeigt eine Ausführungsform eines Verfahrens 420 zum Transformieren eines Transportwagens 10. Der Tarnsportwagen 10 kann entsprechend der in den Fig. 1 bis 45 dargestellten Ausführungsformen ausgebildet sein.

In einem ersten Schritt 422 des Verfahrens 420 wird der Transportwagen 10 zwischen dem Packmodus 12 und einem dem Betriebsmodus 86 entsprechend dem Verfahren 410 aus Fig. 47 überführt.

In einem weiteren Schritt 424 des Verfahrens 420 wird der Transportwagen 10 zwischen dem ersten Betriebsmodus 86 und einem zweiten Betriebsmodus 126 entsprechend dem Verfahren 400 aus Fig. 46 überführt.

## Patentansprüche

1. Transportwagen (10) mit einer Basisbaugruppe (14), mit zwei an der Basisbaugruppe (14) angeordneten, einander gegenüberliegenden Seitenbaugruppen (16), mit je mindestens einem an jeweils einer der Seitenbaugruppen (16) angeordneten Rad (18, 19) und mit einer zwischen den Seitenbaugruppen (16) angeordneten ersten Aufnahme (93) für eine Transportbox, **dadurch gekennzeichnet, dass** der Transportwagen (10) eine Aktuierungsvorrichtung (196) aufweist, die dazu ausgebildet ist, den Transportwagen (10) zwischen einem ersten Betriebsmodus (86) und einem zweiten Betriebsmodus (126) zu überführen, wobei die Aktuierungsvorrichtung (196) ein Aktuierungselement (228) aufweist, wobei die Aktuierungsvorrichtung (196) dazu ausgebildet ist, bei einer ersten Aktuierung, bei der das Aktuierungselement (228) in einer ersten Bewegungsrichtung (240) bewegt wird, den Transportwagen (10) von dem ersten Betriebsmodus (86) in den zweiten Betriebsmodus (126) zu überführen und bei einer zweiten Aktuierung, bei der das Aktuierungselement (228) ebenfalls in der ersten Bewegungsrichtung (240) bewegt wird, den Transportwagen von dem zweiten Betriebsmodus (126) in den ersten Betriebsmodus (86) zu überführen.

2. Transportwagen (10) nach Anspruch 1, wobei in dem ersten Betriebsmodus (86) die erste Aufnahme (93) in einer Transportposition (108) und in dem zweiten Betriebsmodus (126) in einer Ladeposition (110) angeordnet ist, wobei die Aktuierungsvorrichtung (196 dazu ausgebildet ist, die erste Aufnahme (93) zwischen der Transportposition (108) und der Ladeposition (110) zu bewegen.

3. Transportwagen (10) nach Anspruch 2, wobei die erste Aufnahme (93) ein Aufnahmeelement (94), insbesondere eine Stellfläche für die Transportbox, aufweist, wobei das Aufnahmeelement (94) über zwei Arme (96) mit der Basisbaugruppe (14) gekoppelt ist, wobei die Arme (96) an der Basisbaugruppe (14) um eine erste Schwenkachse (100) schwenkbar gelagert sind, so dass die erste Aufnahme (93) zwischen der Transportposition (108) und der Ladeposition (110) schwenkbar ist.

4. Transportwagen (10) nach Anspruch 3, wobei das Aufnahmeelement (94) an den Armen (96) um eine zweite Schwenkachse (101) schwenkbar gelagert ist, wobei eine Schwenkbewegung des Aufnahmeelements (94) um die zweite Schwenkachse (101) mit der Schwenkbewegung der Arme (96) um die erste Schwenkachse (100) gekoppelt ist, so dass das Aufnahmeelement (94) in der Ladeposition (110) und der Transportposition (108) horizontal ausgerichtet ist.

5. Transportwagen (10) nach einem der Ansprüche 2 bis 4, wobei an jeder Seitenbaugruppe (16) das mindestens eine Rad (18, 19) ein Vorderrad (19) und ein Hinterrad (18) aufweist, wobei jedes Vorderrad (19) relativ zu dem entsprechenden Hinterrad (18) zwischen einer eingefahrenen Stellung (118) und einer ausgefahrenen Stellung (120) verlagerbar ist, wobei ein Abstand zwischen dem Vorderrad (19) und dem Hinterrad (18) in der ausgefahrenen Stellung (120) größer als in der eingefahrenen Stellung (118) ist, wobei eine Schwenkbewegung der ersten Aufnahme (93) zwischen der Transportposition (108) und der Ladeposition (110) mit einer Verlagerung jedes Vorderrads (19) zwischen der eingefahrenen Stellung (118) und der ausgefahrenen Stellung (120) gekoppelt ist, so dass das Vorderrad (19) in dem ersten Betriebsmodus (86) in der eingefahrenen Stellung (118)) und in dem zweiten Betriebsmodus (126) in der ausgefahrenen Stellung (120) angeordnet ist, insbesondere wobei beim Bewegen der Aufnahme (93) zwischen der Transportposition (108) und der Ladeposition (110) jedes Vorderrad (19) zwischen der eingefahrenen Stellung (118) und der ausgefahrenen Stellung (120) bewegt wird.

6. Transportwagen (10) nach einem der Ansprüche 1 bis 5, wobei der Transportwagen (10) des Weiteren einen an der Basisbaugruppe (14) angeordneten Griff (20) aufweist, wobei der Griff (20) an der Basisbaugruppe (14) um eine Schwenkachse (194) schwenkbar gelagert ist, wobei der Griff (20) mit dem Aktuierungselement (228) koppelbar ist, so dass eine Schwenkbewegung des Griffs (20) auf eine Bewegung des Aktuierungselements (228) parallel zu der ersten Bewegungsrichtung (240), insbesondere in der ersten Bewegungsrichtung (240), übertragen wird.

7. Transportwagen (10) nach Anspruch 6, wobei der Griff (20) an der Basisbaugruppe (14) über einen Kopplungsmechanismus (192) schwenkbar gelagert ist, wobei der Kopplungsmechanismus (192) in einen Arretierzustand (216) bringbar ist, in dem der Griff (20) nicht gegenüber der Basisbaugruppe (14) schwenkbar ist, wobei der Kopplungsmechanismus (192) in zumindest einem Kopplungszustand (218, 220) bringbar ist, in dem der Griff (20) gegenüber der Basisbaugruppe (14) schwenkbar ist und der Griff (20) mit dem Aktuierungselement (228) gekoppelt ist.

8. Transportwagen (10) nach Anspruch 7, wobei der zumindest eine Kopplungszustand (218, 220) einen ersten Kopplungszustand (218) und einen zweiten Kopplungszustand (220) aufweist, wobei die Aktuierungsvorrichtung (196) in dem ersten Kopplungszustand (218) in einer ersten Koppelstellung (222) angeordnet ist, in der die erste Aktuierung erfolgen kann, und in dem zweiten Kopplungszustand (220) in einer zweiten Koppelstellung (224) angeordnet ist, in der die zweite Aktuierung erfolgen kann, insbesondere wobei die erste Aktuierung durch eine Drehbewegung des Griffs (20) in dem ersten Kopplungszustand (218) erfolgt und die zweite Aktuierung durch eine Drehbewegung des Griffs (20) in dem zweiten Kopplungszustand (220) erfolgt.

9. Transportwagen (10) nach Anspruch 8, wobei der Transportwagen (10) an dem Griff (20) ein erstes Betätigungselement (22), mittels dem der Kopplungsmechanismus (192) in den ersten Kopplungszustand (218) überführbar ist, und ein zweites Betätigungselement (23), mittels dem der Kopplungsmechanismus (192) in den zweiten Kopplungszustand (220) überführbar ist, aufweist, insbesondere wobei der Kopplungsmechanismus (192) in den Arretierzustand (216) vorgespannt ist.

10. Transportwagen (10) nach einem der Ansprüche 1 bis 9, wobei die Aktuierungsvorrichtung (196) eine Bewegungsübertragungseinrichtung (198) aufweist, mittels der eine Bewegung des Aktuierungselements (228) in der ersten Bewegungsrichtung (240) mit einer Bewegung der ersten Aufnahme (93) gekoppelt ist, um bei einer Bewegung des Aktuierungselements (228) in der ersten Bewegungsrichtung (240) die erste Aufnahme (93) zwischen der Transportposition (108) und der Ladeposition (110) zu bewegen.

11. Transportwagen (10) nach Anspruch 8 und 10, wobei die Bewegungsübertragungseinrichtung (198) ein erstes Bewegungsübertragungselement (270) und ein zweites Bewegungsübertragungselement (272) aufweist, wobei das erste und das zweite Bewegungsübertragungselement (270, 272) dazu eingerichtet sind, eine Bewegung des Aktuierungselements (228) in der ersten Bewegungsrichtung (240) auf eine Bewegung der Aufnahme (93) zwischen der Transportposition (108) und der Ladeposition (110), insbesondere auf eine Schwenkbewegung der Aufnahme (93) um die Schwenkachse (100), zu übertragen, wobei bei der ersten Aktuierung eine Bewegung des ersten Bewegungsübertragungselements (270) mit einer Bewegung des Aktuierungselements (228) gekoppelt ist und bei der zweiten Aktuierung eine Bewegung des zweiten Bewegungsübertragungselements (272) mit einer Bewegung des Aktuierungselements (228) gekoppelt ist, insbesondere wobei eine Bewegung des ersten Bewegungsübertragungselements (270) in der ersten Koppelstellung (222) mit einer Bewegung des Aktuierungselements (228) in der ersten Bewegungsrichtung (240) gekoppelt ist und eine Bewegung des zweiten Bewegungsübertragungselements (272) in der zweiten Koppelstellung (224) mit einer Bewegung des Aktuierungselements (228) in der ersten Bewegungsrichtung (240) gekoppelt ist.

12. Transportwagen (10) nach Anspruch 11, wobei die Bewegungsübertragungseinrichtung (198) des Weiteren eine Bremseinrichtung (276) aufweist, die zwischen einer Blockierstellung und einer Freigabestellung verlagerbar ist, wobei die Bremseinrichtung (276) durch eine Bewegung des ersten Bewegungsübertragungselements (270) entgegen der ersten Bewegungsrichtung (240) in die Blockierstellung verlagerbar ist, wobei durch eine Bewegung des ersten oder zweiten Bewegungsübertragungselements (270, 272) in der ersten Bewegungsrichtung (240) die Bremseinrichtung (276) in die Freigabestellung verlagerbar ist.

13. Transportwagen (10) nach einem der Ansprüche 1 bis 12, wobei der Transportwagen (10) zwischen einem Packmodus (12), in dem jedes Rad (18, 19) in einer eingeklappten Stellung (74) und jede Seitenbaugruppe (16) in einer zugeklappten Stellung (76) angeordnet ist, und dem ersten Betriebsmodus (86), in dem jedes Rad (18, 19) in einer ausgeklappten Stellung (78) und jede Seitenbaugruppe (16) in einer aufgeklappten Stellung (80) angeordnet ist, überführbar ist, wobei eine Bewegung jeder Seitenbaugruppe (16) zwischen der zugeklappten Stellung (76) und der aufgeklappten Stellung (80) mit einer Bewegung des entsprechenden Rads (18, 19) zwischen der eingeklappten Stellung (74) und der ausgeklappten Stellung (78) gekoppelt ist, so dass beim Bewegen jeder Seitenbaugruppe (16) zwischen der zugeklappten Stellung (76) und der aufgeklappten Stellung (80) das entsprechende Rad (18, 19) zwischen der eingeklappten Stellung (74) und ausgeklappten Stellung (78) bewegt wird.

14. Verfahren (400) zum Überführen eines Transportwagens (10) zwischen einem ersten Betriebsmodus (86) und einem zweiten Betriebsmodus (126), wobei der Transportwagen (10) eine Basisbaugruppe (14), zwei an der Basisbaugruppe (14) angeordnete, einander gegenüberliegende Seitenbaugruppen (16), je mindestens ein an jeweils einer der Seitenbaugruppen (16) angeordnetes Rad (18, 19) und eine zwischen den Seitenbaugruppen (16) angeordnete erste Aufnahme (93) für eine Transportbox aufweist, wobei das Verfahren (400) die folgenden Schritte aufweist:
- Überführen (402) des Transportwagens (10) von dem ersten Betriebsmodus (86) in den zweiten Betriebsmodus (126) mittels einer Aktuierungsvorrichtung (196) des Transportwagens (10); und
- Überführen (404) des Transportwagens (10) von dem zweiten Betriebsmodus (126) in den ersten Betriebsmodus (86) mittels der Aktuierungsvorrichtung (196),
wobei die Aktuierungsvorrichtung (196) ein Aktuierungselement (228) aufweist, wobei die Aktuierungsvorrichtung (196) bei einer ersten Aktuierung, bei der das Aktuierungselement (228) in einer ersten Bewegungsrichtung (240) bewegt wird, den Transportwagen (10) von dem ersten Betriebsmodus (86) in den zweiten Betriebsmodus (126) überführt, und wobei die Aktuierungsvorrichtung (196) bei einer zweiten Aktuierung, bei der das Aktuierungselement (228) ebenfalls in der ersten Bewegungsrichtung (240) bewegt wird, den Transportwagen von dem zweiten Betriebsmodus (126) in den erste Betriebsmodus (86) überführt.

15. Verfahren (420) zum Transformieren eines Transportwagens (10), wobei der Transportwagen (10) eine Basisbaugruppe (14), zwei an der Basisbaugruppe (14) angeordnete, einander gegenüberliegende Seitenbaugruppen (16), je mindestens ein an jeweils einer der Seitenbaugruppen (16) angeordnetes Rad (18, 19) und eine zwischen den Seitenbaugruppen (16) angeordnete erste Aufnahme (93) für eine Transportbox aufweist, wobei das Verfahren (420) die folgenden Schritte aufweist:
- Überführen (422) des Transportwagens (10) zwischen einem Packmodus (12) und einem ersten Betriebsmodus (86); und
- Überführen (424) des Transportwagens (10) zwischen dem ersten Betriebsmodus (86) und einem zweiten Betriebsmodus (126) entsprechend dem Verfahren (400) nach Anspruch 14,
wobei der Schritt des Überführens (422) des Transportwagens (10) zwischen dem Packmodus (12) und dem ersten Betriebsmodus (86) die folgenden Schritte aufweist:
- Überführen (412) des Transportwagens (10) aus dem Packmodus (12), in dem jedes Rad (18, 19) in einer eingeklappten Stellung (74) und jede Seitenbaugruppe (16) in einer zugeklappten Stellung (76) angeordnet ist, in den ersten Betriebsmodus (86), in dem jedes Rad (18, 19) in einer ausgeklappten Stellung (78) und jede Seitenbaugruppe (16) in einer aufgeklappten Stellung (80) angeordnet ist, mittels eines Bewegens der Seitenbaugruppen (16) von der zugeklappten Stellung (76) in die aufgeklappte Stellung, wobei die Bewegung jeder Seitenbaugruppe (16) zwischen der zugeklappten Stellung (76) und der aufgeklappten Stellung (80) mit einer Bewegung des entsprechenden Rads (18, 19) zwischen der eingeklappten Stellung (74) und ausgeklappten Stellung (78) gekoppelt ist;
- Überführen (414) des Transportwagens (10) aus dem ersten Betriebsmodus (86) in den Packmodus (12) mittels eines Bewegens der Seitenbaugruppen (16) von der aufgeklappten Stellung (80) in die zugeklappte Stellung (76).

## Claims

1. A transport cart (10) having a base assembly (14), having two side assemblies (16) which are arranged on the base assembly (14) and are located opposite one another, each having one wheel (18) arranged on one of the side assemblies (16), and having at least one receptacle (93, 94) for a transport box, arranged between the two side assemblies (16), **characterized in that** the transport cart (10) has an actuating device (196) which is designed to transfer the transport cart (10) between a first operating mode (86) and a second operating mode (126), wherein the actuating device (199) comprises an actuating element (197), wherein the actuating device (199) is designed to transfer the transport cart (10) from the first operating mode (86) to the second operating mode (126) during a first actuation in which the actuating element (197) is moved in a first direction of movement, transfer the transport cart (10) from the first operating mode (86) to the second operating mode (126), and in a second actuation, in which the actuating element (197) is likewise moved in the first direction of movement, transfer the transport cart (10) from the second operating mode (126) to the first operating mode (86).

2. The transport cart (10) according to claim 1, wherein in the first operating mode (86) the at least one receptacle (93) is arranged in a transport position (108) and in the second operating mode (126) the at least one receptacle (93) is arranged in a loading position (110), wherein the actuating device (199) is configured to move the at least one receptacle (93) between the transport position (108) and the loading position (110).

3. The transport cart (10) according to claim 2, wherein each receptacle (93) comprises a respective receptacle member (94), in particular a positioning surface for the transport box, wherein the receptacle member (94) is coupled to the base assembly (14) via two arms (96), wherein the arms (96) are pivotally mounted on the base assembly (14) about a first pivot axis (100), such that the first receptacle (93) is pivotable between the transport position (108) and the loading position (110).

4. The transport cart (10) according to claim 3, wherein the receptacle member (94) is pivotably mounted on the arms (96) about a second pivot axis (101), wherein a pivoting movement of the receptacle member (94) about the second pivot axis (101) is coupled with the pivoting movement of the arms (96) about the first pivot axis (100) such that the receptacle member (94) is horizontally aligned in the loading position (110) and the transport position (108).

5. The transport cart (10) according to any one of claims 2 to 4, wherein the at least one wheel (18, 19) on each side assembly (16) comprises a front wheel (19) and a rear wheel (18), wherein each front wheel (19) is displaceable relative to the corresponding rear wheel (18) between a retracted position (118) and an extended position (120), wherein a distance between the front wheel (19) and the rear wheel (18) is greater in the extended position (120) than in the retracted position (118), wherein a pivoting movement of the first receptacle (93) between the transport position (108) and the loading position (110) is coupled with a displacement of each front wheel (19) between the retracted position (118) and the extended position (120), such that the front wheel (19) is arranged in the retracted position (118) in the first operating mode (86) and in the extended position (120) in the second operating mode (126), in particular wherein, when moving the receptacle (93) between the transport position (108) and the loading position (110), each front wheel (19) is moved between the retracted position (118) and the extended position (120).

6. The transport cart (10) according to any one of claims 1 to 5, wherein the transport cart (10) further comprises a handle (20) arranged on the base assembly (14), wherein the handle (20) is pivotably mounted on the base assembly (14) about a pivot axis (194), wherein the handle (20) is coupleable with the actuating element (228) such that a pivoting movement of the handle (20) is transmitted to a movement of the actuating element (228) parallel to the first direction of movement (240), in particular in the first direction of movement (240).

7. The transport cart (10) according to claim 6, wherein the handle (20) is pivotably mounted on the base assembly (14) via a coupling mechanism (192), wherein the coupling mechanism (192) can be brought into a locking state (216) in which the handle (20) is not pivotable relative to the base assembly (14), wherein the coupling mechanism (192) can be brought into at least one coupling state (218, 220) in which the handle (20) is pivotable relative to the base assembly (14) and the handle (20) is coupled to the actuating element (228).

8. The transport cart (10) according to claim 7, wherein the at least one coupling state (218, 220) comprises a first coupling state (218) and a second coupling state (220), wherein the actuating device (196) is arranged in a first coupling position (222) in the first coupling state (218), in which the first actuation can be performed, and is arranged in a second coupling position (224) in the second coupling state (220), in which the second actuation can be performed, in particular wherein the first actuation is performed by a rotational movement of the handle (20) in the first coupling state (218) and the second actuation is performed by a rotational movement of the handle (20) in the second coupling state (220).

9. The transport cart (10) according to claim 8, wherein the transport cart (10) comprises a first operating element (22) on the handle (20), by means of which the coupling mechanism (192) can be transferred into the first coupling state (218), and a second operating element (23), by means of which the coupling mechanism (192) can be transferred into the second coupling state (220), in particular wherein the coupling mechanism (192) is biased into the locking state (216).

10. The transport cart (10) according to any one of claims 1 to 9, wherein the actuating device (196) comprises a motion transmission device (198), by means of which a movement of the actuating element (228) in the first direction of movement (240) is coupled with a movement of the first receptacle (93) to move the first receptacle (93) between the transport position (108) and the loading position (110) during a movement of the actuating element (228) in the first direction of movement (240).

11. The transport cart (10) according to claim 8 and 10, wherein the motion transmission device (198) comprises a first motion transmission element (270) and a second motion transmission element (272), wherein the first and second motion transmission elements (270, 272) are configured to transmit a movement of the actuating element (228) in the first direction of movement (240) to a movement of the receptacle (93) between the transport position (108) and the loading position (110), in particular to a pivoting movement of the receptacle (93) about the pivot axis (100), wherein in the first actuation, a movement of the first motion transmission element (270) is coupled with a movement of the actuating element (228) and in the second actuation, a movement of the second motion transmission element (272) is coupled with a movement of the actuating element (228), in particular wherein a movement of the first motion transmission element (270) in the first coupling position (222) is coupled with a movement of the actuating element (228) in the first direction of movement (240) and a movement of the second motion transmission element (272) in the second coupling position (224) is coupled with a movement of the actuating element (228) in the first direction of movement (240).

12. The transport cart (10) according to claim 11, wherein the motion transmission device (198) further comprises a braking device (276) which is displaceable between a blocking position and a release position, wherein the braking device (276) is displaceable into the blocking position by a movement of the first motion transmission element (270) counter to the first direction of movement (240), wherein the braking device (276) is displaceable into the release position by a movement of the first or second motion transmission element (270, 272) in the first direction of movement (240).

13. The transport cart (10) according to any one of claims 1 to 12, wherein the transport cart (10) is transferable between a packing mode (12), in which each wheel (18, 19) is arranged in a folded-in position (74) and each side assembly (16) is arranged in a folded position (76), and the first operating mode (86), in which each wheel (18, 19) is arranged in an unfolded position (78) and each side assembly (16) is arranged in an unfolded position (80), wherein a movement of each side assembly (16) between the folded position (76) and the unfolded position (80) is coupled with a movement of the corresponding wheel (18, 19) between the folded-in position (74) and the unfolded position (78), such that when each side assembly (16) is moved between the folded position (76) and the unfolded position (80), the corresponding wheel (18, 19) is moved between the folded-in position (74) and the unfolded position (78).

14. A method (400) for transferring a transport cart (10) between a first operating mode (86) and a second operating mode (126), wherein the transport cart (10) comprises a base assembly (14), two side assemblies (16) arranged on the base assembly (14) and located opposite one another, at least one wheel (18, 19) arranged on each of the side assemblies (16), and a first receptacle (93) for a transport box arranged between the side assemblies (16), the method (400) comprising the following steps:
• Transferring (402) the transport cart (10) from the first operating mode (86) to the second operating mode (126) by means of an actuating device (196) of the transport cart (10); and
• Transferring (404) the transport cart (10) from the second operating mode (126) to the first operating mode (86) by means of the actuating device (196), wherein the actuating device (196) comprises an actuating element (228), wherein during a first actuation, in which the actuating element (228) is moved in a first direction of movement (240), the actuating device (196) transfers the transport cart (10) from the first operating mode (86) to the second operating mode (126), and wherein during a second actuation, in which the actuating element (228) is likewise moved in the first direction of movement (240), the actuating device (196) transfers the transport cart (10) from the second operating mode (126) to the first operating mode (86).

15. A method (420) for transforming a transport cart (10), wherein the transport cart (10) comprises a base assembly (14), two side assemblies (16) arranged on the base assembly (14) and located opposite one another, at least one wheel (18, 19) arranged on each of the side assemblies (16), and a first receptacle (93) for a transport box arranged between the side assemblies (16), the method (420) comprising the following steps:
• Transferring (422) the transport cart (10) between a packing mode (12) and a first operating mode (86); and
• Transferring (424) the transport cart (10) between the first operating mode (86) and a second operating mode (126) according to the method (400) of claim 14,
wherein the step of transferring (422) the transport cart (10) between the packing mode (12) and the first operating mode (86) comprises the following steps:
• Transferring (412) the transport cart (10) from the packing mode (12), in which each wheel (18, 19) is arranged in a folded-in position (74) and each side assembly (16) is arranged in a folded position (76), to the first operating mode (86), in which each wheel (18, 19) is arranged in an unfolded position (78) and each side assembly (16) is arranged in an unfolded position (80), by moving the side assemblies (16) from the folded position (76) to the unfolded position, wherein the movement of each side assembly (16) between the folded position (76) and the unfolded position (80) is coupled with a movement of the corresponding wheel (18, 19) between the folded-in position (74) and the unfolded position (78);
• Transferring (414) the transport cart (10) from the first operating mode (86) to the packing mode (12) by moving the side assemblies (16) from the unfolded position (80) to the folded position (76).

## Revendications

1. Chariot de transport (10) comportant un module de base (14), comportant deux modules latéraux (16) disposés sur le module de base (14) et opposés l'un à l'autre, comportant respectivement au moins une roue (18, 19) disposée sur respectivement l'un des modules latéraux (16) et comportant un premier réceptacle (93) disposé entre les modules latéraux (16) pour une boîte de transport, **caractérisé en ce que** le chariot de transport (10) présente un dispositif d'actionnement (196) qui est conçu pour transférer le chariot de transport (10) entre un premier mode de fonctionnement (86) et un second mode de fonctionnement (126), dans lequel le dispositif d'actionnement (196) présente un élément d'actionnement (228), dans lequel le dispositif d'actionnement (196) est conçu pour, lors d'un premier actionnement lors duquel l'élément d'actionnement (228) est déplacé dans une première direction de déplacement (240), transférer le chariot de transport (10) du premier mode de fonctionnement (86) au second mode de fonctionnement (126) et pour, lors d'un second actionnement lors duquel l'élément d'actionnement (228) est également déplacé dans la première direction de déplacement (240), transférer le chariot de transport du second mode de fonctionnement (126) au premier mode de fonctionnement (86).

2. Chariot de transport (10) selon la revendication 1, dans lequel, dans le premier mode de fonctionnement (86), le premier réceptacle (93) est disposé dans une position de transport (108) et, dans le second mode de fonctionnement (126), est disposé dans une position de chargement (110), dans lequel le dispositif d'actionnement (196) est conçu pour déplacer le premier réceptacle (93) entre la position de transport (108) et la position de chargement (110).

3. Chariot de transport (10) selon la revendication 2, dans lequel le premier réceptacle (93) présente un élément de réception (94), en particulier une surface de pose pour la boîte de transport, dans lequel l'élément de réception (94) est accouplé au module de base (14) par l'intermédiaire de deux bras (96), dans lequel les bras (96) sont montés sur le module de base (14) de manière à pouvoir pivoter autour d'un premier axe de pivotement (100), de sorte que le premier réceptacle (93) peut pivoter entre la position de transport (108) et la position de chargement (110).

4. Chariot de transport (10) selon la revendication 3, dans lequel l'élément de réception (94) est monté sur les bras (96) de manière à pouvoir pivoter autour d'un second axe de pivotement (101), dans lequel un déplacement de pivotement de l'élément de réception (94) autour du second axe de pivotement (101) est accouplé au déplacement de pivotement des bras (96) autour du premier axe de pivotement (100), de sorte que l'élément de réception (94) est orienté horizontalement dans la position de chargement (110) et dans la position de transport (108).

5. Chariot de transport (10) selon l'une des revendications 2 à 4, dans lequel, sur chaque module latéral (16), l'au moins une roue (18, 19) présente une roue avant (19) et une roue arrière (18), dans lequel chaque roue avant (19) peut être déplacée par rapport à la roue arrière (18) correspondante entre une position rentrée (118) et une position déployée (120), dans lequel une distance entre la roue avant (19) et la roue arrière (18) est plus grande dans la position déployée (120) que dans la position rentrée (118), dans lequel un déplacement de pivotement du premier réceptacle (93) entre la position de transport (108) et la position de chargement (110) est accouplé à un déplacement de chaque roue avant (19) entre la position rentrée (118) et la position déployée (120), de sorte que la roue avant (19) est disposée dans la position rentrée (118) dans le premier mode de fonctionnement (86) et dans la position déployée (120) dans le second mode de fonctionnement (126), en particulier dans lequel, lors du déplacement du réceptacle (93) entre la position de transport (108) et la position de chargement (110), chaque roue avant (19) est déplacée entre la position rentrée (118) et la position déployée (120).

6. Chariot de transport (10) selon l'une des revendications 1 à 5, dans lequel le chariot de transport (10) présente en outre une poignée (20) disposée sur le module de base (14), dans lequel la poignée (20) est montée sur le module de base (14) de manière à pouvoir pivoter autour d'un axe de pivotement (194), dans lequel la poignée (20) peut être accouplée à l'élément d'actionnement (228), de sorte qu'un déplacement de pivotement de la poignée (20) est transféré à un déplacement de l'élément d'actionnement (228) parallèlement à la première direction de déplacement (240), en particulier dans la première direction de déplacement (240).

7. Chariot de transport (10) selon la revendication 6, dans lequel la poignée (20) est montée de manière à pouvoir pivoter sur le module de base (14) par l'intermédiaire d'un mécanisme d'accouplement (192), dans lequel le mécanisme d'accouplement (192) peut être amené dans un état de blocage (216) dans lequel la poignée (20) ne peut pas pivoter par rapport au module de base (14), dans lequel le mécanisme d'accouplement (192) peut être amené dans au moins un état d'accouplement (218, 220) dans lequel la poignée (20) peut pivoter par rapport au module de base (14) et la poignée (20) est accouplée à l'élément d'actionnement (228).

8. Chariot de transport (10) selon la revendication 7, dans lequel l'au moins un état d'accouplement (218, 220) présente un premier état d'accouplement (218) et un second état d'accouplement (220), dans lequel le dispositif d'actionnement (196) est disposé, dans le premier état d'accouplement (218), dans une première position d'accouplement (222) dans laquelle le premier actionnement peut être effectué, et est disposé, dans le second état d'accouplement (220), dans une seconde position d'accouplement (224) dans laquelle le second actionnement peut être effectué, en particulier dans lequel le premier actionnement est effectué par un déplacement de rotation de la poignée (20) dans le premier état d'accouplement (218) et le second actionnement est effectué par un déplacement de rotation de la poignée (20) dans le second état d'accouplement (220).

9. Chariot de transport (10) selon la revendication 8, dans lequel le chariot de transport (10) présente sur la poignée (20) un premier élément de manoeuvre (22), au moyen duquel le mécanisme d'accouplement (192) peut être transféré dans le premier état d'accouplement (218), et un second élément de manoeuvre (23), au moyen duquel le mécanisme d'accouplement (192) peut être transféré dans le second état d'accouplement (220), en particulier dans lequel le mécanisme d'accouplement (192) est précontraint dans l'état de blocage (216).

10. Chariot de transport (10) selon l'une des revendications 1 à 9, dans lequel le dispositif d'actionnement (196) présente un appareil de transmission de déplacement (198) au moyen duquel un déplacement de l'élément d'actionnement (228) dans la première direction de déplacement (240) est accouplé à un déplacement du premier réceptacle (93), afin de déplacer le premier réceptacle (93) entre la position de transport (108) et la position de chargement (110) lors d'un déplacement de l'élément d'actionnement (228) dans la première direction de déplacement (240).

11. Chariot de transport (10) selon les revendications 8 et 10, dans lequel l'appareil de transmission de déplacement (198) présente un premier élément de transmission de déplacement (270) et un second élément de transmission de déplacement (272), dans lequel le premier et le second élément de transmission de déplacement (270, 272) sont conçus pour transmettre un déplacement de l'élément d'actionnement (228) dans la première direction de déplacement (240) à un déplacement du réceptacle (93) entre la position de transport (108) et la position de chargement (110), en particulier à un déplacement de pivotement du réceptacle (93) autour de l'axe de pivotement (100), dans lequel, lors du premier actionnement, un déplacement du premier élément de transmission de déplacement (270) est accouplé à un déplacement de l'élément d'actionnement (228) et, lors du second actionnement, un déplacement du second élément de transmission de déplacement (272) est accouplé à un déplacement de l'élément d'actionnement (228), en particulier dans lequel un déplacement du premier élément de transmission de déplacement (270) dans la première position d'accouplement (222) est accouplé à un déplacement de l'élément d'actionnement (228) dans la première direction de déplacement (240), et un déplacement du second élément de transmission de déplacement (272) dans la seconde position d'accouplement (224) est accouplé à un déplacement de l'élément d'actionnement (228) dans la première direction de déplacement (240).

12. Chariot de transport (10) selon la revendication 11, dans lequel l'appareil de transmission de déplacement (198) présente en outre un appareil de freinage (276) qui peut être déplacé entre une position de verrouillage et une position de libération, dans lequel l'appareil de freinage (276) peut être déplacé dans la position de verrouillage par un déplacement du premier élément de transmission de déplacement (270) à l'opposé de la première direction de déplacement (240), dans lequel l'appareil de freinage (276) peut être déplacé dans la position de libération par un déplacement du premier ou du second élément de transmission de déplacement (270, 272) dans la première direction de déplacement (240).

13. Chariot de transport (10) selon l'une des revendications 1 à 12, dans lequel le chariot de transport (10) peut être transféré entre un mode d'emballage (12), dans lequel chaque roue (18, 19) est disposée dans une position rentrée (74) et chaque module latéral (16) est disposé dans une position repliée (76), et le premier mode de fonctionnement (86), dans lequel chaque roue (18, 19) est disposée dans une position déployée (78) et chaque module latéral (16) est disposé dans une position dépliée (80), dans lequel un déplacement de chaque module latéral (16) entre la position repliée (76) et la position dépliée (80) est accouplé à un déplacement de la roue (18, 19) correspondante entre la position rentrée (74) et la position déployée (78), de sorte que, lors du déplacement de chaque module latéral (16) entre la position repliée (76) et la position dépliée (80), la roue (18, 19) correspondante est déplacée entre la position rentrée (74) et la position déployée (78).

14. Procédé (400) permettant de transférer un chariot de transport (10) entre un premier mode de fonctionnement (86) et un second mode de fonctionnement (126), dans lequel le chariot de transport (10) présente un module de base (14), deux modules latéraux (16) disposés sur le module de base (14) et opposés l'un à l'autre, respectivement au moins une roue (18, 19) disposée sur respectivement l'un des modules latéraux (16) et un premier réceptacle (93) disposé entre les modules latéraux (16) pour une boîte de transport, dans lequel le procédé (400) présente les étapes suivantes :
- transfert (402) du chariot de transport (10) du premier mode de fonctionnement (86) au second mode de fonctionnement (126) au moyen d'un dispositif d'actionnement (196) du chariot de transport (10) ; et
- transfert (404) du chariot de transport (10) du second mode de fonctionnement (126) au premier mode de fonctionnement (86) au moyen du dispositif d'actionnement (196),
dans lequel le dispositif d'actionnement (196) présente un élément d'actionnement (228), dans lequel, lors d'un premier actionnement lors duquel l'élément d'actionnement (228) est déplacé dans une première direction de déplacement (240), le dispositif d'actionnement (196) transfère le chariot de transport (10) du premier mode de fonctionnement (86) au second mode de fonctionnement (126), et dans lequel, lors d'un second actionnement lors duquel l'élément d'actionnement (228) est également déplacé dans la première direction de déplacement (240), le dispositif d'actionnement (196) transfère le chariot de transport du second mode de fonctionnement (126) au premier mode de fonctionnement (86).

15. Procédé (420) permettant de transformer un chariot de transport (10), dans lequel le chariot de transport (10) présente un module de base (14), deux modules latéraux (16) disposés sur le module de base (14) et opposés l'un à l'autre, respectivement au moins une roue (18, 19) disposée sur respectivement l'un des modules latéraux (16) et un premier réceptacle (93) disposé entre les modules latéraux (16) pour une boîte de transport, dans lequel le procédé (420) présente les étapes suivantes :
- transfert (422) du chariot de transport (10) entre un mode d'emballage (12) et un premier mode de fonctionnement (86) ; et
- transfert (424) du chariot de transport (10) entre le premier mode de fonctionnement (86) et un second mode de fonctionnement (126) conformément au procédé (400) selon la revendication 14,
dans lequel l'étape de transfert (422) du chariot de transport (10) entre le mode d'emballage (12) et le premier mode de fonctionnement (86) présente les étapes suivantes :
- transfert (412) du chariot de transport (10) du mode d'emballage (12), dans lequel chaque roue (18, 19) est disposée dans une position rentrée (74) et chaque module latéral (16) est disposé dans une position repliée (76), au premier mode de fonctionnement (86), dans lequel chaque roue (18, 19) est disposée dans une position déployée (78) et chaque module latéral (16) est disposé dans une position dépliée (80), au moyen d'un déplacement des modules latéraux (16) de la position repliée (76) à la position dépliée, dans lequel le déplacement de chaque module latéral (16) entre la position repliée (76) et la position dépliée (80) est accouplé à un déplacement de la roue (18, 19) correspondante entre la position rentrée (74) et la position déployée (78) ;
- transfert (414) du chariot de transport (10) du premier mode de fonctionnement (86) au mode d'emballage (12) au moyen d'un déplacement des modules latéraux (16) de la position dépliée (80) à la position repliée (76).
